# EUROPEAN PATENT APPLICATION

(11) **EP 2 767 907 A1**
(43) Date of publication of application: **20.08.2014**
(21) Application number: 12840365.6
(22) Date of filing: 11.10.2012
(51) Int. Cl.: G06F 13/00, G06F 17/30, G06Q 30/06, G06Q 50/10, G10L 13/00, G10L 15/00, G10L 15/28

(54) **KNOWLEDGE INFORMATION PROCESSING SERVER SYSTEM PROVIDED WITH IMAGE RECOGNITION SYSTEM**

(30) Priority: 14.10.2011 JP 2011226792
(71) Applicant: Cyber Ai Entertainment Inc., Tokyo 158-0095 (JP)
(72) Inventor: KUTARAGI Ken, Tokyo 158-0095 (JP); USUKI Takashi, Tokyo 158-0095 (JP); YOKOTE Yasuhiko, Tokyo 158-0095 (JP)
(74) Representative: Grünecker, Kinkeldey, Stockmair & Schwanhäusser
(86) International application number: PCT/JP2012/076303
(87) International publication number: WO 2013/054839

(57) **Abstract**

Extensive social communication is induced.

Connection is made with a network terminal capable of connecting to the Internet, and an image and voice signal reflecting the subjective visual field of the user and the like which can be obtained from the headset system that can be worn by the user on the head is uploaded via the network terminal to a knowledge-information-processing server system, and specifying and selecting of an attention-given target by the voice of the user himself/herself are enabled on the server system with collaborative operation with the voice recognition system with regard to a specific object and the like to which the user gives attention and which is included in the image, and with regard to the series of image recognition processes and image recognition result made by the user, image recognition result and recognition processes thereof are notified as voice information to an earphone incorporated into the headset system of the user by way of the user's network terminal via the Internet by the server system with collaborative operation with a voice-synthesizing system, so that user's message or tweet can be extensively shared by users.

## Description

### Technical Field

The present invention is characterized in that an image signal reflecting a subjective visual field of a user obtained from a camera incorporated into a headset system that can be attached to the head portion of the user is uploaded as necessary to a knowledge-information-processing server system having an image recognition system via a network by way of a network terminal of the above-mentioned user, so that the item in the camera video which corresponds to one or more targets, such as a specific object, a generic object, a person, a picture, or a scene in which the above-mentioned user is interested (hereinafter referred to as "target"), is made extractable by bidirectional communication using voice between the server system and the above-mentioned user, and the extraction process and the image recognition result of the target are notified by the server system by way of the network terminal of the above-mentioned user to the above-mentioned user by means of voice information via an earphone incorporated into the headset system.

Further, the present invention is characterized in that, by enabling users to leave a voice tag such as a message, a tweet, or a question based on the voice of the above-mentioned user with regard to various targets in which the above-mentioned user is interested in, when various users including himself/herself in different time-space encounter the above-mentioned target or see the target by chance, various messages and tweets concerning the above-mentioned target accumulated in the server system can be received as voice in synchronization with attention given to the above-mentioned target, and by allowing the user to further make a voice response to individual messages and tweets, extensive social communication concerning the interesting target common to various users can be induced.

Further, the present invention relates to a knowledge-information-processing server system having an image recognition system in which the server system continuously collects, analyzes, and accumulates extensive social communication originating from visual interest of many users induced as described above, so that the server can be obtained as a dynamic interest graph in which various users, keywords, and targets are constituent nodes, and based on that, this system can provide highly customized service, highly accurate recommendations, or an effective information providing service for dynamic advertisements and notifications.

### Background Art

With the recent worldwide spread of the Internet, the amount of information on the network is rapidly increasing, and therefore, search technology as means for effectively and quickly finding information from the enormous amount of available information have rapidly developed. Nowadays, many portal sites with powerful search engines are in operation. Further, technology has been developed to analyze viewers' search keywords and access history and to distribute web pages and advertisements that match the viewers' interests in relation to each search result. This technology is starting to be effectively applied to marketing on the basis of keywords often used by the viewer.

For example, there is an information providing apparatus capable of easily providing useful information for users with a high degree of accuracy (Patent Literature 1). This information providing apparatus includes an access history store means for storing access frequency information representing frequency of access to the contents by the user in association with user identification information of the above-mentioned user; inter-user similarity calculating means for calculating inter-user similarity, which represents the similarity of access tendencies among users to the contents, on the basis of the access frequency information stored in the access history store means; content-score calculating means for calculating content-score, which is information representing the degree of usefulness of the content to the user, from the access frequency information of the other users weighted with the inter-user similarity of the user to the other users; index store means for storing the content-scores of the contents calculated by the content-score calculating means in association with the user identification information; query input means for receiving input of a query, including user identification information, transmitted from a communication terminal apparatus; means to generate provided information by obtaining content identification information about content that matches the query received by the query input means and looking up the content-score stored in the index store means in association with the user identification information included in the query; and means to output provided information which outputs the provided information generated by the means to generate provided information for the communication terminal apparatus.

For the purpose of further expanding the search means using character information such as keywords as a search query, progress has been made recently in development of a search engine having image recognition capability. Image search services using an image itself as the input query instead of characters is widely provided on the Internet. In general, the beginning of study on image recognition technology dates back to more than 40 years ago. Since then, along with the development of machine learning technology and the progress of the processing speed of computers, the following studies have been conducted: line drawing interpretation in the 1970's and recognition model, three-dimensional model representation based on a knowledge database structured by a manual rule and three-dimensional model in the 1980's. In the 1990's, in particular, studies of the recognition of the image of a face and recognition by learning have become active. In 2000's, with the further progress of the processing power of computers, the enormous amount of computing required for statistical processing and machine learning can be performed at a relatively low cost, and therefore, progress has been made in the study of generic-object recognition. Generic-object recognition is technology that allows a computer to recognize, with a generic name, an object included a captured image of a scene of the real world. In the 1980's, constructions of a rule or a model entirely by manual procedure were attempted. But now, large amounts of data can be handled easily and approaches by means of statistical machine learning that make use of computers are attracting attention. This is creating a boom of recent generic-object recognition technology. With generic-object recognition technology, a keyword with regard to an image can be given automatically to the target image and the image can be classified and searched for on the basis of the meaning and contents thereof. In the near future, it is an aim to achieve image recognition functionality of all human beings by computers (Non-patent Literature 1). The generic-object recognition technology rapidly made progress through the introduction of an approach from an image database and statistical stochastic method. Innovative studies include a method for performing object recognition by learning the association of individual images from data obtained by manually giving keywords to images (Non-patent Literature 2) and a method based on local feature quantity (Non-patent Literature 3). Studies of specific-object recognition based on local feature quantity include, for example, the SIFT method (Non-patent Literature 4) and Video Google (Non-patent Literature 5). Thereafter, in 2004, a method called "Bag-of-Keypoints" or "Bag-of-Features" was disclosed. In this method, a target image is treated as a set of representative local pattern image pieces called visual words, and the appearance frequency thereof is represented in a multi-dimensional histogram. More specifically, feature point extraction is performed on the basis of the SIFT method, vector quantization is performed on SIFT feature vectors on the basis of multiple visual words obtained in advance, and a histogram is generated for each image. The number of dimensional sparse vectors of the histogram thus generated is usually several hundred to several thousand. These vectors are processed at a high speed as a classification problem of multi-dimensional vectors on the computer so that a series of image recognition processes is performed (Non-patent Literature 6).

Along with the advancement of image recognition technology using computers, a service has already begun in which an image captured by a camera-attached network terminal is processed by way of a network with an image recognition system structured in a server. On the basis of the enormous amount of image data accumulated in the above-mentioned server, the above-mentioned image recognition system compares and collates these images with an image feature databases describing the features of each object already learned. Image recognition is performed on major objects included in the uploaded image, and the recognition result is quickly presented to the network terminal. In image recognition technology, detection technology for the face of a person has been rapidly developed for application as a method for identifying individuals. In order to extract the face of a particular person from among many face images with a high degree of accuracy, the learning of an enormous amount of face images is needed in advance. Accordingly, the size of the knowledge database that must be prepared is extremely large, and therefore, it is necessary to introduce a somewhat large-scale image recognition system. On the other hand, nowadays, detection of a generic "average face" or a limited identification of faces of persons, such as those used for autofocus in an electronic camera, can be easily achieved by a system in a scale that is appropriate for a small casing such as an that of an electronic camera. Among services providing maps using the Internet which have recently started, pictures on the road at various locations on the map (Street View) can be seen while still at home. In such applications, from the view point of protection of privacy, the license numbers of automobiles, faces of pedestrians appearing in the picture by chance, personal residences that can be seen over a fence of a road, and the like need to be filtered and displayed again so that they cannot be determined to a degree equal to or more than a certain level (Non-patent Literature 7).

In recent years, a concept called Augmented Reality (abbreviated as AR) has been proposed to expand the real space to integrate it with the cyberspace, which serves as information space by the computer. Some AR services have already begun. For example, a network portable terminal having a three-dimensional positioning system using position information obtainable from an integrated GPS (or radio base station and the like), camera, and display apparatus is used so that, on the basis of the user's position information derived by the three-dimensional positioning system, real-world video taken by the camera and annotations accumulated as digital information in the server are overlaid, and the annotations can be pasted into the real-world video as air-tags floating in the cyber space (Non-patent Literature 8).

In the late 1990's, with the maintenance and upgrading of communication network/infrastructure, many sites concerning social networking were established for the purpose of promoting users' social relationships with each other established on the Internet, and various social networking services (SNSs) were born. In an SNS, users' communications with each other are induced in an organic manner with community functions such as a user search function, a message sending/receiving function, and a bulletin board system. For example, the users of an SNS may actively participate in a bulletin board system where there are many users who have the same hobbies and interests, exchange personal information such as documents, images, voice recordings, and the like, and introduce friends to other acquaintances to further develop connection between people. Thus SNSs are capable of expanding communication on the network in an organic and extensive manner.

As a form of service of SNSs, there is a comment-attached video distribution system in which multiple users select and share videos uploaded to a network, and users can freely upload comments concerning the above-mentioned video contents at any desired position of the video. The comments are displayed as they scroll through the above-mentioned video, allowing multiple users can communicate with each other using the above-mentioned video as a medium (Patent Literature 2). The above-mentioned system receives comment information from the comment distribution server and starts playing the above-mentioned shared video, as well as reads comments corresponding to particular play-back times of the video from the above-mentioned comment information from a comment distributing server. It aslo allows the display of not only the above-mentioned video but also the comments at the play-back time of the video associated with the read comments. In addition, when the comment information can also be individually displayed as a list, and particular comment data are selected from the displayed comment information, the above-mentioned motion picture is played from a motion picture play-back time corresponding to the comment-given time of the selected comment data, and the read comment data are displayed again on the display unit. Upon receiving input operation of a comment given by a user, the video play-back time at which a comment was input is transmitted as the comment-given time together with the comment contents to the comment distribution server.

Among the SNSs, there is movement to regard the real-time property of communication as important by greatly limiting the information packet size that can be exchanged on a network. A service has already been started in which character data is limited to 140 characters or less in a short, user created "microblog" (a "tweet"),. Embedded address information in the tweet, such as the URL related thereto, are transmitted by the above-mentioned user to the Internet in a real-time and extensive manner, whereby the user's experience at that moment can be shared not only as a tweet, but also as integrated information which additionally includes images and voice data so that they can be shared by great many users. Further, a function that allows a user to select and follow the tweets of other users and tweets pertaining to particular topics is also provided. These functions promote world-wide real-time communication (Non-patent Literature 9).

Although different from information service via a network, there is a "voice guide" system for museums and galleries that acts as a service providing detailed voice explanations about a particular target when viewing the target. In the "voice guide" system, a voice signal coded in infrared-rays transmitted from a voice signal sending unit stationed in proximity to a target exhibit is decoded by an infrared receiver unit incorporated into the user's terminal apparatus when it comes close to such target exhibits. Detailed explanations about the exhibits are provided in a voice recording to the earphone of the user's terminal apparatus. Not only this method, but also a voice guide system using extremely and highly directional voice transmitters to directly send the above-mentioned voice information to the ear of the user has been put into practice.

Information input and command input methods using voice for computer systems include technology for recognizing voice spoken by a user as speech language and performing input processing by converting the voice into text data and various kinds of computer commands. This input processing requires high-speed voice recognition processing, and voice recognition technology enabling this processing include sound processing technology, acoustic model generation/adaptation technology, matching/likelihood calculation technology, language model technology, interactive processing technology, and the like. By combining these constituent technology in a computer, voice recognition systems which are sufficient for practical use have been established in recent years. With the development of a continuous voice recognition engine with a large-scale vocabulary, speech language recognition processing of voice spoken by a user can be performed on a network terminal almost in real-time.

The history of study of voice recognition technology starts with number recognition using a rate of zero-crossing conducted at Bell Laboratories in the United States in 1952. In the 1970's, Japanese and Russian researchers proposed a method of performing non-linear normalization on variation in the length of time of speech using dynamic programming (Dynamic Time Warping). In the United States, basic studies of voice recognition using HMM (Hidden Markov Model), which is a statistical stochastic method, have been advancing. Nowadays, the technology has reached such a level that, by adaptively learning the feature of user's voice, a sentence clearly spoken by the user can be dictated almost completely. As a conventional technology applying such high level voice recognition technology, a technology has been developed to automatically generate minutes of a meeting which are a written language from a spoken words adopting spoken voice in the meeting as input (Patent Literature 3).

More specifically, the technology disclosed in Patent Literature 3 is a voice document converting apparatus for generating and outputting document information by receiving voice input and including a display apparatus for receiving the document information output and displaying it on a screen, wherein the voice document converting apparatus includes a voice recognition unit for recognizing received voice input, a converting table for converting the received voice into written language including Kanji and Hiragana; a document forming unit for receiving and organizing the recognized voice from the voice recognition unit, searching the converting table, converting the voice into written language, and editing it into a document in a predetermined format; document memory for storing and saving the edited document; a sending/receiving unit for transmitting the saved document information and exchanging other information/signals with the display apparatus wherein the display apparatus includes a sending/receiving unit for sending and receiving information/signal with the sending/receiving unit of the voice document converting apparatus; display information memory storing this received document information as display information; and a display board for displaying the stored display information on the screen.

Voice synthesis systems for fluently reading aloud a sentence including character information on the computer in a specified language is an area that has made the greatest progress recently. Voice synthesis systems are also referred to as speech synthesizers. They include a text reading system for converting text into voice, a system for converting a pronunciation symbol into voice, and the like, Historically, although great progress has been made in the development of computer-based voice synthesis systems after the end of the1960's, the speech made by early speech synthesizers was inorganic and far different from speech made by humans. Users could easily notice that the voice was computer-generated. As progress was made in these studies, the intonation and tone of the computer-generated voice became flexibly changeable in response to the scenes, the situations, and the contextual relationship before and after the speech (explained later), and high-quality, synthesized voice that is as good as natural voice of a human was realized. In particular, a voice synthesis system established in a server can make use of an enormous amount of dictionaries, and moreover, the speech algorithm can incorporate many digital filters and the like so that complicated pronunciation similar to that of a human can be generated. With the rapid spread of network terminal apparatuses, the range to which the voice synthesis system can be applied has been further expanded in recent years.

The voice synthesis technology is roughly classified into formant synthesis and concatenative synthesis. In format synthesis, artificially synthesized waveforms is generated by adjusting parameters, such as frequency and tone color, on a computer without using human voice. In general, the waveforms sound like artificial voices. On the other hand, concatenative synthesis is basically a method for recording the voice of a person and synthesizing a voice similar to natural voice by smoothly connecting phoneme fragments and the like. More specifically, voice recorded for a predetermined period of time is classified into "sounds", "syllables", "morphemes", "words", "phrases", "clauses", and the like to make an index and generate searchable voice libraries. When voice is synthesized by a text reading system or the like, suitable phonemes and syllables are extracted as necessary from such voice library, and the extracted parts are ultimately converted into fluent speech with appropriate accent that approximates speech made by a person.

In addition to the above conventional technology, text reading systems and the like having the voice tone function have been developed. Accordingly, many technologies for synthesizing voice with many variations are being put into practical use one after another. For example, a highly sophisticated voice composition system can adjust the intonation of the synthesized voice to convey emotions, such as happiness, " sadness, anger, and coldness, by adjusting the level and the length of the sounds and by adjusting the accent. In addition, speech reflecting the habits of a particular person registered in a database of the voice composition system can be synthesized flexibly on the system.

A method that takes place prior to the voice synthesis explained above has been proposed. In this method, a section of natural voice partially matching a section of synthesized voice is detected,. Then, meter (intonation/rhythm) information of the section of natural voice is applied to the synthesized voice, thereby naturally connecting the natural voice and the synthesized voice (Patent Literature 4).

More specifically, the technology disclosed in Patent Literature 4 includes recorded voice store means, input text analysis means, recorded voice selection means, connection border calculation means, rule synthesis means, and connection synthesis means. In addition, it includes means to determine a natural voice meter section for determining a section partially that partially matches recorded natural voice in the synthesis voice section, means to extract a natural voice meter for extracting the matching portion of the natural voice meter, and hybrid meter generation means for generating meter information of the entire synthesis voice section using the extracted natural voice meter.

### Citation List

### Patent Literature

Patent Literature 1: Japanese Patent Laid-Open No. 2009-265754
Patent Literature 2: Japanese Patent Laid-Open No. 2009-077443
Patent Literature 3: Japanese Patent Laid-Open No. 1993-012246
Patent Literature 4: Japanese Patent Laid-Open No. 2009-020264

### Non-patent Literature

Non-patent Literature 1: Keiji Yanai, "The Current State and Future Directions on Generic Object Recognition", Information Processing Society Journal, Vol. 48, No. SIG 16 (CVIM 19), pp.1-24, 2007
Non-patent Literature 2: Pinar Duygulu, Kobus Barnard, Nando de Freitas, David Forsyth, "Object Recognition as Machine Translation: Learning a lexicon for a fixed image vocabulary," European Conference on Computer Vision (ECCV), pp.97-112, 2002.
Non-patent Literature 3: R. Fergus, P. Perona, and A. Zisserman, "Object Class Recognition by Unsupervised Scale-invariant Learning," IEEE Conf. on Computer Vision and Pattern Recognition, pp.264-271, 2003.
Non-patent Literature 4: David G. Lowe, "Object Recognition from Local Scale-Invariant Features," Proc. IEEE International Conference on Computer Vision, pp.1150-1157, 1999.
Non-patent Literature 5: J. Sivic and A. Zisserman, "Video google: A text retrieval approach to object matching in videos", Proc. ICCV2003, Vol. 2, pp.1470-1477, 2003.
Non-patent Literature 6: G. Csurka, C. Bray, C. Dance, and L. Fan, "Visual categorization with bags of keypoints," Proc. ECCV Workshop on Statistical Learning in Computer Vision, pp.1-22, 2004.
Non-patent Literature 7: Ming Zhao, Jay Yagnik, Hartwig Adam, David Bau; Google Inc. "Large scale learning and recognition of faces in web videos" FG '08:8th IEEE International Conference on Automatic Face & Gesture Recognition, 2008.
Non-patent Literature 8: http://jp.techcrunch.com/archives/20091221sekai-camera/
Non-patent Literature 9: Akshay Java, Xiaodan Song, Tim Finin, and Belle Tseng, "Why We Twitter: Understanding Microblogging Usage and Communities" Joint 9th WEBKDD and 1st SNA-KDD Workshop '07.

### Summary of Invention

### Technical Problem

However, in conventional search engines, it is necessary to consider several keywords concerning the search target and input characters. The search results are presented as the document titles of multiple candidates and sometimes a great number of candidates as well as summary description sentences. Therefore, in order to reach the desired search result, it is necessary to proceed to further access the location of and read the information indicated by each candidate. In recent years, searches can be performed directly using an image as the input query. Image search services with which images highly related to the image can be viewed in a list as the search result thereof have begun to be provided. However, it is still impossible to comfortably and appropriately provide users with related information, further promoting curiosity about the target or the phenomenon in which the user is interested. In the conventional search process, it is necessary to perform intensive input operation with a PC, a network terminal, and the like. Although such operation is temporary, natural communication like that which occurs between people in everyday life, e.g., casually asking somebody a question while doing something else in a hands-free manner and receiving the answer to the question from that somebody, has not yet been achieved on the conventional IT systems.

For example, when a user suddenly finds a target or phenomenon that he/she wants to research, the user often performs a network search by inputting a character string if the name thereof and the like is known. Alternatively, the user can approach the target with a camera-equipped portable phone, a smartphone, or the like in his/her hand, and take a picture using the camera on the device. Thereafter, he/she performs an image search based on the captured image. If a desired search result cannot be obtained even with such operation, the user may ask other users on the network about the target. However, the disadvantage of this process is that it is somewhat cumbersome for the user, and in addition, it is necessary to hold the camera-equipped device directly over the target. If the target is a person, he/she may become concerned., In some cases, it may be rude to take a picture. Further, the action of holding the portable telephone up to the target may seem suspicious to other people. If the target is an animal, a person, or the like, something like a visual wall is made by the camera-equipped portable network terminal interposed between the target and the user, and, moreover, the user checks the search result with the portable network terminal. Therefore, communication with the target and people nearby is often interrupted, although only temporarily. Appropriate time is required for the series of search processes, and therefore, even if the user is interested in an object, a person, an animal, or a scene that the user finds by chance while he/she is outside, the user is often unable to complete the series of operations at that place. The user has to bring the picture once taken back home to perform search again using a PC.

In recent years, in the service that has been put into practice called "augmented reality", one of the methods for associating the real space in which we exist and the cyber space structured in a computer network is to use not only positional information obtained from GPS and the like but also directional information of the orientation of the camera. However, with only the use of the positional information, it is often difficult to handle real-world situation that changes every moment, e.g., the target object itself moves or first of all, the target does not exist at the observation time. Unlike structural objects like landmarks and cities, which are associated with positional information in a fixed manner, it is difficult to associate, in an intrinsic sense, a movable/conveyable object (e.g., cars, moving people, moving animals) or a conceptual scene (e.g., sunset) unless the image recognition function is provided within the above-mentioned system.

In video sharing services with attached-comments, which has become popular among users recently as a type of service in SNS's, there is a problem in real-time shared experience cannot be obtained with regard to a phenomenon (or an event) that is proceeding in the real world if the shared video is a recording. In contrast, services supporting live stream video distribution with attatched-comments have already begun. Those stream videos include press conferences, presentations, live broadcasts of parliamentary proceedings, events, and sports as well as live video distribution based on posting by general users. In such video sharing services, "scenes" (or occasions, situations, or feelings) concerning a phenomenon that is proceeding in real-time can be shared via a network. However, users need to be patient and have a lot of time to follow a live-streaming video distribution that continues on and on. From there, existence of an issue unique to the user, or a common issue in which the participating users are interested, is extracted in an effective and efficient manner. When these issues are seen as materials structured in an extensive manner as an interest graph, there is a certain limitation in the amount of information and targets that can be collected. The situation is the same with services to view shared video over networks whose users are rapidly increasing. Users do not have many chances to actively provide the server with useful information, in spite of the time spent by the user to continuously view various video files and the cost of the distribution server and the network.

In contrast, although real-time message exchange services called "microblogs" may have certain limitations (e.g., "140 characters or less"), the usefulness of an interest graph that can be collected in real-time, which may be unique to a user, common among certain users, or common to many users, and extracted from microblogging services with the help of rapid increase of participants and the variety of topics in discussed real-time on the network is drawing attention. However, in the conventional microblog, tweets are mostly made about targets and situations which the user himself/herself is interested in at that moment. Effective attention cannot be said to be sufficiently given with regard to targets which exist in proximity to the user or within his/her visual field, or to targets in which other users are interested. The contents of the tweets in such microblogs cover an extremely large variety of issues. Therefore, although a function is provided to narrow down themes and topics by specifying parameters such as a particular user, a particular topic, or a particular location, such microblogs cannot be said to sufficiently make use of, as a direction of further expansion of the target of interest, reflection of potential interest unique to each user, notification and the like of existence of obvious interest by other users existing close to the user, or the possibility of promoting a still more extensive SNS.

### Solution to Problem

In order to solve the above problem, as one form, a network communication system according to the present invention is characterized as being capable of uploading an image and voice signal reflecting a subjective visual field and view point of a user that can be obtained from a headset system wearable on the head of the user having at least one or more microphones, one or more earphones, one or more image-capturing devices (cameras) in an integrated manner. The headset system is a multi-function input/output device that is capable of wired or wireless connection to a network terminal that can connect to the Internet, and then to a knowledge-information-processing server system having the image recognition system on the Internet via the network terminal. The knowledge-information-processing server conducts collaborative operations with a voice recognition system with regard to a specific object, a generic object, a person, a picture, or a scene which is included in the above-mentioned image and which the user gives attention to. The network communication system enables specification, selection, and extraction operations, made on the server system, of the attention-given target with voice spoken by the user himself/herself. With collaborative operation with the voice-synthesizing system, the server system can notify the user of the series of image recognition processes and image recognition result made by the user via the Internet by way of the network terminal of the user as voice information to the earphone incorporated into the headset system of the user and/or as voice and image information to the network terminal of the user. With regard to the target of which image recognition is enabled, the content of a message or a tweet spoken with the voice of the user himself/herself is analyzed, classified, and accumulated by the server system with collaborative operation with the voice recognition system, and the message and the tweet are enabled to be shared via the network by many users, including the users who can see the same target, thus promoting extensive network communication induced by visual curiosity of many users. The server system observes, accumulates, analyzes extensive inter-user communication in a statistical manner, whereby existence and transition of dynamic interest and curiosity unique to the user, unique to a particular user group, or common to all users can be obtained as a dynamic interest graph connecting nodes concerning extensive "users", extractable "keywords" and various attention-given "targets".

The network communication system is characterized in that, as means for allowing a user to clearly inform the knowledge-information-processing server system having the image recognition system of what kind of features the attention-given target in which the user is interested has, what kind of relationship the attention-given target has, and/or what kind of working state the attention-given target is in, selection/specification (pointing) operation of the target is enabled with the voice of the user, and on the basis of various features concerning the target spoken by the user in the series of selection/specification processes, the server system can accurately extract/recognize the target with collaborative operation with the voice recognition system. As reconfirmation content for the user from the server system concerning the image recognition result, the server system can extract a new object and phenomena co-occurring with the target on the basis of camera video reflecting a subjective visual field of the user other than the features clearly pointed out by the user using voice to the server system. The new object and phenomenon are added as co-occurring phenomenon that can still more correctly represent the target. They are structured as a series of sentences, and with collaborative operation with the voice synthesis system, the user is asked for reconfirmation with voice.

### Advantageous Effects of Invention

In the present invention, an image signal reflecting a subjective visual field of a user obtained from a camera incorporated into a headset system that can be attached to the head of the user is uploaded as necessary to a knowledge-information-processing server system having an image recognition system via a network by way of a network terminal of the user, so that the item in the camera video of one or more targets, such as a specific object, a generic object, a person, a picture, or a scene in which the user is interested corresponds to (hereinafter referred to as a "target"), is made extractable by bidirectional communication using voice between the server system and the user. This enables extraction and recognition processing of the target that reflects the user's "subjectivity", which conventional image recognition systems are not good at, and the the image recognition rate itself is improved. At the same time, a bidirectional process including target-specification (pointing) operation with the user's voice and reconfirmation with voice given by the server in response thereto is incorporated to enable the image recognition system to achieve machine learning continuously.

In addition, the server system analyzes the voice command given by the user to enable extraction of useful keywords of the above-mentioned target and the user's interest about the target. Accordingly, a dynamic interest graph can be obtained in which extensive users, various keywords, and various targets are constituent nodes.

In this configuration, the nodes which are targets of the above-mentioned interest graph are further obtained in an expanded manner from extensive users, various targets and various keywords on the network so that in addition to further expansion of the target region of the interest graph, the frequency of collection thereof can be further increased. Accordingly, "knowledge" of mankind can be incorporated in a more effective manner into a continuous learning process with the computer system.

In the present invention, with regard to the target to which attention is given by the user and which can be recognized by the knowledge-information-processing system having the image recognition system, messages and tweets left by the user as voice are uploaded, classified, and accumulated in the server system by way of the network. This allows the server system to send, via the network, the messages and tweets to other users or user groups who approach the same or a similar target in a different time space, and/or users who are interested therein, by way of the network terminal of the users by interactive voice communication with the user. Accordingly, extensive user communication induced by various visual curiosities of many users can be continuously triggered on the network.

The server system performs, in real-time, analysis and classification of the contents concerning the messages and tweets left by the user with regard to various targets so that on the basis of the description of the interest graph held in the server system, major topics included in the messages and tweets are extracted. Other topics which have an even higher level of relationship and in which the extracted topic is the center node are also extracted. These extracted topics are allowed to be shared via the network with other users and user groups who are highly interested in the extracted topic, whereby network communication induced by various targets and phenomena that extensive users see can be continuously triggered.

In the present invention, not only the messages and tweets sent by a user but also various interests, curiosities, or questions given by the server system can be presented to a user or a user group. For example, when a particular user is interested in a particular target at a certain level or higher beyond the scope that can be expected from relationship between target nodes described in the interest graph, or when a particular user is interested at a certain level or less, or when there are targets and phenomena which are difficult for the server system alone to recognize, or when such are found, then the server system can actively suggest related questions and comments to the user, a particular user group, or an extensive user group. Accordingly, a process can be structured to allow the server system to continuously absorb "knowledge" of mankind via various phenomena, and store the knowledge by itself into the knowledge database in a systematic manner by learning.

In recent years, along with the ever increasing speed of networks via ultra-high-speed fiber-optic connections, an enormous amount of data centers are being constructed and the development of super computers capable of massive parallel calculations is accelerating at a rapid pace. Therefore, in the automatic learning process of the computer system itself, the "knowledge" of the mankind can be added thereto in an effective, organic, and continuous manner so that there is a possibility that rapid progress may be made in automatic recognition and machine learning of various phenomena by the high-performance computer systems via the network. For this purpose, how to allow the computer to effectively obtain the "knowledge" of mankind and organize the knowledge as a system of "knowledge" that can be extensively shared via the network in a reusable manner is important. In other words, it is important to find a method of stimulating the "curiosity" of a computer and effectively make progress in the computer system in a continuous manner while communicating with people. The present invention provides a specific method for directly associating such learning by the computer system itself structured by the server with visual interest of people with regard to extensive targets.

### Brief Description of Drawings

FIG. 1 is an explanatory diagram illustrating a network communication system according to an embodiment of the present invention.
FIG. 2 is an explanatory diagram illustrating a headset system and a network terminal according to an embodiment of the present invention.
FIG. 3A is an explanatory diagram illustrating target image extraction processing using voice according to an embodiment of the present invention.
FIG. 3B is an explanatory diagram illustrating target image extraction processing using voice according to an embodiment of the present invention.
FIG. 4A is an explanatory diagram illustrating pointing using voice according to an embodiment of the present invention.
FIG. 4B is an explanatory diagram illustrating growth of graph structure by learning according to an embodiment of the present invention.
FIG. 4C is an explanatory diagram illustrating selection priority processing of multiple target candidates according to an embodiment of the present invention.
FIG. 5 is an explanatory diagram illustrating a knowledge-information-processing server system according to an embodiment of the present invention.
FIG. 6A is an explanatory diagram illustrating an image recognition system according to an embodiment of the present invention.
FIG. 6B is an explanatory diagram illustrating configuration and processing flow of a generic-object recognition unit according to an embodiment of the present invention.
FIG. 6C is an explanatory diagram illustrating configuration and processing flow of a generic-object recognition system according to an embodiment of the present invention.
FIG. 6D is an explanatory diagram illustrating configuration and processing flow of a scene recognition system according to an embodiment of the present invention.
FIG. 6E is an explanatory diagram illustrating configuration and processing flow of a specific-object recognition system according to an embodiment of the present invention.
FIG. 7 is an explanatory diagram illustrating a biometric authentication procedure according to an embodiment of the present invention.
FIG. 8A is an explanatory diagram illustrating configuration and processing flow of an interest graph unit according to an embodiment of the present invention.
FIG. 8B is an explanatory diagram illustrating basic elements and configuration of a graph database according to an embodiment of the present invention.
FIG. 9 is an explanatory diagram illustrating configuration and one graph structure example of a situation recognition unit according to an embodiment of the present invention.
FIG. 10 is an explanatory diagram illustrating configuration and processing flow of a message store unit according to an embodiment of the present invention.
FIG. 11 is an explanatory diagram illustrating configuration and processing flow of a reproduction processing unit according to an embodiment of the present invention.
FIG. 12 is an explanatory diagram illustrating ACL (access control list) according to an embodiment of the present invention.
FIG. 13A is an explanatory diagram illustrating use case scenario according to an embodiment of the present invention.
FIG. 13B is an explanatory diagram illustrating a network communication induced by visual curiosity about a common target according to an embodiment of the present invention.
FIG. 14 is an explanatory diagram illustrating a graph structure of an interest graph according to an embodiment of the present invention.
FIG. 15 is an explanatory diagram illustrating a graph extraction procedure from an image recognition process according to an embodiment of the present invention.
FIG. 16 is an explanatory diagram illustrating acquisition of an interest graph according to an embodiment of the present invention.
FIG. 17 is an explanatory diagram illustrating a portion of snapshot of an interest graph obtained according to an embodiment of the present invention.
FIG. 18A is an explanatory diagram illustrating a recording and reproduction procedure of a message and a tweet capable of specifying time-space and target according to an embodiment of the present invention.
FIG. 18B is an explanatory diagram illustrating a specifying procedure of a time/time zone according to an embodiment of the present invention.
FIG. 18C is an explanatory diagram illustrating a specifying procedure of location/region according to an embodiment of the present invention.
FIG. 19 is an explanatory diagram illustrating a reproduction procedure of a message and a tweet in a time-space specified by a user according to an embodiment of the present invention.
FIG. 20 is an explanatory diagram illustrating a target pointing procedure with user's hand and finger according to an embodiment of the present invention.
FIG. 21 is an explanatory diagram illustrating a procedure of a target pointing by fixation of visual field according to an embodiment of the present invention.
FIG. 22 is an explanatory diagram illustrating a detection method of a photo picture according to an embodiment of the present invention.
FIG. 23A is an explanatory diagram illustrating a dialogue procedure with a target according to an embodiment of the present invention.
FIG. 23B is an explanatory diagram illustrating configuration and processing flow of a conversation engine according to an embodiment of the present invention.
FIG. 24 is an explanatory diagram illustrating use of a shared network terminal by multiple headsets according to an embodiment of the present invention.
FIG. 25 is an explanatory diagram illustrating a processing procedure concerning use of Wiki by voice according to an embodiment of the present invention.
FIG. 26 is an explanatory diagram illustrating error correction using position information according to an embodiment of the present invention.
FIG. 27 is an explanatory diagram illustrating calibration of a view point marker according to an embodiment of the present invention.
FIG. 28 is an explanatory diagram illustrating processing of a network terminal alone when network connection with a server is temporarily disconnected according to an embodiment of the present invention.
FIG. 29 is an example of a specific object and a generic object extracted from an image taken in the time-space according to an embodiment of the present invention.
FIG. 30 is an explanatory diagram illustrating extraction of particular time-space information included in an uploaded image and a selecting/specifying display of a particular time axis according to an embodiment of the present invention.
FIG. 31 is an explanatory diagram illustrating a mechanism of promoting conversation about a particular target during movement of a view point to a particular time-space according to an embodiment of the present invention.

### Description of Embodiments

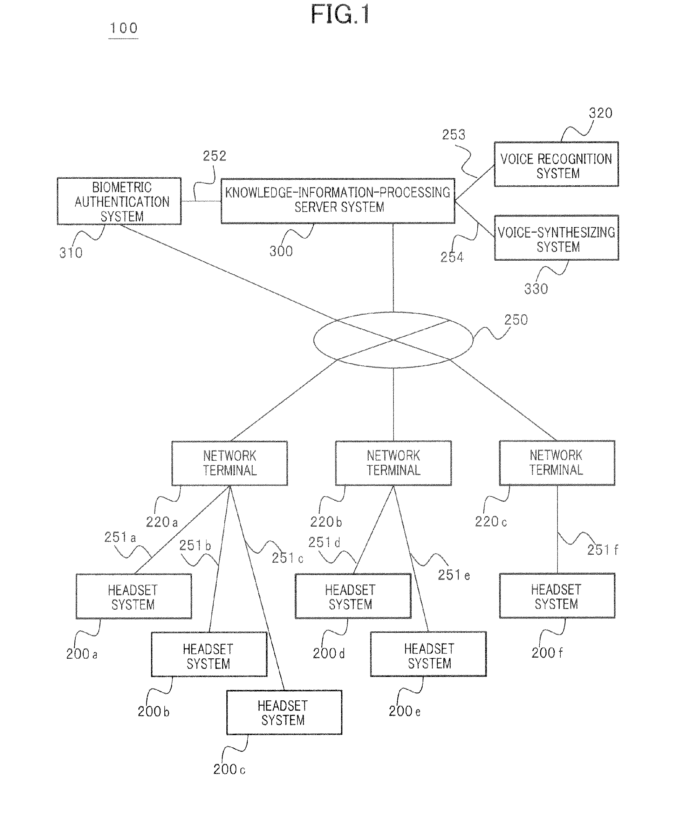

Hereinafter, an embodiment of the present invention will be explained with reference to FIGS. 1 to 31.

A configuration of a network communication system 100 according to an embodiment of the present invention will be explained with reference to FIG. 1. The network communication system includes a headset system 200, a network terminal 220, a knowledge-information-processing server system 300, a biometric authentication system 310, a voice recognition system 320, and a voice-synthesizing system 330. There are one or more headset systems, and one or more headset systems are connected to one network terminal via a network 251. There are one or more network terminals, and are connected to the Internet 250. The knowledge-information-processing server system is connected with a biometric authentication system 310, a voice recognition system 320, and a voice-synthesizing system 330, via networks 252, 253, and 254 respectively. The biometric information processing system may be connected with the Internet 250. The network of the present embodiment may be a private line, a public line including the Internet, or a virtual private line configured on a public line using VPN technology. Unless otherwise specified, the network is defined as described above.

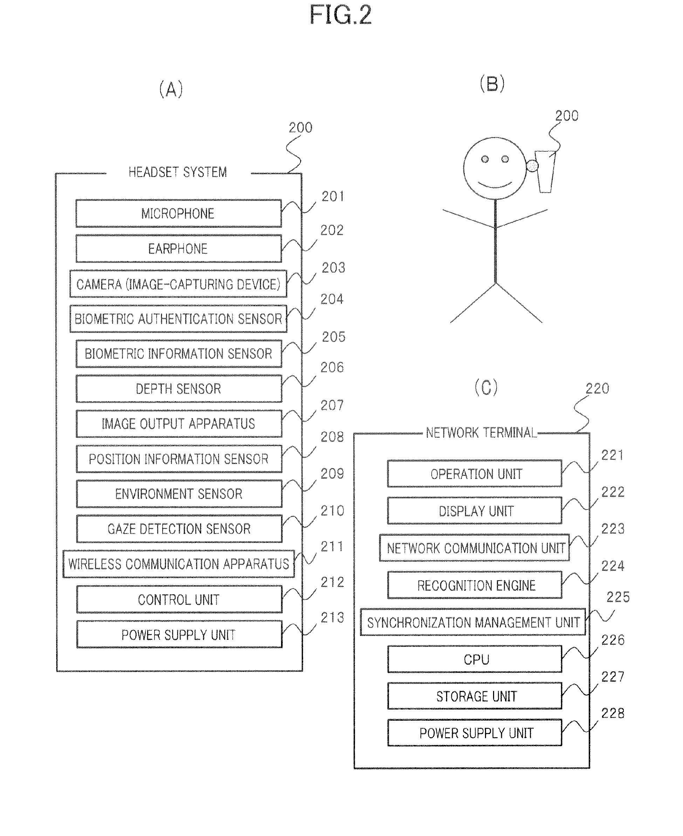

FIG. 2A illustrates a configuration example of headset system 200 according to an embodiment of the present invention. The headset system is an interface apparatus capable of using the above-mentioned network communication system when it is worn by a user as illustrated in FIG. 2B. In FIG. 1, headset systems 200a to 200c are connected to a network terminal 220a with connections 251a to 251 c, headset systems 200d to 200e are connected to a network terminal 220b with connections 251d to 251e, and headset system 200f is connected to a network terminal 220c with a connection 251f. More specifically, this indicates how the headsets 200a to 200f are connected to the knowledge-information-processing server system 300 via the network terminals 220a to 220c by way of the Internet. Hereinafter, the headset system 200 means any one of the headset systems 200a to 200f. The headset systems 200a to 200f need not be of the same type. The headset systems 200a to 200f may be similar apparatuses having the same functions or minimum functions that can be performed.

The headset system 200 includes the following constituents, but is not limited thereto. The headset system 200 may selectively include some of them. There are one or more microphones 201, and the microphones 201 collect voice of the user who wears the above-mentioned headset system and sound around the above-mentioned user. There are one or more earphones 202, which notify the above-mentioned user of, in monaural or stereo, various kinds of voice information including messages and tweets of other users, responses by voice from a server system, and the like. There are one or more cameras (image-capturing devices) 203, which may include not only video reflecting the subjective visual field of the user but also video from areas in dead angles such as areas behind the user, to the sides of the user, or above the user. It may be either a still picture or motion picture. There is one or more biometric authentication sensors 204, and in an embodiment, vein information (from eardrum or outer ear), which is one of pieces of useful biometric identification information of a user, is obtained, and in cooperation with the biometric authentication system 310, authentication and association are made between the above-mentioned user, the above-mentioned headset system, and the knowledge-information-processing server system 300. There are one or more biometric information sensors 205, which obtain various kinds of detectable biometric information (vital signs) such as body temperature, heart rate, blood pressure, brain waves, breathing, eye movement, speech, and body movement of the user. A depth sensor 206 detects movement of a living body of a size equal to or more than a certain size including a person who approaches the user wearing the headset system. An image output apparatus 207 displays various kinds of notification information given by the knowledge-information-processing server system 300. A position information sensor 208 detects the position (latitude and longitude, altitude, and direction) of the user who wears the headset system. For example, the above-mentioned position information sensor is provided with six-axes motion sensor and the like, so that it is configured to be able to detect movement direction, orientation, rotation, and the like in addition. An environment sensor 209 detects brightness, color temperature, noise, sound pressure level, temperature and humidity, and the like around the headset system. In an embodiment, a gaze detection sensor 210 causes a portion of the headset system to emit safe light ray to user's pupil or retina, measures the reflection light therefrom, thus directly detecting the direction of the gaze of the user. A wireless communication apparatus 211 communicates with the network terminal 220, and communicates with the knowledge-information-processing server system 300. A power supply unit 213 means a battery and the like for providing electric power to the entire headset system, but when it is possible to connect to the network terminal via a wire, electric power may be supplied externally.

FIG. 2C illustrates a configuration example of the network terminal 220 according to an embodiment of the present invention. In FIG. 1, the network terminals 220a to 220f are client terminal apparatuses widely used by users, and include, for example, a PC, a portable information terminal (PDA), a tablet, a portable telephone and a smartphone. This apparatuses can be connected to the Internet, and FIG. 2C indicates how they are connected to the Internet. Hereinafter, the network terminal 220 means any one of the network terminals 220a to 220f connected to the Internet. The network terminals 220a to 220f need not be of the same type. The network terminals 220a to 220f may be similar terminal apparatuses having the same function or minimum function that can be performed.

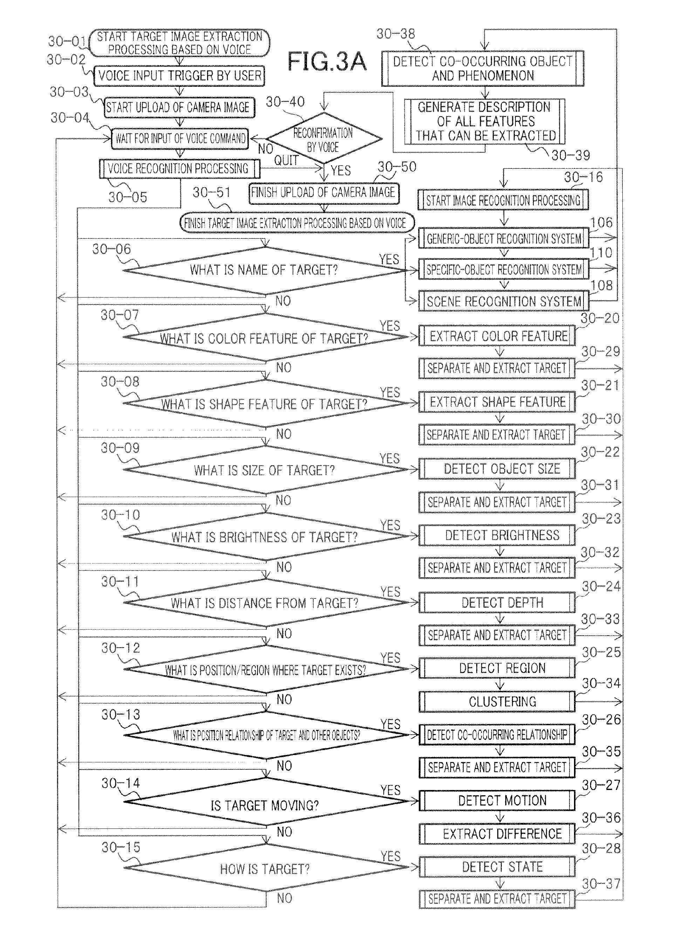

The network terminal 220 includes the following constituents, but is not limited thereto. The network terminal 220 may selectively include some of them. The operation unit 221 and the display unit 222 are user interface units of the network terminal 220. A network communication unit 223 communicates with the Internet and one or more headset systems. The network communication unit may be IMT-2000, IEEE 802.11, Bluetooth, IEEE 802.3, or a proprietary wired/wireless specification, and a combination thereof by way of a router. A recognition engine 224 downloads and executes an image recognition program optimized for the network terminal specialized in image recognition processing of a limited target from the knowledge-information-processing server system from an image recognition processing function provided in the image recognition system 301, which is a main constituent element of the knowledge-information-processing server system 300. Accordingly, the network terminal also has some of image detection/recognition functions within a certain range, so that the processing load imposed on the image recognition system by the server and the load on the network can be alleviated. Moreover, when the server thereafter performs recognition processing, preliminary preprocessing corresponding to steps 30-20 to 30-37 in FIG. 3A explained later can be performed. The synchronization management unit 225 performs synchronization processing with the server when the network is temporarily disconnected due to malfunction of the network and the network is recovered back again. The CPU 226 is a central processing apparatus. The storage unit 227 is a main memory apparatus, and is a primary and secondary storage apparatus including flash memory and the like. The power supply unit 228 is a power supply such as a battery for providing electric power to the entire network terminal. The network terminals serve as a buffer for the network. For example, if information that is not important for the user is uploaded to the network, it is merely noise for the knowledge processing server system 300 in terms of association with the user, and is also unnecessary overhead for the network. Therefore, the network terminal performs screening processing at a certain level within a possible range, whereby network bandwidth effective for the user can be ensured, and the response speed for highly local processing can be improved.

A flow of target image extraction processing 30-01 with user's voice when the user gives attention to a target in which the user is interested will be explained as an embodiment of the present invention with reference to FIG. 3A. As defined above, in the present embodiment, a specific object, a generic object, a person, a picture, or a scene will be collectively referred to as a "target". The target image extraction processing starts with a voice input trigger by the user in step 30-02. As the voice input trigger, a particular word and a series of natural language may be used, or user's pronunciation may be detected by detecting change of sound pressure level, or it may be with GUI operation on the network terminal 220. With the user's voice input trigger, the camera provided in the user's headset system starts capturing images, and upload of motion pictures, successive still pictures, or still pictures that can be obtained therefrom to the knowledge-information-processing server system 300 is started (30-03), and thereafter, the system is in a user's voice command input standby state (30-04).

A series of target image extraction and image recognition processing flow are performed in the following order: voice recognition processing, image feature extraction processing, attention-given target extraction processing, and then image recognition processing. More specifically, from the voice input command waiting (30-04), user's utterance is recognized, and with the above-mentioned voice recognition processing, a string of words is extracted from a series of words spoken by the user, and feature extraction processing of the image is performed on the basis of the above-mentioned string of words, and image recognition processing is performed on the basis of the image features that were able to be extracted. When there are multiple targets and it is difficult to perform feature extraction from the target itself, or the like, the user is asked to further input image features so that process is configured to allow the server to more reliably recognize the target to which the user gives attention. The process of "reconfirmation" by the utterance of the user is added so that it makes a complete change from the conventional concept in which only the computer system alone has to cope with all the processing processes of the image recognition system, and further, it can effectively cope with accurate extraction of target image and the problems of supporting homophones, both of which conventional image recognition systems are not good at. When this is actually introduced, it is important to let the user feel that the series of image recognition processes is not cumbersome work and is interesting communication. In the series of image feature extraction processing, by arranging, in parallel, many image feature extraction processing units corresponding to a greater variety of image features than the example of FIG. 3A, the parallel processing can be performed at a time, so that the accuracy of image recognition can be further improved. In addition, the speed of the processing can be greatly improved.

The target pointing method using user's voice is considered to often employ cases of pointing image features as a series of words including multiple image features at a time rather than cases of allowing the user to select and individually point to each of the image features for each image feature like the one shown in the example of steps 30-06 to 30-15 explained above. In this case, extraction processing of the target using multiple image features is performed in parallel, and the chance of obtaining multiple image feature elements representing the above-mentioned target from there is high. When more features can be extracted therefrom, the accuracy of pointing to the above-mentioned attention-given target is further enhanced. Using the extractable image features as clues, the image recognition system starts image recognition processing 30-16. The image recognition is performed by the generic-object recognition system 106, the specific-object recognition system 110, and the scene recognition system 108. FIG. 3A shows them as a continuous flow, but each of the above-mentioned image recognition processings may be performed in parallel, or further parallelization may be achieved in each of generic-object recognition, specific-object recognition, and scene recognition processing. It can greatly reduce the processing time of the recognition speed of the above-mentioned image recognition processing. As a result, various recognition results of the target recognized as described above can be notified to the user as image recognition result of the target using voice.

Even in this case, if not only the image recognition result but also the feature elements indicated by the user are cited to ask the user for reconfirmation, it is still questionable as to whether the system has accurately extracted the target to which the user gives really attention. For example, a camera image reflecting user's visual field may include multiple similar objects. In this patent, in order to cope with unreliability as explained above, the knowledge-information-processing server system provided with the image recognition system thoroughly investigates the situation around the above-mentioned target on the basis of the above-mentioned camera video, so that a new object and phenomenon "co-occurring" with the target are extracted (30-38), new feature elements which are not clearly indicated by the user are added to the elements of the reconfirmation (30-39), and the user is asked to reconfirm by voice (30-40). This allows configuration to reconfirm that the target to which the user gives attention and the target extracted by the server system are the same.

The series of processing is basically processing with regard to the same target, and the user may become interested in another target at all times in his/her action, and therefore, there is also a large outer processing loop including the above steps in FIG. 3A. The image recognition processing loop may be started when the headset system is worn by the user, or may be started in response to a voice trigger like step 30-02, or may be started when the network terminal is operated, but the start of the image recognition processing loop is not limited thereto. The processing loop may be stopped when the user removes the headset like the means at the start of the processing loop, or the processing loop may be stopped in response to a voice trigger, or the processing loop may be stopped when the network terminal is operated, but the stop of the image recognition processing loop is not limited thereto. In addition, the target recognized as a result of user's attention given to the target may be given the above-mentioned time-space information and recorded to the graph database 365 (explained later), so that this configuration allows responding to an inquiry later. The target image extraction processing described in FIG. 3A is an important processing in the present invention, and each step thereof will be explained below.

First, the user makes a voice input trigger (30-02). After upload of a camera image is started (30-03), a string of words is extracted from user's target detection command with the voice recognition processing 30-05. When the string of words matches any one of the features of the conditions 30-07 to 30-15, it is given to such image feature extraction processing. When the string of words is "the name of the target" (30-06), for example, when the user speaks a proper noun indicating the target, the above-mentioned annotation is determined to reflect certain recognition decision of the user, and execution (110) processing of such specific-object recognition is performed. When the collation result is different from the above-mentioned annotation, or when it is questionable, the user may have made mistake, which is notified to the user. Alternatively, when the user speaks a general noun concerning the target, execution of generic-object recognition (106) of the general noun is performed, and the target is extracted from the image feature. Alternatively, when the user speaks a scene concerning the target, execution of scene recognition (108) of the scene is done, and a target region is extracted from the image feature. Alternatively, only one feature may not be indicated, and it may be possible to specify them as scenery including multiple features. For example, it may be a specifying method for finding a yellow (color) taxi (generic object) running (state) at the left side (position) of a road (generic object), the license number of which is "1234 (specific object)". Such specified target may be a series of words, or each of them may be specified. When multiple targets are found, the reconfirmation process is performed by the image recognition system, and then, a new image feature can be further added to narrow down the target. The above-mentioned image extraction result is subjected to reconfirmation processing upon issuing, for example, a question asked to the user by voice, for example, "what is it?" (30-40). In response to the reconfirmation, when the target is extracted as the user wishes, then the user speaks a word or term indicating to it, and performs step 30-50, "camera image upload termination", to terminate the above-mentioned target image extraction processing (30-51). On the other hand, when the target is different from the user's intention, step 30-04, "voice command input standby", is performed again to further input image features. Further, if it is impossible to identify a target no matter how many times inputs are given, or if the target itself has moved out of the visual field, the processing is interrupted (QUIT), and the above-mentioned target image extraction processing is terminated.

For example, when the result of the voice recognition processing 30-05 matches the condition 30-07 as illustrated in FIG. 3A, i.e., when the user speaks the feature about the "color" of the target, the color extraction processing 30-20 is performed. In the above-mentioned color extraction processing, a method for setting a range for each of three primary RGB colors and doing extraction may be used, or they may be extracted in YUV color space. This is not limited to such particular color space representations. After the above-mentioned color extraction processing, the target is separated and extracted (30-29), and segmentation (cropped region) information is obtained. Subsequently, using the above-mentioned segmentation information as a clue, image recognition processing (30-16) of the target is performed. Thereafter, co-occurring objects and co-occurring phenomena are extracted (30-38) using the result of the above-mentioned image recognition processing, and a description of all the extractable features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-08 as illustrated in FIG. 3A, i.e., when the user speaks the feature about the "shape" of the target, the shape feature extraction 30-21 is performed. In the above-mentioned shape feature extraction processing, outline and main shape feature are extracted while doing edge tracking of the target, and thereafter, template/matching processing of the shape is performed, but other methods may also be used. After the above-mentioned shape extraction processing, the target is separated (30-30), and segmentation information is obtained. Subsequently, using the above-mentioned segmentation information as a clue, image recognition processing (30-16) of the target is performed. Thereafter, co-occurring objects and co-occurring phenomena are extracted (30-38) using the result of the above-mentioned image recognition processing, and a description of all the extractable features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-09 as illustrated in FIG. 3A, i.e., when the user speaks the feature about the "size" of the target, the object size detection processing 30-22 is performed. For example, in the above-mentioned object size detection processing, the above-mentioned target object classified by feature extraction processing and the like for features other than the size is relatively compared with other objects nearby by interactive voice communication with the user. For example, it is a command such as "... larger than ... at the left side". This is because when a target is present by itself, it is impossible to simply, uniquely determine the size with only the size seen from the view angle unless there is a specific index for comparison of the size, but other methods may also be used. After the above-mentioned size detection, the target is separated (30-31), and segmentation information is obtained. Subsequently, using the above-mentioned segmentation information as a clue, image recognition processing (30-16) of the target is performed. Thereafter, co-occurring objects and co-occurring phenomena are extracted (30-38) using the result of the above-mentioned image recognition processing, and a description of all the extractable features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-10 as illustrated in FIG. 3A,. i.e., when the user speaks the feature about the "brightness" of the target, the brightness detection processing 30-23 is performed. In the above-mentioned brightness detection processing, the brightness of a particular region is obtained from the three primary RGB colors or YUV color space, but other methods may also be used. In the above-mentioned target brightness detection processing, extraction of relative brightness compared with surrounding of the target is performed by interactive voice communication with the user. For example, it is a command such as "... brightly shining than the surrounding". This is because when a target is present by itself, it is impossible to simply, uniquely determine the brightness felt by the user with only the brightness value of the pixel unless there is a specific index for comparison of the brightness, but other methods may also be used. After the above-mentioned brightness detection, the target is separated (30-32), and segmentation information is obtained. Subsequently, using the above-mentioned segmentation information as a clue, image recognition processing (30-16) of the target is performed. Thereafter, co-occurring objects and co-occurring phenomena are extracted (30-38) using the result of the above-mentioned image recognition processing, and a description of all the extractable features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-11 as illustrated in FIG. 3A, i.e.,, when the user speaks the feature about the "distance from the target", the depth detection processing 30-24 is performed. In the above-mentioned depth detection processing, the depth may be directly measured using the depth sensor 206 provided in the user's headset system 200, or may be calculated from parallax information obtained from two or more cameras' video. Alternatively, methods other than this may be used. After the above-mentioned distance detection, the target is separated (30-33), and segmentation information is obtained. Subsequently, using the above-mentioned segmentation information as a clue, image recognition processing (30-16) of the target is performed. Thereafter, co-occurring objects and co-occurring phenomena are extracted (30-38) using the result of the above-mentioned image recognition processing, and a description of all the extractable features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-12 as illustrated in FIG. 3A, i.e., when the user speaks the feature about "the position/region where the target exists", the target region detection 30-25 is performed. In the above-mentioned region detection processing, for example, the entire camera image reflecting the main visual field of the user may be divided into mesh-like regions with a regular interval in advance, and the target may be narrowed down with region-specification such as "upper right..." as an interactive command from the user, or the location where the target exists may be specified, e.g., "... on the desk". Alternatively, it may be a specification concerning other positions and regions. After the position/region detection of the position/region where the above-mentioned target exists, the target is separated (30-34), and segmentation information is obtained. Subsequently, using the above-mentioned segmentation information as a clue, image recognition processing (30-16) of the target is performed. Thereafter, other co-occurring objects and co-occurring phenomena are extracted (30-38) using the result of the above-mentioned image recognition processing, and a description including the above-mentioned extractable co-occurring features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-13 as illustrated in FIG. 3A, i.e., when the user speaks the feature about "the positional relationship between the target and other objects", the co-occurring relationship detection 30-26 concerning the above-mentioned target is performed. In the above-mentioned co-occurring relationship detection processing, using segmentation information concerning corresponding feature extracted by processing (106, 108, 110, 30-20 to 30-28) described in FIG. 3A, co-occurring relationship with each feature corresponding to the segmentation information thereof is thoroughly investigated, so that the target is extracted. For example, it is a command such as "... appearing together with ...", but other methods may also be used. Accordingly, the target is separated on the basis of the position relationship between the above-mentioned target and other objects (30-35), the segmentation information concerning the above-mentioned target is obtained. Subsequently, using the above-mentioned segmentation information as a clue, image recognition processing (30-16) of the target is performed. Thereafter, other co-occurring objects and co-occurring phenomena are extracted (30-38) using the result of the above-mentioned recognition, and a description including the above-mentioned extractable co-occurring features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-14 as illustrated in FIG. 3A, i.e., when the user speaks the feature about "movement of the target", the movement detection processing 30-27 is performed. In the above-mentioned movement detection processing, multiple images continuously sorted out on a time axis are looked up, and each image is divided into multiple mesh regions, and by comparing the above-mentioned regions with each other, not only parallel movement of the entire image by movement of the camera itself but also a region individually moving in a relative manner are discovered. The difference extraction (30-36) processing of the region is performed, and segmentation information concerning the region moving in a relative manner as compared with the surrounding is obtained. Alternatively, methods other than this may be used. Subsequently, using the above-mentioned segmentation information as a clue, image recognition processing (30-16) of the target is performed. Thereafter, other co-occurring objects and co-occurring phenomena are extracted (30-38) using the result of the above-mentioned image recognition processing, and a description including the above-mentioned extractable co-occurring features is generated (30-39). With the above-mentioned description, the user is asked to reconfirm (30-40). When the result is YES, the upload of the camera image is terminated (30-50), and extraction processing of the target image with voice is terminated (30-51).

For example, when the result of the voice recognition processing 30-05 matches the condition 30-15 as illustrated in FIG. 3A, i.e., when the user speaks the feature about "the state of the target", the state detection processing 30-28 is performed. In the above-mentioned state detection processing, while looking up a knowledge database (not shown) describing the feature of the above-mentioned state, the state of the object is estimated and extracted from multiple continuous images (30-37), so that segmentation information is obtained, wherein the state of the object includes, for example, motion state (still, movement, vibration, floating, rising, falling, flying, rotation, migration, moving closer, moving away), action state (running, jumping, crouching, sitting, staying in bed, lying, sleeping, eating, drinking, and including emotions that can be observed). Subsequently, using the above-mentioned segmentation information as a clue, image recognition processing (30-16) of the target is performed. Thereafter, other co-occurring objects and co-occurring phenomena are extracted (30-38) using the result of the above-mentioned image recognition processing, and a description including the above-mentioned extractable co-occurring features is generated (30-39). With the above-mentioned description, the user is asked to reconfirm (30-40). When the result is YES, the upload of the camera image is terminated (30-50), and extraction processing of the target image with voice is terminated (30-51).

In the step of reconfirmation (30-40) as illustrated in FIG. 3A using voice concerning the above step, the user can stop the target image extraction processing with an utterance. When the interruption command is recognized in the voice recognition processing 30-05, step 30-50 is subsequently performed to terminate the camera image upload, and the target image extraction processing using voice is terminated (30-51). When the processing time is longer than a certain time in detection, extraction, or recognition processing of each target as described above, situation indicating progress of processing and related information can be notified by voice in order to continue to attract the attention of the user. For example, it may be possible to give, back to the user, progress messages as voice such as "the system is continuously accessing the server to look up recognition processing of an item to which attention is currently given. Currently there are ... people are giving attention to the same target. Please wait for a moment", or "processing up to ... is finished. The intermediate progress is as follows ...".

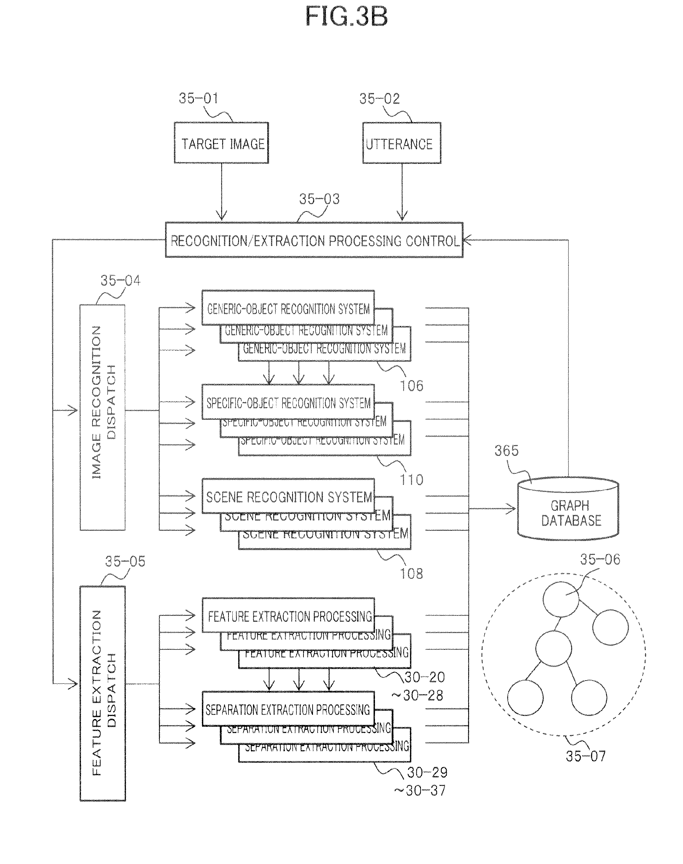

In this case, with reference to FIG. 3B, FIG. 3A will be explained from the point of the data flow. The inputs are an image 35-01 and an utterance 35-02. In the control of the recognition/extraction processing 35-03, one or more steps of steps 30-06 to 30-15 in FIG. 3A with input of the utterance 35-02 are performed. When step 35-16 of FIG. 3A is performed for the image 35-01, at least one or more of the generic-object recognition processing by the generic-object recognition processing system 110, the specific-object recognition processing by the specific-object recognition system 110, and the scene recognition processing by the scene recognition system 108 is performed. The function blocks of the image recognition system 106, 108, 110 can be further made into parallel for each execution unit, and with the image recognition processing dispatch 35-04, allocation is made to one or more processing to be performed in parallel. When steps 30-07 to 30-15 of FIG. 3A are performed on the input of utterance 35-02, feature extraction processing 30-20 to 30-28 and separation extraction processing 30-29 to 30-37 are performed. One or more feature extraction processing and one or more separation extraction processing exist, and with the feature extraction dispatch 35-05, allocation is made to one or more processings to be performed in parallel. In the control of the recognition/extraction processing 35-03, order control is performed when the user's utterance includes a word affecting the order of processing (for example, when the user's utterance includes "above XYZ", then it is necessary to perform image recognition of "XYZ", and subsequently, "above" is processed).

With regard to the input image 35-01, the control of the recognition/extraction processing 35-03 accesses the graph database 365 explained later, and the representative node 35-06 is extracted (when the above-mentioned database does not include the above-mentioned node, a new representative node is generated). With the series of processing, the image 35-01 is processed in accordance with the utterance 35-02, and a graph structure 35-07 of a result concerning each recognition/extraction processing performed at a time is accumulated in the graph database 365. In this manner, the flow of the series of data by the control of the recognition/extraction processing 35-03 for the input image 35-01 continues as long as the utterance 35-02 is valid with regard to the above-mentioned input image.

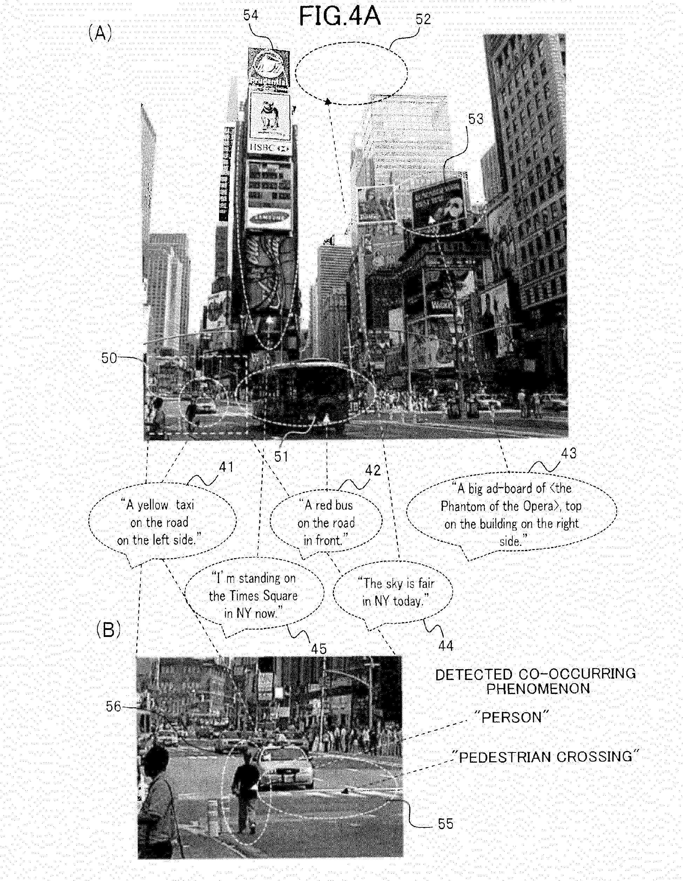

Subsequently, pointing operation of a target using user's voice according to an embodiment of the present invention will be explained with reference to FIG. 4A. This is an application example of a procedure described in FIG. 3A. The location of FIG. 4A (A) is around Times Square, Manhattan Island, New York. Suppose that a user at this location or a user seeing this picture makes an utterance 41 "a yellow taxi on the road on the left side". Accordingly, the voice recognition system 320 extracts multiple characters or a string of words from the above-mentioned utterance 41. Words that can be extracted from the above-mentioned utterance include five words, i.e., "a", "yellow", "taxi" that can be seen at "the left side" on the "road". Accordingly, in the target image extraction flow as illustrated in FIG. 3A explained above, the following facts can be found: "the name of the target", "color information about the target", "the position of the target", "the region where the target exists", and that there are not multiple targets but only a single target to which attention is given. From the above clues, the detection/extraction processing of the target having the above-mentioned image features is started. When the image recognition system is ready to respond to the user by voice to tell him/her that it may be a taxi in a broken line circle (50), only using the feature elements clearly indicated by the user as the reconfirmation as described above may be somewhat unreliable. In order to cope with such unreliability, it is necessary to detect other co-occurring feature elements concerning the above-mentioned target that have not yet been indicated by the user, and add them to the reconfirmation. For example, when it is possible to ask the user for reconfirmation upon adding new co-occurring phenomena concerning the above-mentioned target detected by the knowledge-information-processing server system provided with the image recognition system, e.g., "is it a taxi coming over a pedestrian crossing at the closer side, and you can see a person in front of it?", then detection/extraction/narrow-down processing of the target can be achieved more suitably for the user's intention. This example indicates that a "pedestrian crossing" (55) and a "person" (56) can be detected from enlarged image FIG. 4A (B) of the region including the broken line circle (50).

Likewise, when a user looking up at a building having a large signboard makes an utterance 45 "I'm standing on the Times Square in NY now", then it can be estimated that, by matching processing using camera images, it is "Times Square" in "New York" and the user is paying attention to a building which is a famous landmark.

Likewise, from an expression of an utterance 42 "a red bus on the road in front", it is possible to extract "a (the number of target)", "red (color feature of the target)", "bus (the name of the target)" is located "on (the position relationship of the target)", "the road (generic object)" in "front (the position where the target exists)", and it can be estimated that the user is giving attention to the bus in a broken line circle 51.

Likewise, from an expression of an utterance 44 "the sky is fair in NY today", it is possible to extract: it is "fine" in "NY", "today", and it can be estimated that the user is looking up at the region "sky" in a broken line circle (52).

From a more complicated tweet 43 "a big ad-board of 'the Phantom of the Opera', top on the building on the right side", it can be estimated that the user is paying attention to a "signboard" of "Phantom of the Opera" indicated by a broken line circle (53) which is on the "rooftop" of the "building" that can be seen at the "right side".

These string of detectable words respectively indicate "unique name", "general noun", "scene", "color", "position", "region", "location", and the like, and image detection/image extraction processing corresponding thereto is performed. The results as well as the above-mentioned time-space information and the image information are given to the knowledge-information-processing server system 300. The image described in FIG. 4A explains an embodiment of the present invention, and is not limited thereto.

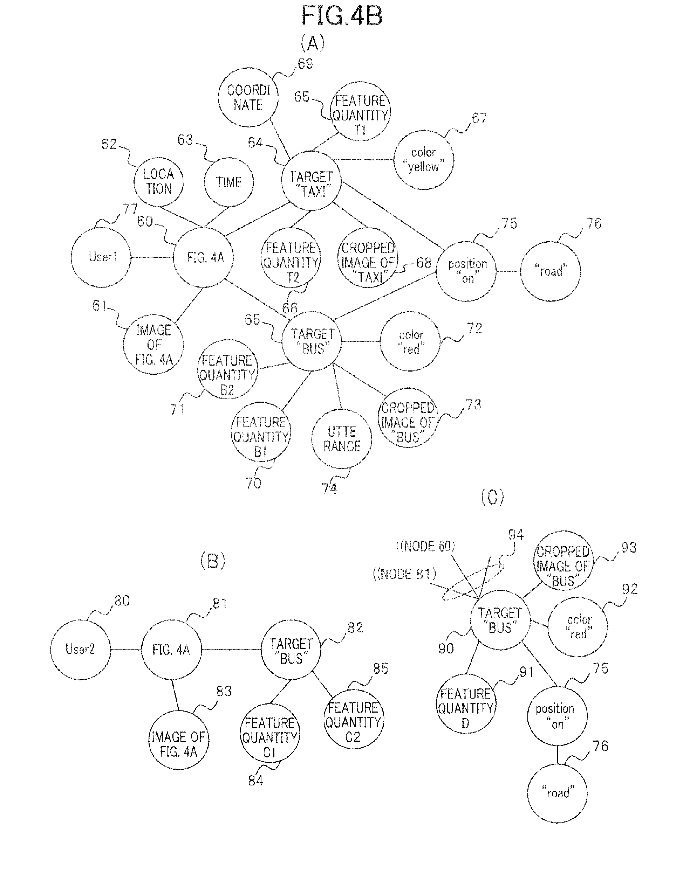

Now, with reference to FIG. 4B, learning function in the process of performing a procedure described in FIG. 3A according to an embodiment of the present invention will be explained using a scene of FIG. 4A as an example. FIG. 4B (A) is a snapshot of a portion of graph structure (explained later) obtained with regard to an image reflecting the main visual field of the user described in FIG. 4A. First, the relationship between the image recognition process and the graph structure will be explained.

A node (60) is a node representing FIG. 4A, and is linked to a node (61) recorded with image data of FIG. 4A. Hereinafter, nodes and links of nodes are used to express information. The node (60) is also linked to a node (62) representing the location and a node (63) representing the time, so that it holds information about the location and the time where the picture was taken. Further, the node (60) is linked to a node (64) and a node (65). The node (64) is a node representing the target in the broken line circle (50) in FIG. 4A, and with the utterance 41, the node (64) holds information about a feature quantity T1 (65), a feature quantity T2 (66), a color attribute (67), a cropped image (68), and a position coordinate (69) in the image. The feature quantity is obtained as a processing result of the generic-object recognition system 106 explained later in the process of procedure of FIG. 3A. The node (65) is a node representing a target in a broken line circle (51) of FIG. 4A, and holds the similar information as the node (64). The node (60), i.e., FIG. 4A, is linked with a node (77) as a subjective visual image of the user 1.

Subsequently, FIG. 4B (B) shows information holding in a node (81) representing a subjective view of the node (80) representing the user 2. In order to simplify the figure, some of the nodes described in FIG. 4B (A) are omitted. A node (82) is a representative node of a target corresponding to the broken line circle (51) of FIG. 4A in the subjective view of the user 2. Likewise, feature quantities C1 (84) and C2 (85) are held as information.

The generic-object recognition system 106 compares the feature quantities B1 (70) and B2 (71) linked to the node (65) and the feature quantities C1 (84) and C2 (85) linked to the node (82). When it is determined that they are the same target (i.e., they belong to the same category), or when it may be a new barycenter (or median point) in terms of statistics, the representative feature quantity D (91) is calculated and utilized for learning. In the present embodiment, the above-mentioned learning result is recorded to a Visual Word dictionary 110-10. Further, a subgraph including a node (90) representing the target linked to sub-nodes (91 to 93 and 75 to 76) is generated, and the node (60) replaces the link to the node (65) with the link to the node (90). Likewise, the node 81 replaces the link to the node 82 with the link to the node 90.

Subsequently, when another user gives attention to the target corresponding to the broken line circle (50) in FIG. 4A in a different time-space, a graph structure similar to the above is structured, and the generic-object recognition system 106 can determine that the feature quantity of the above-mentioned target also belongs to the same class as the feature quantity recorded in the node (90) through the learning. Therefore, the graph structure can be structured just like the link to the node (90).

The features extracted in the feature extraction processing corresponding to steps 30-20 to 30-28 described in FIG. 3A can be expressed as a graph structure having user's utterance, segmentation information, and the above-mentioned features as nodes. For example, in a case of segmentation region of the broken line circle (50) of FIG. 4A and where the feature extraction processing is step 30-20, then the graph structure holds the feature node about color. When there is already a representative node concerning the target, the above-mentioned graph structure is compared with its subgraph. In the example of FIG. 4B, it may be possible to be determined to close to the color feature "yellow" of the node (67), and accordingly, the above-mentioned graph structure is the subgraph of the representative node (64). Such integration of the graph structure may be recorded. Therefore, in the above-mentioned example, the relationship between the user's utterance and the color feature can be recorded, and therefore, likelihood of the color feature corresponding to "yellow" is enhanced.

In accordance with the procedure as described above, the databases (107, 109, 111, 110-10) concerning the image recognition explained later and graph database 365 explained later are grown (new data are obtained). In the above description, the case of a generic object has been explained, but even in the case of a specific object, a person, a picture, or a scene, information about the target is accumulated in the above-mentioned databases in the same manner.

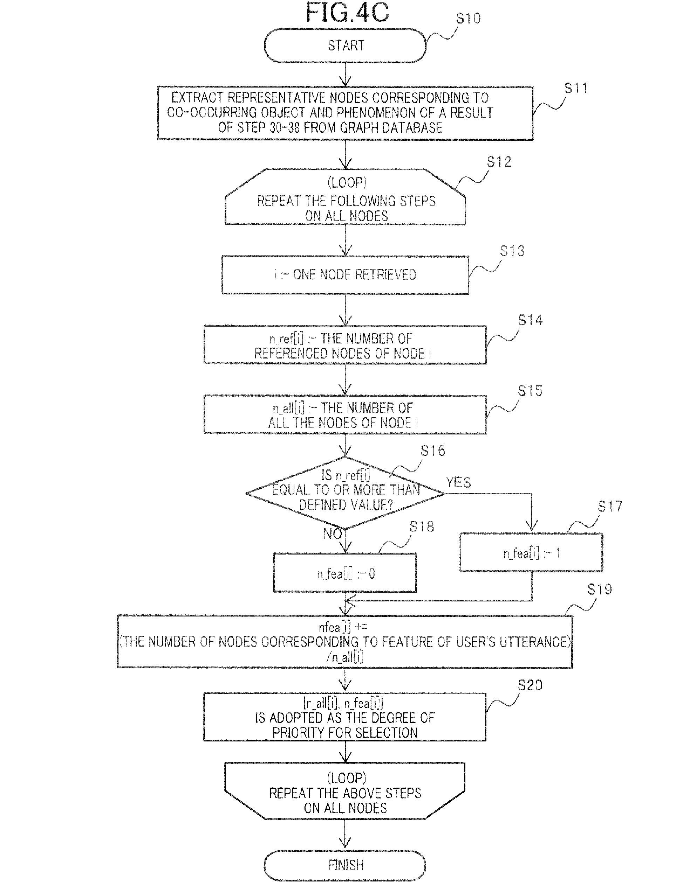

Subsequently, when multiple target candidate nodes are extracted from a graph database 365 according to an embodiment of the present invention, means for calculating which of them the user is giving attention to will be explained with reference to FIG. 4C. The above-mentioned procedure can be used when selecting the target to which the user gives attention from among multiple target candidates extractable in step 30-38 and step 30-39 of the procedure in FIG. 3A, for example.

In step (S10), representative nodes corresponding to co-occurring object/phenomenon of the result of the step 30-38 are extracted from the graph database 365 (S11). In the above-mentioned step, the graph database is accessed in step 30-16 and steps 30-20 to 30-28 described in FIG. 3A, so that, for example, in the color feature extraction 30-20, from the color node related to FIG. 4A, the target nodes (64) and (65) can be extracted from the links of two color nodes (67) and (72) and the node 60 of FIG. 4A.

In the step (S11), one or more representative nodes can be extracted. Subsequent steps are performed on all the representative nodes (S12). In step (S 13), one representative node is stored to a variable i. Then, the number of nodes referring to the representative node of the above-mentioned variable i is stored to a variable n_ref[i] (S14). For example, in FIG. 4B (C), the link from the node referring to the node (90) is link in the broken line circle (94), which is "3". Subsequently, the number of all the nodes of the subgraph of the node i is substituted into n_all[i] (S15). In the node (90) of FIG. 4B (C), "5" is substituted thereinto. Subsequently, a determination is made as to whether n_ref[i] is equal to or more than a defined value. In a case of YES, 1 is substituted into n_fea[i] (S17), and in a case of NO, 0 is substituted thereinto (S18). In step (S19), in the procedure described in FIG. 3A in the subgraph of the node i, a numerical value obtained by dividing the number of nodes corresponding to the feature spoken by the user by n_all[i] is added to n_fea[i]. For example, in the example of FIG. 4B (C), with regard to the node (90), when the user speaks only "red", 1/5 is added, and when the user speaks an utterance including "red", "on", and "road", then 3/5 is added. As a result, a two-tuple {n_all[i], n_fea[i]} is adopted as selection priority with regard to the node i.

In the above configuration, the graph structure reflecting the learning result by the image recognition process is adopted as calculation criterion, and the above-mentioned learning result can be reflected in the selection priority. For example, when the user's utterance matches the feature including steps 30-20 to 30-28 described in FIG. 3A, the nodes related to the above-mentioned feature are added to the representative node, and accordingly, the selection priority calculated in the step is changed. It should be noted that the calculation of the selection priority is not limited to the above-mentioned method. For example, weight attached to link may be considered. In FIG. 4B (C), the number of nodes is counted while the weights of the node (74) and the node (75) are the same as those of the other nodes, but the above-mentioned node (74) and the node (75) may be considered to have close relationship, and accordingly, they may be counted as one node. As described above, the relationship between nodes may be considered.

In generation of description about all the features extractable in step 30-39, a node of which second term is equal to or more than value "1" is selected from the nodes arranged in the descending order of the value of the first term of the selection priority, and using the conversation engine 430 explained later, it is possible to let the user reconfirm by voice. The above-mentioned second term is calculated from the relationship with the defined value in step (S16). More specifically, it is calculated from the non-reference number of the representative node. For example, when the defined value of step (S16) is "2", a representative node linked to two or more users (i.e., which has once become the target to which the user gives attention) is selected. More specifically, this means addition to the candidates for reconfirmation by the user. In accordance with the procedure explained above, the target that is close to what the user is looking for can be selected from among the above-mentioned target candidates by the extraction of co-occurring object/phenomenon in step 30-38.

The value in the two-tuple concerning the selection priority may use those other the usage means of the above combination. For example, the selection priority represented as the two-tuple may be normalized as a two-dimensional vector and may be compared. For example, the selection priority may be calculated in consideration of the distance from the feature quantity node in the subgraph concerning the representative node, i.e., in the example of FIG. 4B (C), in consideration of the distance from the representative feature quantity (for example, the feature quantity in the Visual Word dictionary 110-10) within the corresponding class of the node (91).

Further, when the user is silent for a predetermined period of time in the reconfirmation, it is deemed that a target that is what the user is looking for is recognized, and accordingly the upload of the camera image may be terminated (30-50).

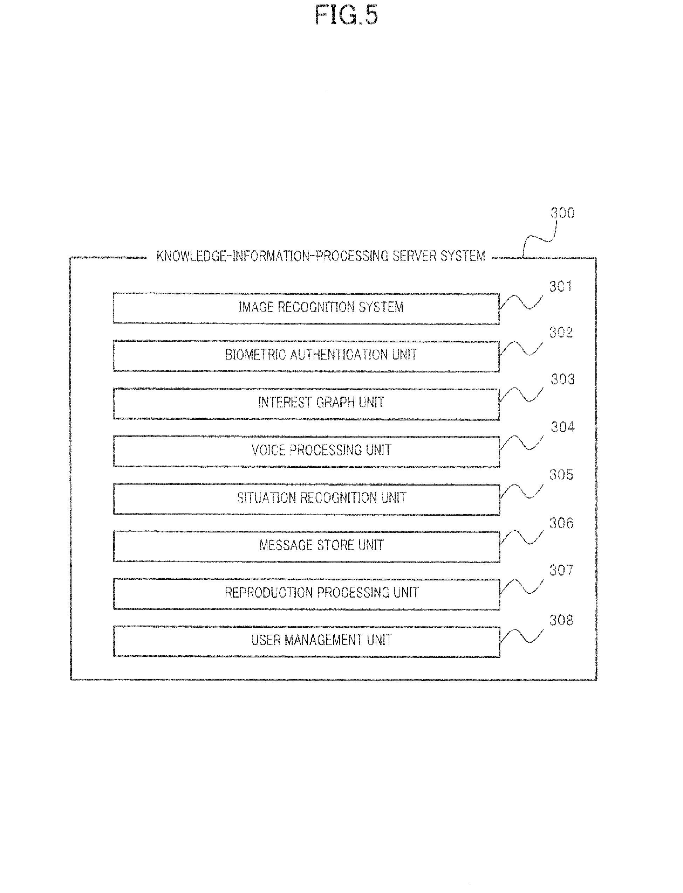

With reference to FIG. 5, function blocks in the knowledge-information-processing server system 300 according to an embodiment of the present invention will be explained. In the present invention, the knowledge-information-processing server system 300 includes an image recognition system 301, a biometric authentication unit 302, an interest graph unit 303, a voice processing unit 304, a situation recognition unit 305, a message store unit 306, a reproduction processing unit 307, and a user management unit 308, but the knowledge-information-processing server system 300 is not limited thereto. The knowledge-information-processing server system 300 may selectively include some of them.

The voice processing unit 304 uses the voice recognition system 320 to convert user's speech collected by the headset system 200 worn by the user into a string of spoken words. The output from the reproduction processing unit 307 (explained later) is notified as voice to the user via the headset system using the voice synthesis system 330.

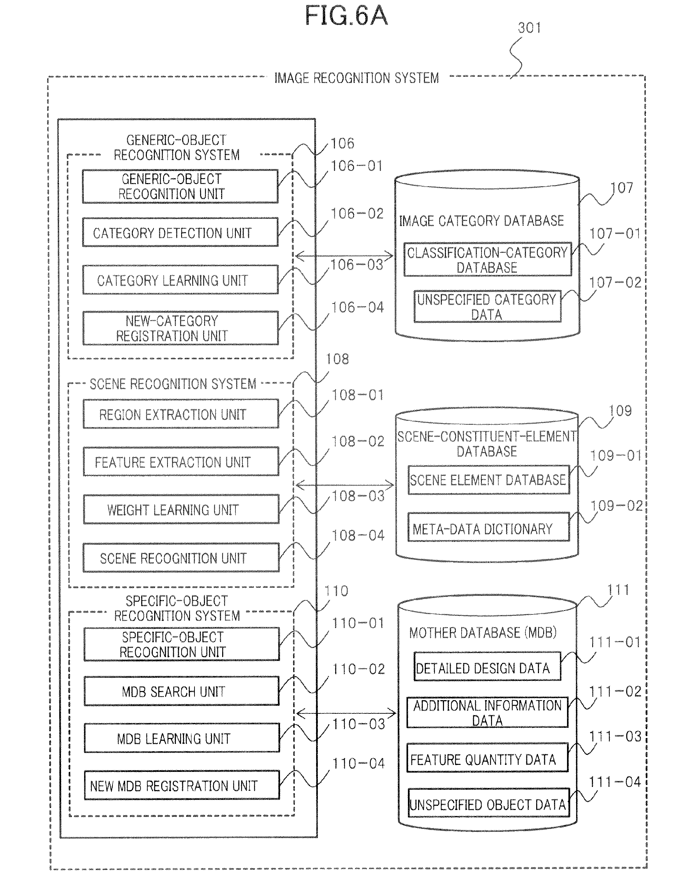

Subsequently, with reference to FIGS. 6A to 6E, function blocks of the image recognition system 301 according to an embodiment of the present invention will be explained. In the image recognition system, image recognition processing such as generic-object recognition, specific-object recognition, and scene recognition is performed on an image given by the headset system 200.

First, with reference to FIG. 6A, a configuration example of image recognition system 301 according to an embodiment of the present invention will be explained. The image recognition system 301 includes a generic-object recognition system 106, a scene recognition system 108, a specific-object recognition system 110, an image category database 107, a scene-constituent-element database 109, and a mother database (hereinafter abbreviated as MDB) 111. The generic-object recognition system 106 includes a generic-object recognition unit 106-01, a category detection unit 106-02, a category learning unit 106-03, and a new-category registration unit 106-04. The scene recognition system 108 includes a region extraction unit 108-01, a feature extraction unit 108-02, a weight learning unit 108-03, and a scene recognition unit 108-04. The specific-object recognition system 110 includes a specific-object recognition unit 110-01, an MDB search unit 110-02, an MDB learning unit 110-03, and a new MDB registration unit 110-04. The image category database 107 includes a classification-category database 107-01 and unspecified category data 107-02. The scene-constituent-element database 109 includes a scene element database 109-01 and a meta-data dictionary 109-02. The MDB 111 includes a detailed design data 111-01, an additional information data 111-02, a feature quantity data 111-03, and an unspecified object data 111-04. The function blocks of the image recognition system 301 are not necessarily limited thereto, but these representing functions will be briefly explained.

The generic-object recognition system 106 recognizes a generic name or a category of an object in the image. The category referred to herein is hierarchical, and even those recognized as the same generic object may be classified and recognized into further detailed categories (even the same "chair" may include those having four legs and those having no legs such as *zaisu* (legless chair)) and into further larger categories (a chair, a desk, and a chest of drawers may be all classified into the "furniture" catagory). The category recognition is "Classification" meaning this classification, i.e., a proposition of classifying objects in already known classes, and the category is also referred to as a class.

When, in the generic-object recognition process, an object in an input image and a reference object image are compared and collated, and, as a result, it is found that they are of the same shape or similar shape, or when it is found that they have an extremely similar feature and it is clear that their similarity is low in main features possessed by other categories, a general name meaning a corresponding already known category (class) is given to the recognized object. The database describing essential elements characterizing each of these categories in detail is the classification-category database 107-01. Objects that cannot be classified into none of them is temporarily classified as unspecified category data 107-02, and are prepared for new category registration or enlargement of range of definition of an already existing category in the future.

With the generic-object recognition unit 106-01, the local feature quantities are extracted from the feature points of the object in the received image, and the local feature quantities are compared as to whether they are similar or not to the description of predetermined feature quantities obtained by learning in advance, so that the process for determining whether the object is an already known generic object or not is performed.

With the category detection unit 106-02, which category (class) the object that can be recognized as a generic object belongs to is identified or estimated in collation with the classification-category database 107-01, and, as a result, when an additional feature quantity for adding or modifying the database in a particular category is found, the category learning unit 106-03 performs learning again, and then the description about the generic object is updated in the classification-category database 107-01. If the object once determined to be unspecified category data 107-02 is determined to be extremely similar to the feature quantities of another unspecified object of which feature quantities are separately detected, they are in the same unknown, newly found category of objects with a high degree of possibility. Accordingly, in the new-category registration unit 106-04, the feature quantities thereof are newly added to the classification-category database 107-01, and a new generic name is given to the above-mentioned object.

The scene recognition system 108 uses multiple feature extraction systems with different properties to detect characteristic image constituent elements dominating the entire or a portion of the input image, and looks them up with the scene element database 109-01 described in the scene-constituent-element database 109 in multi-dimensional space with each other, so that a pattern where each input element is detected in the above-mentioned particular scene is obtained by statistical processing, and whether the region dominating the entire image or a portion of the image is the above-mentioned particular scene or not is recognized. In addition, meta-data attached with the input image are collated with the image constituent elements described in the meta-data dictionary 109-02 registered in the scene-constituent-element database 109 in advance, and the accuracy of the scene detection can be further improved. The region extraction unit 108-01 divides the entire image into multiple regions as necessary, and this makes it possible to determine the scene for each region. For example, from surveillance cameras installed on the rooftop or wall surfaces of buildings in the urban space, you can overlook events and scenes, e.g., multiple scenes of crossings and many shops' entrances. The feature extraction unit 108-02 gives the weight learning unit 108-03 in a subsequent stage the recognition result obtained from various usable image feature quantities detected in the image region specified, such as local feature quantities of multiple feature points, color information, and the shape of the object, and obtains the probability of co-occurrence of each element in a particular scene. The probabilities are input into the scene recognition unit 108-04, so that ultimate scene determination on the input image is performed.

The specific-object recognition system 110 successively collates a feature of an object detected from the input image with the features of the specific objects stored in the MDB 111 in advance, and ultimately performs identification of the object. The total number of specific objects existing on earth is enormous, and it is almost impractical to perform collation with all the specific objects. Therefore, as explained later, in a prior stage of the specific-object recognition system, it is necessary to narrow down the category and search range of the object into a predetermined range in advance. The specific-object recognition unit 110-01 compares the local feature quantities at feature points detected in an image with the feature parameters in the MDB 111 obtained by learning, and determines, by statistical processing, as to which specific object the object corresponds to. The MDB 111 stores detailed data about the above-mentioned specific object that can be obtained at that moment. For example, in the case where these objects are industrial goods, basic information required for reconfiguring and manufacturing the object, such as the structure, the shape, the size, the arrangement drawing, the movable portions, the movable range, the weight, the rigidity, the finishing, and the like of the object extracted from, e.g., the design drawing and CAD data as the detailed design data 111-01, is stored to the MDB 111. The additional information data 111-02 holds various kinds of information about the object such as the name, the manufacturer, the part number, the date, the material, the composition, the processed information, and the like of the object. The feature quantity data 111-03 holds information about feature points and feature quantities of each object generated based on the design information. The unspecified object data 111-04 is temporarily stored to the MDB 111, to be prepared for future analysis, as data of unknown objects and the like which belong to none of the specific objects at that moment. The MDB search unit 110-02 provides the function of searching the detailed data corresponding to the above-mentioned specific object, and the MDB learning unit 110-03 adds/modifies the description concerning the above-mentioned object in the MDB 111 by means of adaptive and dynamic learning process. Regarding objects that are once determined to be unspecified object data 111-04 as unspecified objects, when objects having similar features are frequently detected thereafter, the new MDB registration unit 110-04 performs new registration processing to register the object as a new specific object.

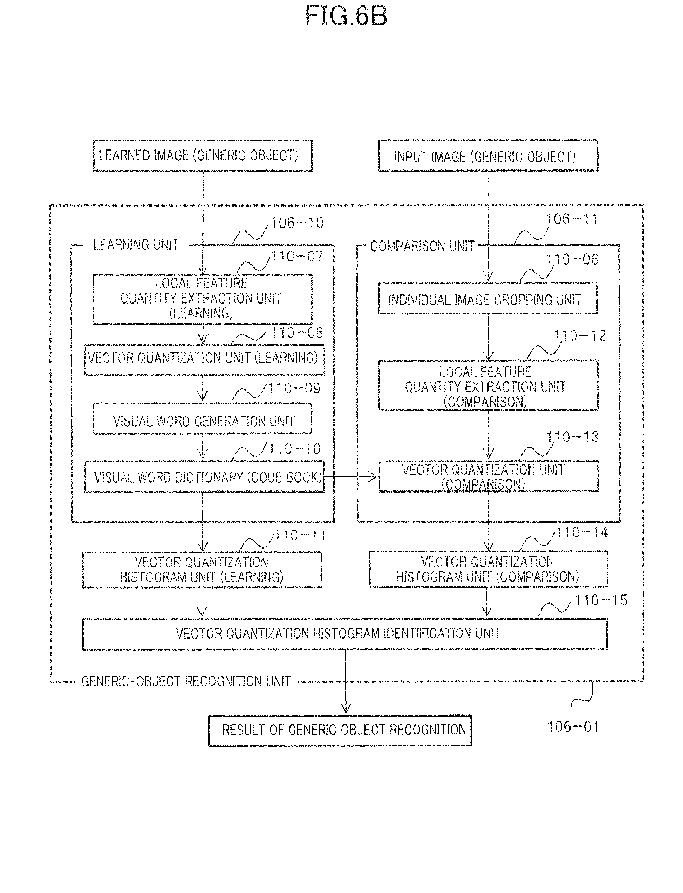

FIG. 6B illustrates an embodiment of system configuration and function blocks of the generic-object recognition unit 106-01 according to an embodiment of the present invention. The function blocks of the generic-object recognition unit 106-01 are not necessarily limited thereto, but generic-object recognition method where Bag-of-Features (hereinafter abbreviated as BoF) are applied as a typical feature extraction method will be hereinafter explained briefly. The generic-object recognition unit 106-01 includes a learning unit 106-10, a comparison unit 106-11, a vector quantization histogram unit (learning) 110-11, a vector quantization histogram unit (comparison) 110-14, and a vector quantization histogram identification unit 110-15. The learning unit 106-10 includes a local feature quantity extraction unit (learning) 110-07, a vector quantization unit (learning) 110-08, a Visual Word generation unit 110-09, and a Visual Word dictionary (Code Book) 110-10.

In the BoF, image feature points appearing in an image are extracted, and without using the relative positional relationship thereof, the entire object is represented as a set of multiple local feature quantities (Visual Words). They are compared and collated with the Visual Word dictionary (Code Book) 110-10 obtained from learning, so that a determination is made to which object is closest to the local feature quantities.

With reference to FIG. 6B, processing by the generic-object recognition unit 106-01 according to an embodiment of the present invention will be explained. The multi-dimensional feature vectors obtained by the local feature quantity extraction unit (learning) 110-07 constituting the learning unit 106-10 are divided as clusters into feature vectors of a certain number of dimensions by the subsequent vector quantization unit (learning) 110-08, and the Visual Word generating unit 110-09 generates Visual Word for each feature vector on the basis of centrobaric vector of each of them. Known clustering methods include k-means method and mean-shift method. The generated Visual Words are stored in the Visual Word dictionary (Code Book) 110-10, and local feature quantities extracted from the input image are collated with each other on the basis of the Visual Word dictionary (Code Book) 110-10, and the vector quantization unit (comparison) 110-13 performs vector quantization of each Visual Word. Thereafter, the vector quantization histogram unit (comparison) 110-14 generates a histogram for all the Visual Words.

The total number of bins of the above-mentioned histogram (the number of dimensions) is usually as many as several thousands to several tens of thousands, and there are many bins in the histogram that do not match the features depending on the input image, but on the other hand, there are bins that significantly match the features, and therefore normalization processing is performed to make the total value of all the bins in the histogram "1" (one) by treating them collectively. The obtained vector quantization histogram is input into the vector quantization histogram identification unit 110-15 at a subsequent stage, and for example, a Support Vector Machine (hereinafter referred to as SVM), which is a typical classifier, performs recognition processing to find the class to which the object belongs, i.e., what kind of generic object the above-mentioned target is. The recognition result obtained here can also be used as a learning process for the Visual Word dictionary. In addition, information obtained from other methods (use of meta-data and collective knowledge) can also be used as learning-feed-back for the Visual Word dictionary, and it is important to continue adaptive learning so as to describe the features of the same class in the most appropriate manner and maintain the separation from other classes.

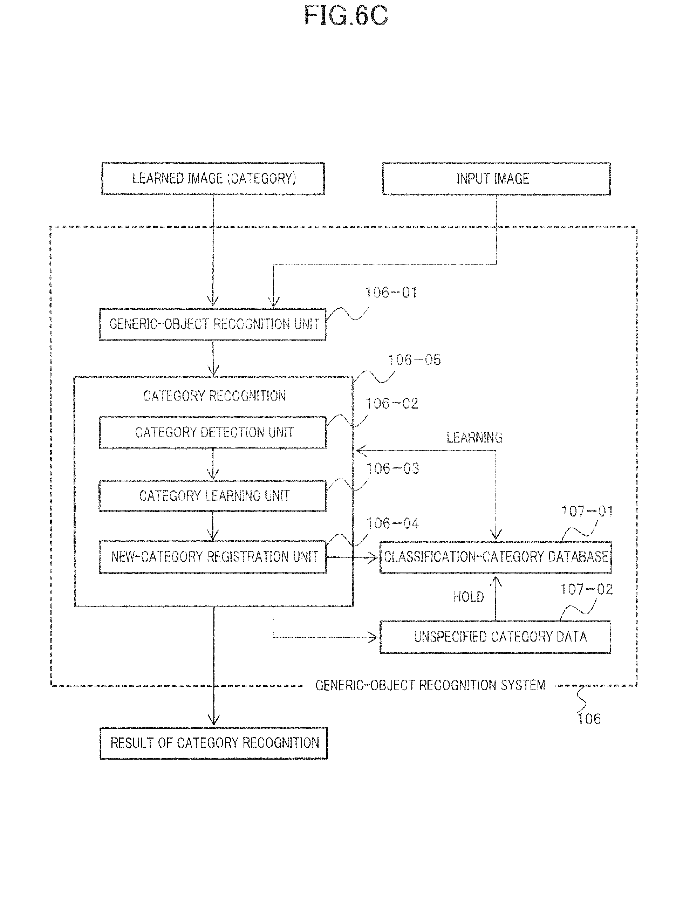

FIG. 6C is a schematic configuration block diagram illustrating the entire generic-object recognition system 106 including the generic-object recognition unit 106-01 according to an embodiment of the present invention. A generic object (class) belongs to various categories, and they have multiple hierarchical structures. For example, a person belongs to a higher category "mammal", and the mammal belongs to a still higher category "animal". A person may also be recognized in different categories such as the color of hair, the color of eye, and whether the person is an adult or a child. For such recognition/determination, the existence of the classification-category database 107-01 is indispensable. This is an integrated storage of the "knowledge" of the mankind, and upon learning and discover in the future, new "knowledge" is further added thereto, and it can continuously make progress. The classes identified by the generic-object recognition unit 106-01, which are almost as numerous as the number of all the nouns identified by mankind at present, are described in the above-mentioned classification-category database 107-01 as a various multi-dimensional and hierarchical structure. The generic object recognized by continuous learning is collated with the classification-category database 107-01, and the category detection unit 106-02 recognizes category to which it belongs. Thereafter, the above-mentioned recognition result is given to the category learning unit 106-03, and consistency within the description in the classification-category database 107-01 is checked. The object recognized as the generic object may often include more than one recognition result. For example, when recognized as "insect", new recognition/classification is possible based on, e.g., the structure of the eye and the number of limbs, presence or absence of an antenna, the entire skeletal structure and the size of the wings, and the color of the body and texture of the surface, and collation is performed on the basis of detailed description within the classification-category database 107-01. The category learning unit 106-03 adaptively performs addition/modification of the classification-category database 107-01 on the basis of the collation result as necessary. As a result, when classification into any of the existing categories is impossible, it may be a "new species of insect", and the new-category registration unit 106-04 registers the new object information to the classification-category database 107-01. On the other hand, an unknown object at that moment is temporarily stored to the classification-category database 107-01, to be prepared for future analysis and collation, as the unspecified category data 107-02.

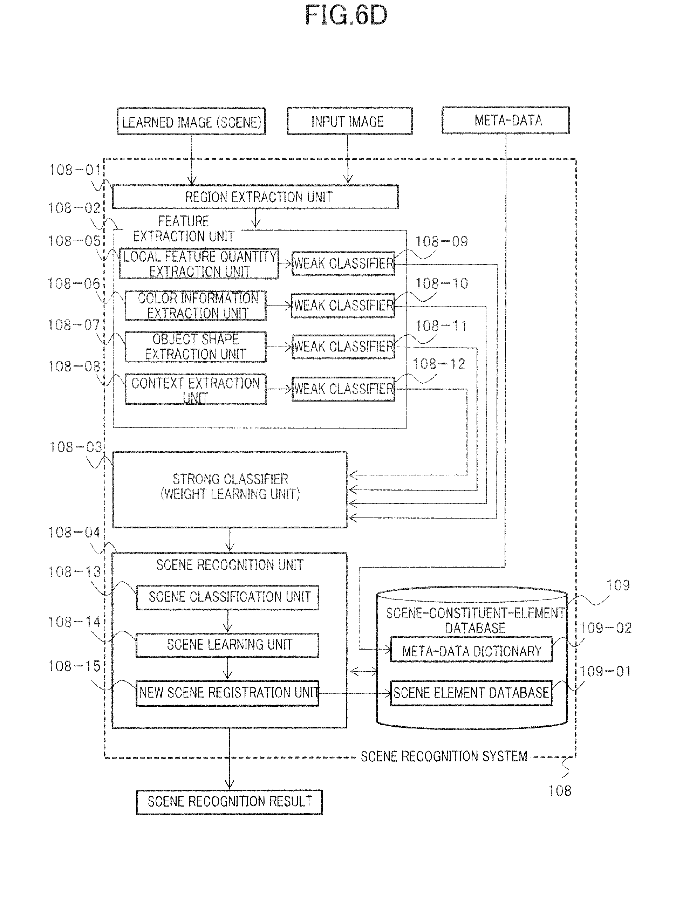

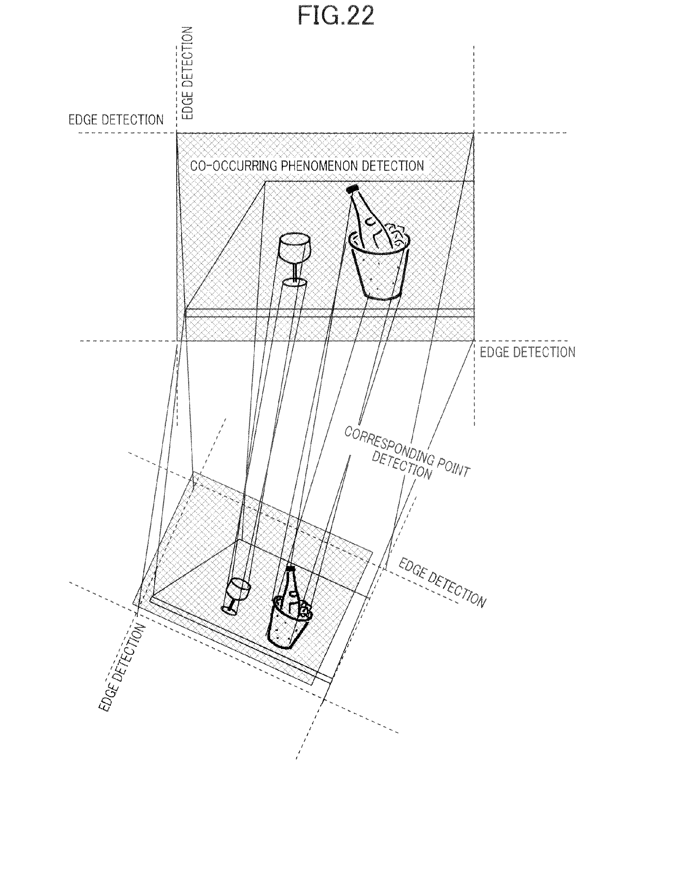

FIG. 6D illustrates, as a block diagram, a representing embodiment of the present invention of the scene recognition system 108 for recognizing and determining a scene included in an input image according to an embodiment of the present invention. In many cases, it is possible to recognize multiple objects from a learning image and an input image in general. For example, when not only regions representing "sky", "sun", "ground", and the like but also objects such as "tree", "grass", and "animal" can be recognized at one time, a determination as to whether they are in a "zoo" or a "African grassland" is made by doing estimating from the entire scenery and co-occurring relationship and the like with objects discovered other than that. For example, when cages, guideboards, and the like are found at a time and there are many visitors, the place may be a "zoo" with a high degree of possibility, but when the entire scale is large, and there are various animals on the grassland in a mixed manner in magnificent scenery such as "Kilimanjaro" at a distance, then this greatly increases the chance that the place is an "African grassland". In such a case, further recognizable objects, situations, co-occurring phenomenon, and the like need to be collated with the scene-constituent-element database 109 which is a knowledge database, and it may be necessary to make determination in a more comprehensive manner. For example, even when 90% of the entire screen is considered to indicate "African grassland", but when it is cropped with a rectangular frame and the entire frame is in a flat shape along with the procedure in the example described in FIG. 22 explained later, then it may be a poster of a picture with an extremely high degree of possibility.

The scene recognition system 108 includes a region extraction unit 108-01, a feature extraction unit 108-02, a strong classifier (weight learning unit) 108-03, a scene recognition unit 108-04, and a scene-constituent-element database 109. The feature extraction unit 108-02 includes a local feature quantity extraction unit 108-05, a color information extraction unit 108-06, an object shape extraction unit 108-07, a context extraction unit 108-08, and weak classifiers 108-09 to 108-12. The scene recognition unit 108-04 includes a scene classification unit 108-13, a scene learning unit 108-14, and a new scene registration unit 108-15. The scene-constituent-element database 109 includes a scene element database 109-01 and a meta-data dictionary 109-02.

The region extraction unit 108-01 performs region extraction concerning the target image in order to effectively extract features of the object in question without being affected by background and other objects. A known example of region extraction method includes Efficient Graph-Based Image Segmentation. The extracted object image is input into each of the local feature quantity extraction unit 108-05, the color information extraction unit 108-06, the object shape extraction unit 108-07, and the context extraction unit 108-08, and the feature quantities obtained from each of the extraction units are subjected to classification processing with the weak classifiers 108-09 to 108-12, and are made into a model in an integrated manner as a multi-dimensional feature quantities. The feature quantities made into the model is input into the strong classifier 108-03 having weighted learning function, and the result of the ultimate recognition determination for the object image is obtained. A typical example of weak classifiers is SVM, and a typical example of strong classifiers is AdaBoost.

In general, the input image often includes multiple objects and multiple categories that are superordinate concepts thereof, and a person can conceive of a particular scene and situation (context) from them at a glance. On the other hand, when a single object or a single category is presented, it is difficult to determine what kind of scene is represented by the input image from it alone. Usually, the situation and mutual relationship around the object and co-occurring relationship of each object and category (the probability of occurrence at the same time) have important meaning for determination of the scene. The objects and the categories of which image recognition is made possible in the previous item are subjected to collation processing on the basis of the occurrence probability of the constituent elements of each scene described in the scene element database 109-01, and the scene recognition unit 108-04 in a subsequent stage uses statistical method to determine what kind of scene is represented by such input image.

Information for making decision other than the above includes meta-data attached to the image, which can be useful information source. However, sometimes, for example, the meta-data themselves attached by a person may be incorrect assumption or clearly an error, or may be a metaphor that indirectly describes the image, thus the meta-data does not necessarily correctly represent the object and the category existing in the above-mentioned image. Even in such case, it is desired to make determination in a comprehensive manner in view of co-occurring phenomenon and the like concerning the above-mentioned target that can be extracted from the knowledge-information-processing server system having the image recognition system, and it is desired to finally perform recognition processing of the object and category. In some cases, multiple scenes can be obtained from one image. For example, an image may be the "sea in the summer" and at the same time it may be a "beach". In such case, multiple scene names are attached to the above-mentioned image. It is difficult to make determination, from only the image, as to which of "sea in the summer" and "beach" is more appropriate as the scene name that should be further attached to the image, and sometimes it is necessary to make final determination on the basis of a knowledge database (not shown) describing relationship between elements in view of co-occurring relationship and the like of the elements and the relationship with the situation before and after the image and with the entirety.

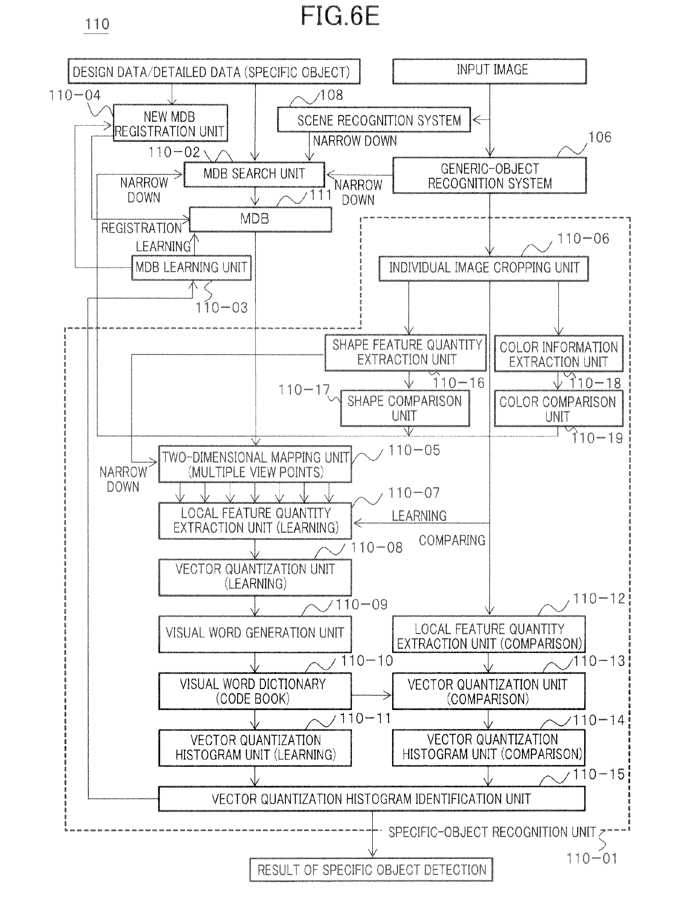

FIG. 6E illustrates an example of configuration and function blocks of the entire system of the specific-object recognition system 110 according to an embodiment of the present invention. The specific-object recognition system 110 includes the generic-object recognition system 106, the scene recognition system 108, the MDB 111, the specific-object recognition unit 110-01, the MDB search unit 110-02, the MDB learning unit 110-03, and the new MDB registration unit 110-04. The specific-object recognition unit 110-01 includes a two-dimensional mapping unit 110-05, an individual image cropping unit 110-06, the local feature quantity extraction unit (learning) 110-07, the vector quantization unit (learning) 110-08, the Visual Word generation unit 110-09, the Visual Word dictionary (Code Book) 110-10, the vector quantization histogram unit (learning) 110-11, a local feature quantity extraction unit (comparison) 110-12, the vector quantization unit (comparison) 110-13, the vector quantization histogram unit (comparison) 110-14, the vector quantization histogram identification unit 110-15, the shape feature quantity extraction unit 110-16, a shape comparison unit 110-17, a color information extraction unit 110-18, and a color comparison unit 110-19.

When the generic-object recognition system 106 can recognize the class (category) to which the target object belongs, it is possible to start a process for narrowing-down, i.e., whether the object can also be further recognized as a specific object or not. Unless the class is somewhat identified, there is no choice but to perform searching from among enormous number of specific objects, and it cannot be said to be practical in terms of time and the cost. In the narrow-down process, it is effective not only to narrow-down the classes by the generic-object recognition system 106 but also to narrow-down the targets from the recognition result of the scene recognition system 108. This enables further narrow-down using the feature quantities obtained from the specific-object recognition system 110, and moreover, when unique identification information (such as product name, particular trademark, logo, and the like) can be recognized in a portion of the object, or when useful meta-data and the like are attached in advance, further pinpoint narrowing-down is enabled.

From among several possibilities thus narrowed down, the MDB search unit 110-02 successively retrieves detailed data and design data concerning multiple object candidates from the MDB 111, and a matching process with the input image is performed on the basis thereon. Even when the object is not an industrial good or detailed design data does not exist, a certain level of specific-object recognition can be performed by collating, in details, each of detectable image features and image feature quantities as long as there is a picture and the like. However, in the case where the input image and the comparing image look the same, and in some cases, even if they are the same, each of them may be recognized as a different object. On the other hand, when the object is an industrial good, and a detailed database such as CAD is usable, for example, highly accurate feature quantity matching can be performed by causing the two-dimensional mapping unit 110-05 to visualize (render) three-dimensional data in the MDB 111 into a two-dimensional image in accordance with how the input image appears. In this case, when the two-dimensional mapping unit 110-05 performs the rendering processing to produce the two-dimensional images by mapping in all view point directions, then this may cause unnecessary increase in the calculation cost and the calculating time, and therefore, narrow-down processing is required in accordance with how the input image appears. On the other hand, various kinds of feature quantities obtained from highly accurate data using the MDB 111 can be obtained in advance by learning process.

In the specific-object recognition unit 110-01, the local feature quantity extraction unit 110-07 detects the local feature quantities of the object, and the vector quantization unit (learning) 110-08 separates each local feature quantity into multiple similar features, and thereafter, the Visual Word generation unit 110-09 converts them into a multi-dimensional feature quantity set, which is registered to the Visual Word dictionary 110-10. The above is continuously performed until sufficiently high recognition accuracy can be obtained for many learning images. When the learning image is, for example, a picture or the like, it will be inevitably affected by, e.g., noise and lack of resolution of the image, occlusion, and influence caused by objects other than the target, but when the MDB 111 is adopted as basis, feature extraction of the target image can be performed in an ideal state on the basis of noiseless highly-accurate data. Therefore, a recognition system with greatly improved extraction/separation accuracy can be made as compared with a conventional method. From the input image, a region concerning a specific object in question is cropped by the individual image cropping unit 110-06, and thereafter, the local feature quantity extraction unit (comparison) 110-12 calculates local feature points and feature quantities, and using the Visual Word dictionary 110-10 prepared by learning in advance, the vector quantization unit (comparison) 110-13 performs vector quantization for each of the feature quantities. Thereafter, the vector quantization histogram unit (comparison) 110-14 extracts them into multi-dimensional feature quantities, and the vector quantization histogram identification unit 110-15 identifies and determines whether the object is the same as, similar to, or neither the same as nor similar to the object that had already been learned. SVM (Support Vector Machine) is widely known as an example of classifier, but not only the SVM but also AdaBoost and the like enabling weighting of the identification/determination in the process of learning are widely used as effective classifiers. These identification results can also be used for feedback loop of the addition of a new item or addition/correction of the MDB itself through the MDB learning unit 110-03. When the target is still unconfirmed, it is held in the new MDB registration unit 110-04 to be prepared for resume of subsequent analysis.

In order to further improve the detection accuracy, it is effective to use not only the local feature quantities but also the shape features of the object. The object cropped from the input image is input into the shape comparison unit 110-17 by way of the shape feature quantity extraction unit 110-16, in which the object is identified using the shape features of each portion of the object. The identification result is given to the MDB search unit 110-02 as feedback, and accordingly, the narrow-down processing of the MDB 111 can be performed. A known example of shape feature quantity extraction means includes HoG (Histograms of Oriented Gradients) and the like. The shape feature is also useful for the purpose of greatly reducing the rendering processing from many view point directions in order to obtain two-dimensional mapping using the MDB 111.

The color feature and the texture (surface processing) of the object are also useful for the purpose of increasing the image recognition accuracy. The cropped input image is input into the color information extraction unit 110-18, and the color comparison unit 110-19 extracts color information, the texture, or the like of the object, and the result thereof is given to the MDB search unit 110-02 as a feedback, so that the MDB 111 can perform further narrow-down processing. With the above series of processes, the specific-object recognition processing can be performed in a more effective manner.

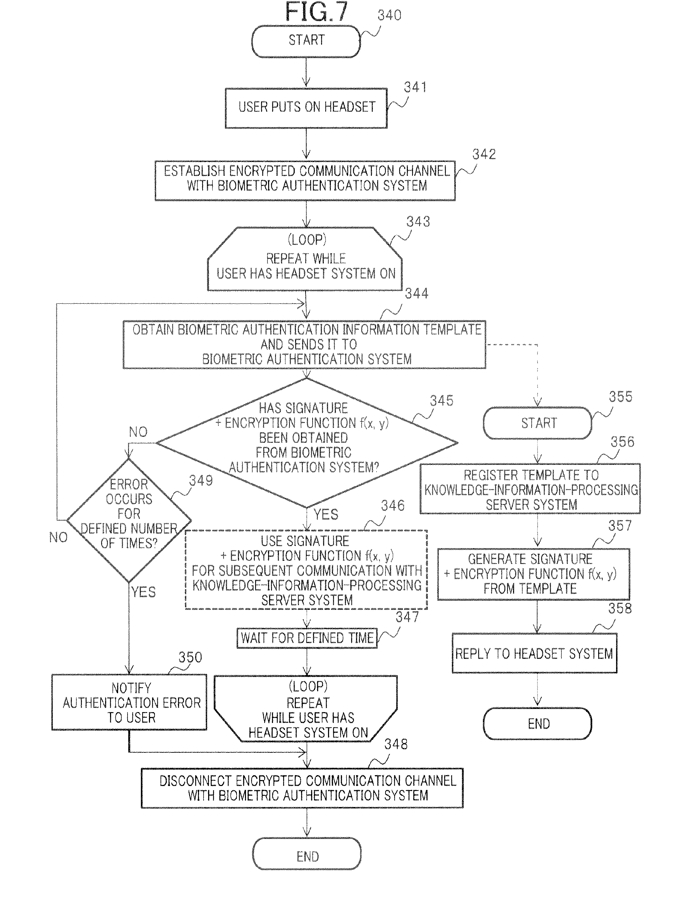

Subsequently, with reference to FIG. 7, a procedure 340 of the biometric authentication unit 302 according to an embodiment of the present invention will be explained. When the user puts on the headset system 200 (341), the following biometric authentication processing is started. When biometric authentication information corresponding to each user and individual information of each user's profile and the like are exchanged in communication between the user and the knowledge-information-processing server system, it is indispensable to have strong protection against fraudulent activities such as retrieval and tampering of data during the communication. Accordingly, first, a strongly secure encrypted communication channel is established with the biometric authentication system (342). In this case, technology such as SSL (Secure Sockets Layer) and TLS (Transport Layer Security) (for example, http://www.openssl.org/) can be used, but other similar encryption methods may be introduced. Subsequently, biometric authentication information 345 is obtained from a biometric authentication sensor 204 provided with the headset system. The biometric authentication information may be vein pattern information and the like in the outer ear or the eardrum of the user wearing the headset system. Alternatively, the biometric authentication information may include those selected therefrom in combination, and the biometric authentication information is not limited thereto. The biometric authentication information is sent to the biometric authentication system as a template. Step 355 of FIG. 7 explains processing at the biometric authentication system. In step 356, the above-mentioned template is registered as the user to the knowledge-information-processing server system 300. In step 357, signature + encryption function f (x, y) are generated from the above-mentioned template, and in step 358, the function is given back to the above-mentioned headset system. In this case, "x" in the function f (x, y) denotes data that are signed and encrypted, and "y" in the function f (x, y) denotes biometric authentication information used for signature and encryption. In determination 345, a confirmation is done so as to find whether the function has been obtained. In a case of YES, the function is used for communication between the above-mentioned headset system and the knowledge-information-processing server system (346). When the determination 345 is NO, another determination is made as to whether the determination 345 is NO for the number of times defined (349), and when the determination 345 is YES, authentication error is notified to the user (350). When the above-mentioned determination 349 is NO, the processing is repeated from step 344. Thereafter, in step (347), the biometric authentication unit 302 waits for a period of time defined, and repeats the loop (343). When the user removes the above-mentioned headset system, or the authentication error occurs, the encrypted communication channel with the biometric authentication system is disconnected (348).

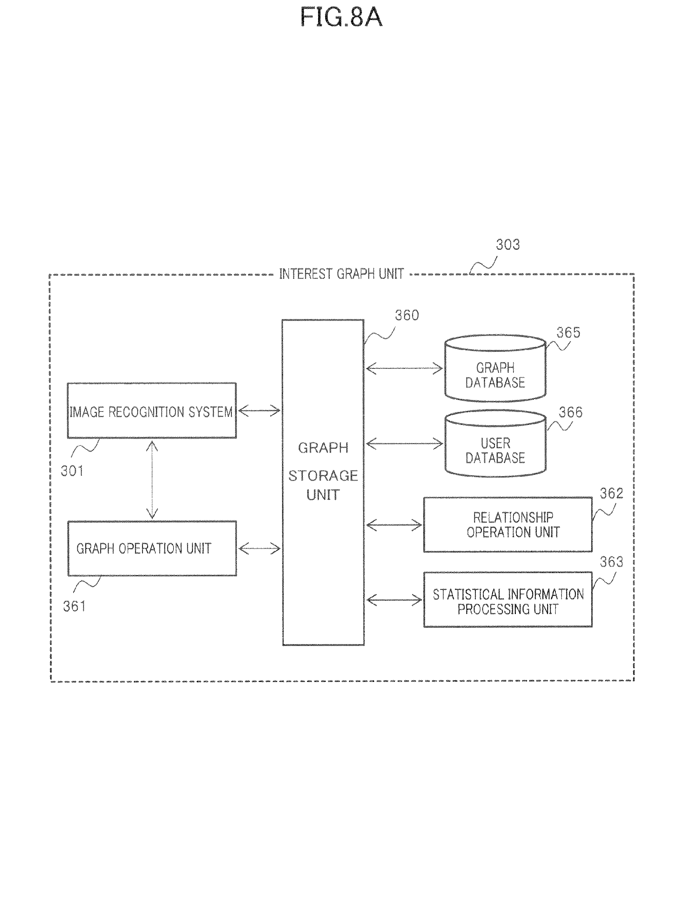

FIG. 8A illustrates a configuration example of the interest graph unit 303 according to an embodiment of the present invention. In the present embodiment, the access to the graph database 365 is drawn as a direct access to the graph database 365 and the user database 366, but in the actual implementation, for the purpose of increasing the speed of the interest graph application processing concerning the user who uses the system, the graph storage unit 360 can selectively read only a required portion from among the graph structure data stored in the graph database 365 to a high-speed memory of itself, and the user database 366 can selectively read partial information required with regard to the user described in the user database 366, and then those can cache them internally.

The graph operation unit 361 extracts a subgraph from the graph storage unit 360 or operates an interest graph concerning the user. With regard to relationship between nodes, for example, the relationship operation unit 362 extracts the n-th connection node (n > 1), performs a filtering processing, and generates/destroys links between nodes. The statistical information processing unit 363 processes the nodes and link data in the graph database as statistical information, and finds new relationship. For example, when information distance between a certain subgraph and another subgraph is close, and a similar subgraph can be classified in the same cluster, then the new subgraph can be determined to be included in the cluster with a high degree of possibility.

The user database 366 is a database holding information about the above-mentioned user, and is used by the biometric authentication unit 302. In the present invention, a graph structure around a node corresponding to the user in the user database is treated as an interest graph of the user.

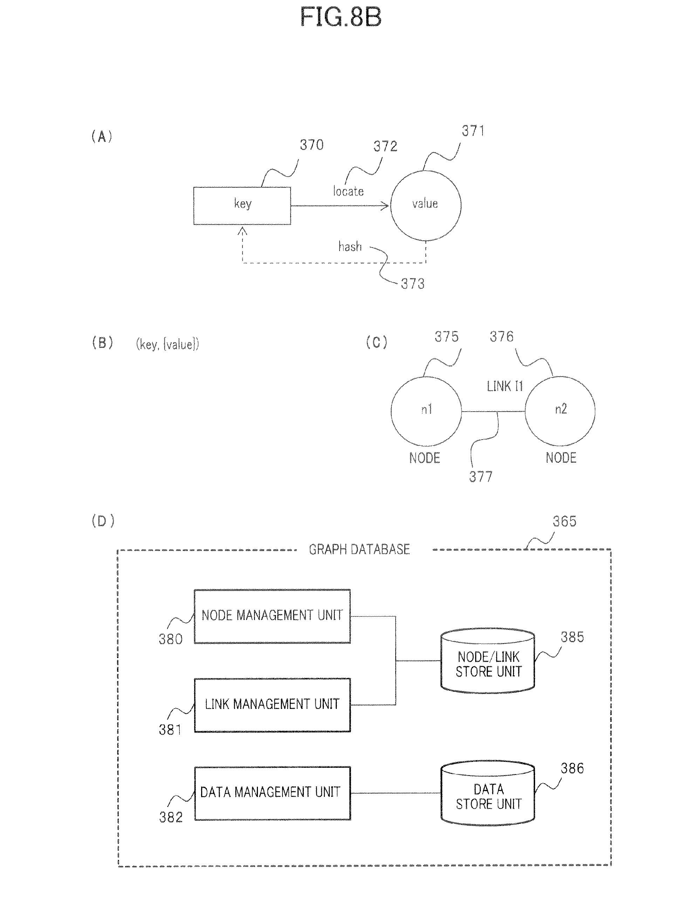

With reference to FIG. 8B, the graph database (365) according to an embodiment of the present invention will be explained. FIG. 8B (A) is a basic access method for the graph database (365). A value (371) is obtained from a key (370) by locate operation (372). The key (370) is derived by calculating a value (373) with a hash function. For example, when SHA-1 algorithm is adopted as the hash function, the key (370) has a length of 160 bits. Locate operation (372) may adopt Distributed Hash Table method. As illustrated in FIG. 8B (B), in the present invention, the relationship between the key and the value is represented as (key, {value}), and is adopted as a unit of storage to the graph database.

For example, as illustrated in FIG. 8B (C), when two nodes are linked, a node n1 (375) is represented as (n1, {node n1}), and a node n2 (376) is represented as (n2, {node n2}). The symbols n1 and n2 are the keys of the node n1 (375) and the node n2 (376), respectively, and the keys are obtained by performing hash calculations of the node entity n1 (375) and the node entity n2 (376), respectively. On the other hand, like the node, a link 11 (377) is represented as (11, {n1, n2}), and the key (11) 377 is obtained by performing a hash calculation of {n1, n2}.

FIG. 8B (D) is an example of constituent elements of the graph database. The node management unit 380 manages the nodes, and the link management unit 381 manages the links, and each of them is recorded to the node/link store unit 385. The data management unit 382 manages the data related to a node in order to record the data to the data store unit 386.

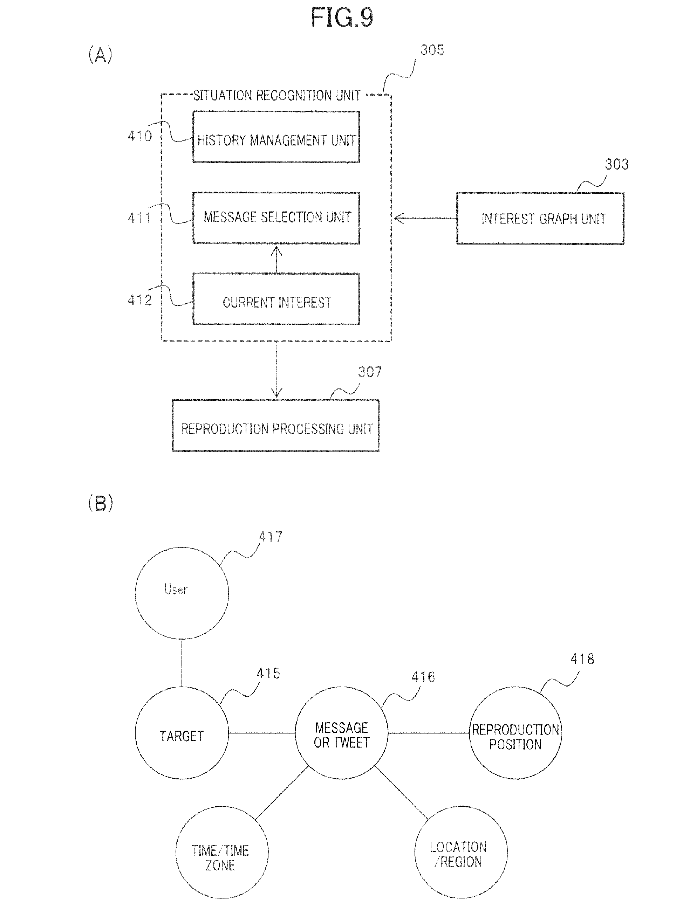

With reference to FIG. 9, a configuration example of situation recognition unit 305 according to an embodiment of the present invention will be explained. The history management unit 410 in FIG. 9 (A) manages usage history in the network communication system 100 for each user. For example, attention given to a target can be left as a footprint. Alternatively, in order to avoid repeatedly playing the same message and tweet, the history management unit 410 records the position up to which play-back has occurred. Alternatively, when play-back of a message or tweet is interrupted, the history management unit 410 records the position where the above-mentioned play-back was interrupted. This recorded position is used for resuming the play-back later. For example, as an embodiment thereof, FIG. 9 (B) illustrates a portion of the graph structure recorded to the graph database 365. A user (417) node, a target (415) node, and a message or tweet (416) node are connected with each other via links. By linking the node (416) with a node (418) recording the play-back position, the play-back of the message and tweet related to the target (415) to which the user (417) gives attention is resumed from the play-back position recorded in the node (418). It should be noted that the usage history according to the present embodiment is not limited to these methods, and other methods that are expected to achieve the same effects may also be used.

A message selection unit 411 is managed for each user, and when a target to which the user gives attention is recorded with multiple messages or tweets, an appropriate message or tweet is selected. For example, the messages or tweets may be played in the order of recording time. It may be possible to selectively select and play a topic in which the user is greatly interested from the interest graph concerning the user. The messages or tweets specifically indicating the user may be played with a higher degree of priority. In the present embodiment, the selecting procedure of the message or tweet is not limited thereto.

A current interest(s) 412 is managed and stored for each user, as nodes representing current interest of the user in the interest graph unit 303. The message selecting unit searches the graph structure from the nodes corresponding to the user's current interest within the current interest(s), thus selecting nodes which the user is highly interested in at the above moment and adopting it as an input element of the conversation engine 430 explained later, and converts them into a series of sentences and plays the series of sentences.

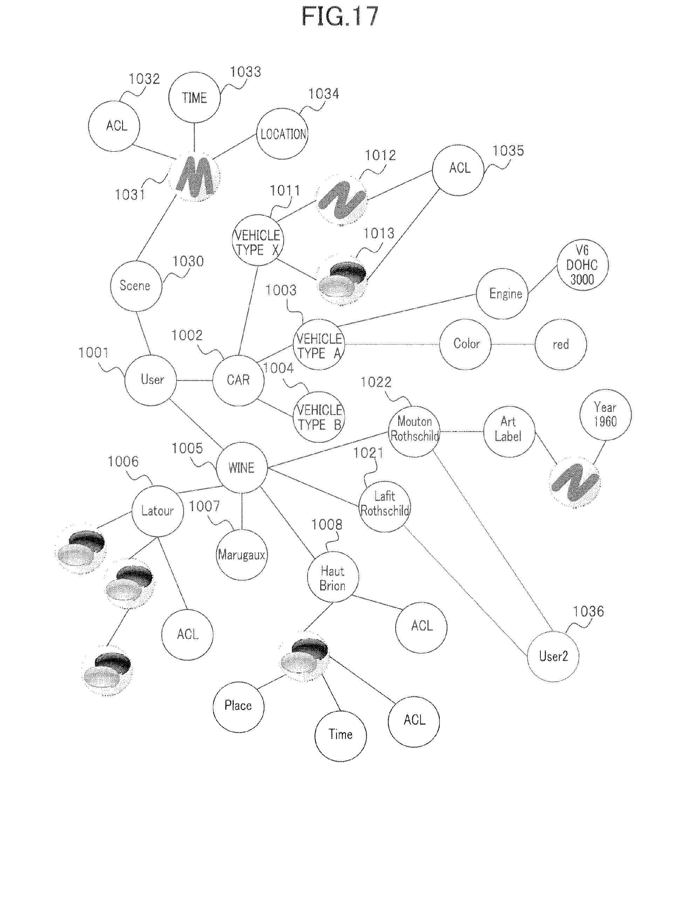

The target in which the user is interested and the degree of the user's interests are, for example, obtained from the graph structure in FIG. 17 explained later. In FIG. 17, a user (1001) node has links to a node (1005) and a node (1002). More specifically, the links indicate that the user is interested in "wine" and "car". Which of "wine" and "car" the user is more interested in may be determined by comparing the graph structure connected from the node "wine" and the graph structure connected from the node "car," and determining that the user is more interested in the one having higher number of nodes. Alternatively, from the attention-given history related to the node, it may be determined such that the user is more interested in the one to which the user gives attention for a higher number of times. Still alternatively, the user himself/herself may indicate the degree of interest. However, the method of determination is not limited thereto.

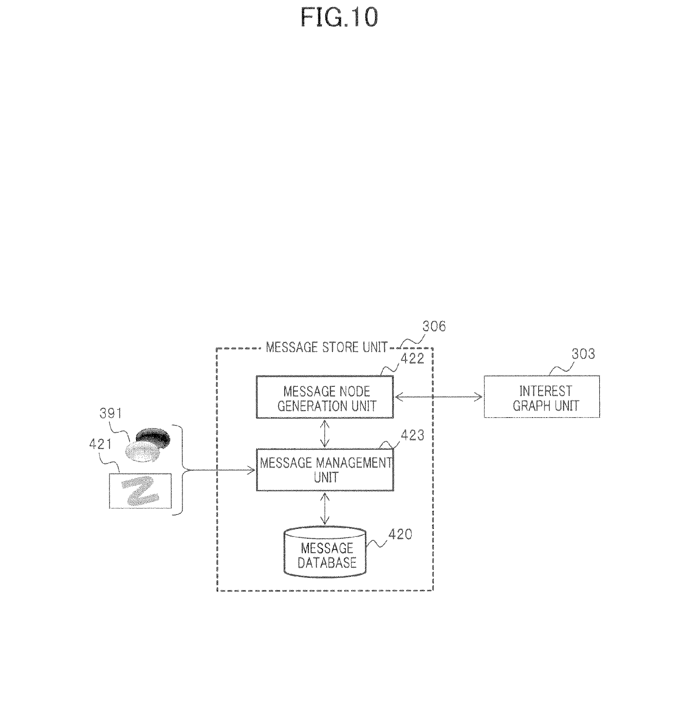

With reference to FIG. 10, the message store unit 306 according to an embodiment of the present invention will be explained. A message or tweet 391 spoken by the user and/or an image 421 taken by the headset system 200 are recorded by the above-mentioned message store unit to a message database 420. A message node generation unit 422 obtains information serving as the target of the message or tweet from the interest graph unit 303, and generates a message node. A message management unit 423 records the message or tweet to the graph database 365 by associating the message or tweet with the above-mentioned message node. Likewise, the image 421 taken by the headset system may be recorded to graph database 365. A similar service on the network may be used to record the message or tweet by way of the network.

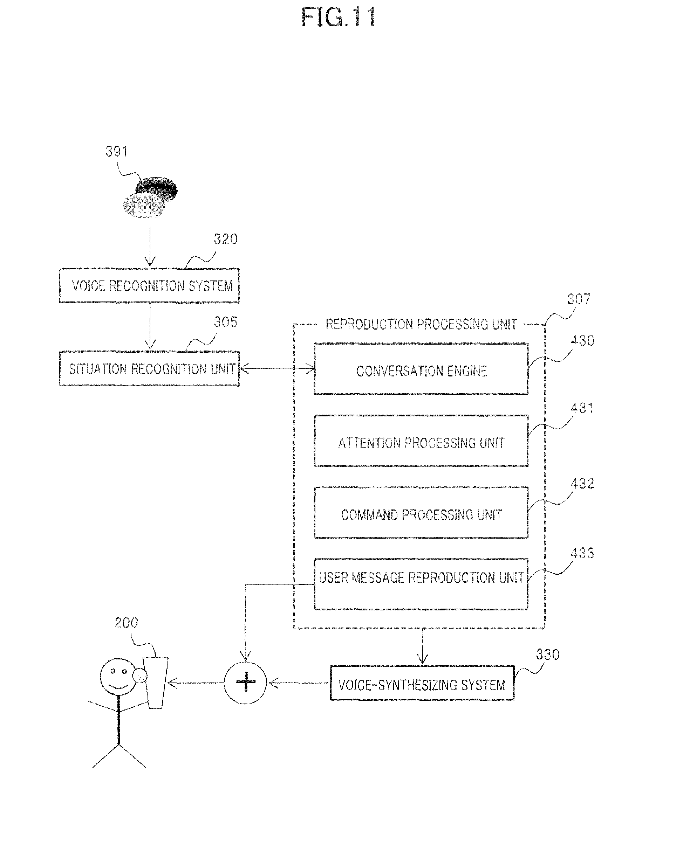

With reference to FIG. 11, the reproduction processing unit 307 according to an embodiment of the present invention will be explained. The user's utterance including the user's message or tweet 391 is subjected to recognition processing by the voice recognition system 320, and is converted into a single or multiple strings of words. The string of words is given a situation identifier by the situation recognition unit 304 such as "is the user giving attention to some target?", "is the user specifying time-space information?", "or is the user speaking to some target?", and is transmitted to the conversation engine 430, which is a constituent element of the reproduction processing unit 307. It should be noted that the identifier serving as the output of the situation recognition unit 304 is not limited to each of the above situations, and may be configured with a method that does not rely on the above-mentioned identifier.

The reproduction processing unit 307 includes the conversation engine 430, an attention processing unit 431, a command processing unit 432, and a user message reproduction unit 433, but the reproduction processing unit 307 may selectively include some of them, or may be configured upon adding a new function, and is not limited to the above-mentioned configuration. The attention processing unit works when the situation recognition unit gives it an identifier that indicates that the user is giving attention to a target, and it performs the series of processing described in FIG. 3A. The user message reproduction unit reproduces the message or tweet left in the target and/or related image.

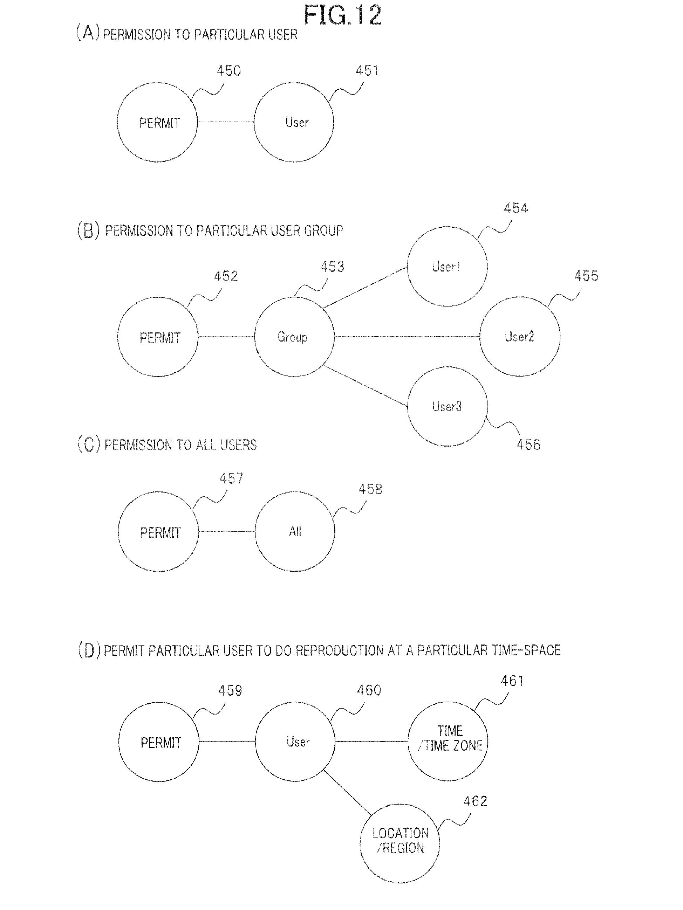

With reference to FIG. 12, the user management unit 308 according to an embodiment of the present invention will be explained. The user management unit manages the ACL (access control list) of the users with access-granted as a graph structure. For example, FIG. 12 (A) indicates that the user (451) node of the person has link with a permission (450) node. Accordingly, the above-mentioned user is given the permission for nodes linked with the above-mentioned permission node. When the above-mentioned node is a message or tweet, the message or tweet can be reproduced.

FIG. 12 (B) is an example where permission is given to a particular user group. This indicates that a permission (452) node gives permission, in a collective manner, to a user 1 (454) node, a user 2 (455) node, and a user 3 (456) node, which is linked to a user group (453) node. FIG. 12 (C) is an example where a permission (457) node is given to all the user's (458) nodes in a collective manner.

Further, FIG. 12 (D) illustrates a permission (459) node given to a particular user (460) node with only a particular time or time zone (461) node and a particular location/region (462) node.

In the present embodiment, the ALC may be configured to have the configuration other than FIG. 12. For example, a non-permission node may be introduced to be configured such that a user who is not given permission is clearly indicated. Alternatively, the permission node may be further divided into details, and a reproduction permission node and a recording permission node may be introduced, so that the mode of permission is changed in accordance with whether a message or tweet is reproduced or recorded.

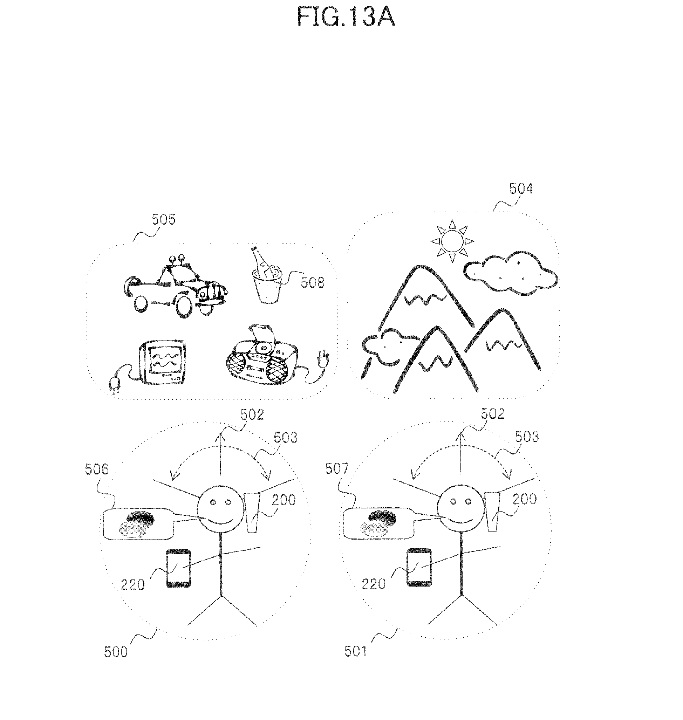

With FIG. 13A, an example of the use case scenario will be explained in which a user who uses a network communication system 100 according to an embodiment of the present invention is focused on.

In the present invention, the shooting range of the camera provided in the headset system 200 worn by the user is called a visual field 503, and a direction in which the user is mainly looking at is called the subjective visual field of the user: subjective vision 502 of the user. The user wears the network terminal 220, and the user's utterance (506 or 507) is picked up by the microphone 201 incorporated into the headset system, and the user's utterance (506 or 507) as well as the video taken by the camera 203 incorporated into the headset system reflecting the user's subjective vision are uploaded to the knowledge-information-processing server system 300. The knowledge-information-processing server system can reply with voice information, video/character information, and the like to the earphones 202 incorporated into the headset system or the network terminal 220.

In FIG. 13A, a user 500 is seeing a group of objects 505, and a user 501 is seeing a scene 504. For example, with regard to the user 500, a group of objects 505 is captured in the visual field 503 of the camera of the user in accordance with the procedure described in FIG. 3A, and the image is uploaded to the knowledge-information-processing server system 300. The image recognition system 301 extracts a specific object and/or a generic object that can be recognized therefrom. At this moment, the image recognition system cannot determine what the user 500 is giving attention to, and therefore, the user 500 uses voice to perform a pointing operation to give attention to the target, such as by saying "upper right" or "wine", whereby the image recognition system is notified that the user is giving attention to the current object 508. At this occasion, the knowledge-information-processing server system can notify an inquiry for reconfirmation, including co-occurring phenomena that are not explicitly indicated by the user, such as "is it wine in an ice pale?", by voice to the headset system 200 of the user 500. When the reconfirmation notification is different from what the user is thinking of, it may be possible to allow a process for asking re-detection of the attention-given target all over again by issuing the user's additional target selection command to the server system as an utterance, such as "different". Alternatively, the user may directly specify or modify attention-given target using a GUI on the network terminal.

For example, the user 501 is looking at a scene 504, but when a camera image reflecting the user's subjective visual field 503 is uploaded to the knowledge-information-processing server system having the image recognition engine, the image recognition system incorporated into the server system presumes that the target scene 504 may possibly be a "scenery of a mountain". The user 501 makes his/her own message or tweet with regard to the scene by speaking, for example, "this is a mountain which makes me feel nostalgic" by voice, so that, by way of the headset system 200 of the user, the message or tweet as well as the camera video are recorded to the server system. When another user thereafter encounters the same or similar scene within a different time-space, the tweet "this is a mountain which makes me feel nostalgic" made by the user 501 can be sent to the user from the server system via the network as voice information. Like this example, even when, e.g., the scenery itself and the location thereof that are actually seen are different, this can promote user communication with regard to shared experiences concerning common impressive scenes such as "sunsets" that are imagined by everyone.

In accordance with the condition set by a user based on user's voice command or direct operation with the network terminal 220, a message or tweet which the user 500 or the user 501 left with regard to a particular target can be selectively left for only a particular user, or only a particular user group, or all users.

In accordance with the condition set by a user based on user's voice command or direct operation with the network terminal 220, a message or tweet which the user 500 or the user 501 left with regard to a particular target can be selectively left for a particular time, or time zone and/or a particular location, particular region and/or a particular user, a particular user group, or all the users.

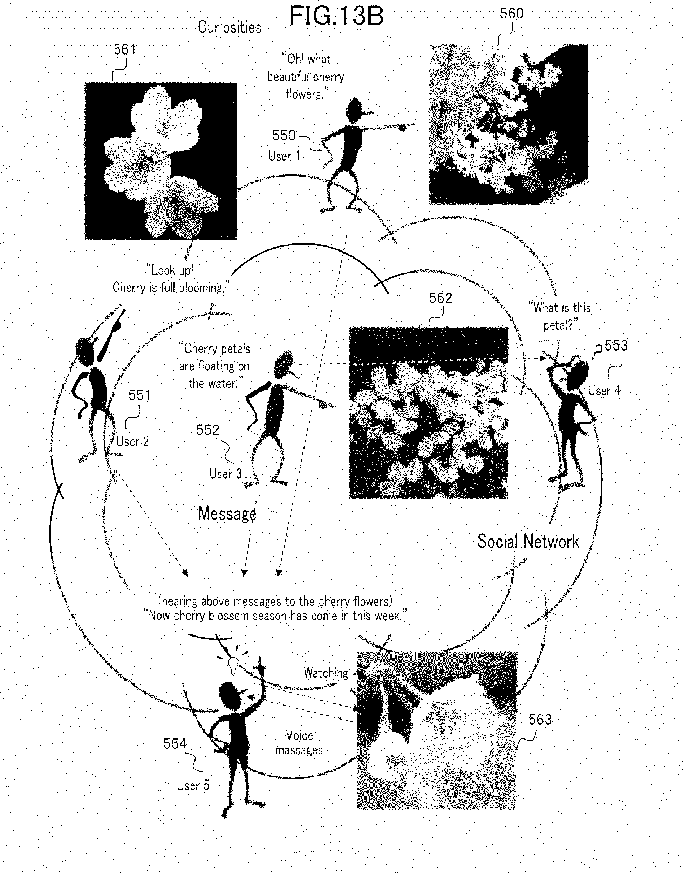

With reference to FIG. 13B, an example of a network communication induced by visual curiosity about a common target derived from the use case scenario will be explained. The network communication induced by visual curiosity is explained based on a case where multiple users view "cherry blossoms" in different situations in different time-space. A user 1 (550) who sees cherry blossoms (560) by chance sends a tweet "beautiful cherry blossoms", and in another time-space, a user 2 (551) tweets "cherry blossoms are in full bloom" (561). On the other hand, in this scene, a user 4 (553) having seen petals flowing on the water surface at a different location tweets "are they petals of cherry blossoms?". At this occasion, if a user 3 (552) sees petals of cherry blossoms flying down onto the surface of the river (562) and tweets "hana-ikada (flower rafts)", then this tweet can be delivered as the tweet of the user 3 to the user 4 seeing the same "hana-ikada (flower rafts)". Further, it can also be sent to a user 5 (554) viewing cherry blossoms at another location by chance, as the tweets from the user 1 to the user 4 who are viewing "cherry blossoms" at a different location at the same season, and as a result, the user 5 will think, "Oh, it is the best time to view cherry blossoms this week," and can feel arrival of spring at every location while seeing cherry blossoms in front of him/her. As shown in this example, among multiple users existing in different time-spaces who may see similar targets or scenes by chance, extensive shared network communication originating from the common visual interest can be induced.

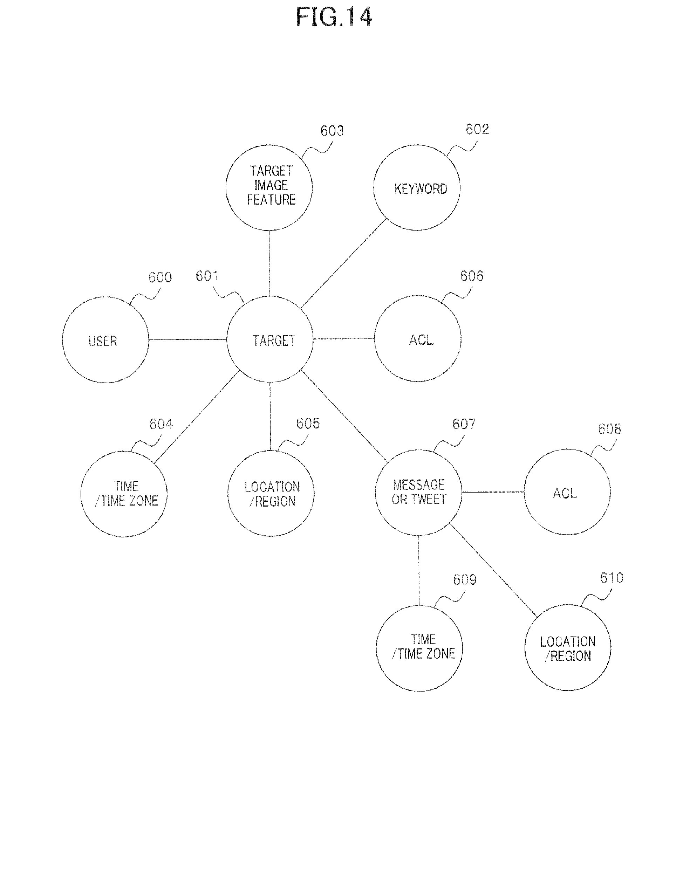

FIG. 14 explains relationship of permission between elements using link structure according to an embodiment of the present invention, in which a user, target, a keyword, a time, a time zone, a location, a region, a message or tweet and/or video including an attention-given target, and a particular user, a particular user group, or the entire users are nodes. In the present embodiment, all these relationships are expressed as a graph structure, and are recorded to a graph database 365. All the relationships are expressed using the graph structure including nodes and the links therebetween, and therefore, it is possible to essentially avoid unfeasible requirements of, e.g., incorporating the relationships and relevance between nodes and existence of all the nodes in advance when a relational database (table structure) or the like is adopted. Among the nodes, some of them have a property of a structure that changes and grows as time passes, and therefore, it is almost impossible to predict and design the entire structure in advance.

In the basic form as illustrated in FIG. 14, a target 601 is linked to each of the nodes, i.e., a user (600) node, a keyword (602) node, a target image feature (603) node, a time/time zone (604) node, a location/region (605) node, and a message or tweet 607. The target 601 is linked with an ACL (606). An ACL (608) node, a time/time zone (609) node, and a location/region (610) node are linked to a message or tweet (607) node. More specifically, FIG. 14 is a data structure in which the ALC gives permission to the target to which the user gives attention, the time/time zone thereof, the location/region thereof, the related keyword which is extracted in the process of the procedure 30-01 described in FIG. 3A and/or extracted by the statistical information processing unit 363 and/or extracted by the conversation engine 430 explained later, and the user's message or tweet which is left for attention-given target. Alternatively, the graph structure in FIG. 14 may be configured such that adding or deleting a node may record information not limited to ACL, the time/time zone, and the location/region.

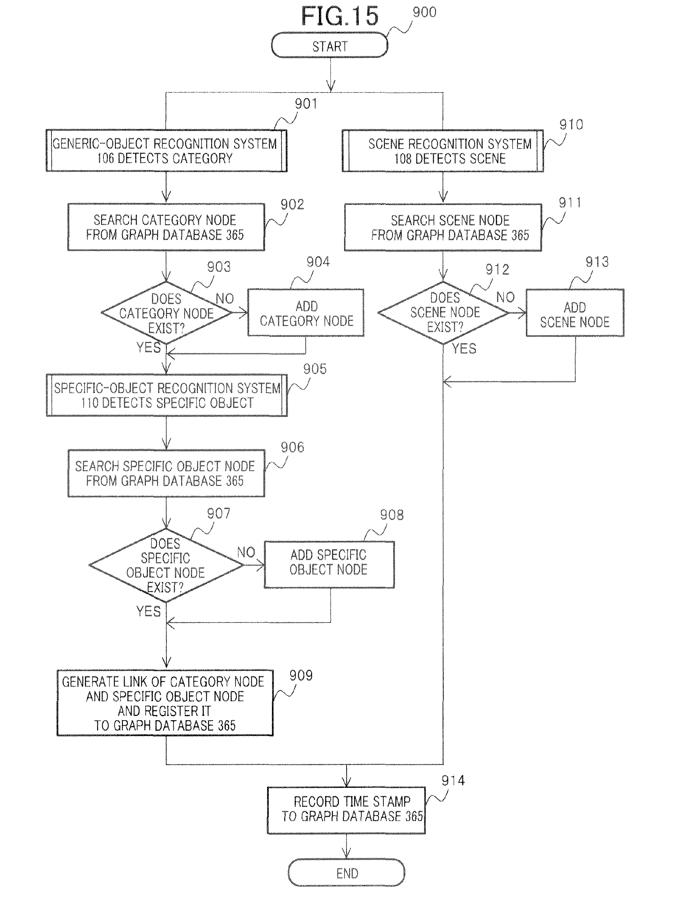

With reference to FIG. 15, an extraction process of graph structure with the generic-object recognition system 106, the specific-object recognition system 110, and the scene recognition system 108 according to an embodiment of the present invention will be explained. First, a category to which the target belongs is detected by the generic-object recognition system 106 (901). Subsequently, a category node is searched for within the graph database 365 (902), and a confirmation is made as to whether the category exists in the graph database 365 (903). If it does not exist therein, a new category node is added and recorded to the graph database (904). Subsequently, a specific object is detected by the specific-object recognition system 110 (905), and a confirmation is made as to whether it already exists in the graph database (907). If it does not exist therein, the new specific object node is added (908), and it is recorded to the graph database (909). In the other path, a scene is detected by the scene recognition system 108 (910), a scene node is searched for within the graph database 365 (911), and it is determined whether the scene exists in the graph database or not (912). If it does not exist therein, a node for the scene is generated and added to the graph database (913). When the series of processing is finished, timestamp information at which the category node, the specific object node, or the scene node is processed is additionally recorded to the graph database (914), and the processing is terminated.

Generation of new nodes for registration to the graph database 365 as described in FIG. 15 explained above may be performed during the user's reconfirmation processing as described in FIG. 3A. In the reconfirmation processing, the string of words extracted by voice recognition system and various kinds of features extracted by the knowledge-information-processing server system having the image recognition system can be associated with each other. For example, when, with regard to a taxi 50 shown in FIG. 4A, the server system asks the user to make confirmation by voice, i.e., "is it a red bus?", as a result of image recognition result of the target 51, and the user answers "no, it is a yellow taxi". Then, the server system performs repeated additional image feature extraction processing, thus finally recognizing the taxi 50, and issues reconfirmation to the user by voice, i.e., "a yellow taxi at the left side is detected", and the user replies "yes" in response to the reconfirmation. As a result, all the features detected with regard to the taxi 50 as well as the nodes of the word "taxi" and "yellow" confirmed by the user can be registered to the graph database 365 as related nodes for the view (scene) in question.

In addition, the timestamp linked to the category node, the specific object node, or the scene node described in FIG. 15 can be associated with the user. In this case, the above attention-given history of the user can be structured as a subgraph of the obtained interest graph. Accordingly, this makes it possible to look up the knowledge-information-processing server system 300 having the image recognition system via the GUI on the network terminal 220 or the user's voice to find the user's attention-given target in the particular time-space at which the user gives attention to the target and the situation concerning other nodes associated therewith. As a result, the server system can notify various states concerning attention-given target in the particular time-space that can be derived from the subgraph of the obtained interest graph to the user as voice, character, picture, figure information, and the like.

Further, in the above attention-given history, the graph database 365 can accumulate, as the graph structure, not only the specific object, generic object, person, picture, or the name of the scene which can be recognized with collaborative operation with the image recognition system 301 but also the image information of the target, the user information, and the time-space information that performed the operation. Therefore, the above attention-given history can also be structured so as to allow direct look-up and analysis of the graph structure.

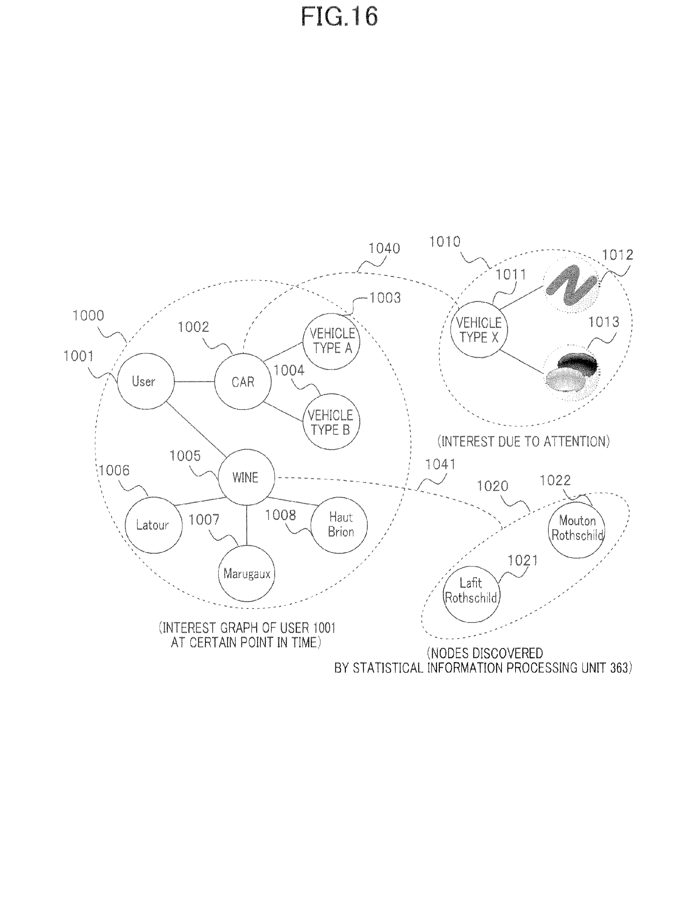

With reference to FIG. 16, acquisition of the interest graph performed by the knowledge-information-processing server system 300 having the image recognition system according to an embodiment of the present invention will be explained. The graph structure (1000) is an interest graph of a user (1001) node at a certain point of time. The user is interested in a vehicle type A (1003) node and a vehicle type B

(1004) node as specific objects, and they belong to a category "car" (1002) node. The user is also interested in three target (specific objects 1006 to 1008) nodes, which belong to wine (1005) node. Subsequently, suppose that the user gives attention to a target vehicle type X (1011) node. Suppose that an image (1012) node and another user's message or tweet (1013) node are linked to the target vehicle type X (1011) node. The server system generates a link (1040) connecting the graph structure (1010) including the target vehicle type X (1011) node to the car (1002) node. On the other hand, the statistical information processing unit 363 calculates, for example, co-occurring probability, and when three wine (1006 to 1008) nodes are linked in the wine (1005) node in the figure, two wine (1021 to 1022) nodes in the enclosure 1020 may be likewise linked with a high degree of possibility. Accordingly, the server system can suggest the enclosure (1020) to the user. As a result, when the user shows interest in the enclosure (1020), a link (1041) for directly connecting the two wine (1021 to 1022) nodes in the enclosure 1020 to the wine (1005) node is generated, whereby the interest graph concerning the user (1001) can be continuously grown.

FIG. 17 illustrates a snapshot example of graph structure which a user (1001) node is center, when the interest graph described in FIG. 16 explained above is further grown. The figure expresses the following state. The user (1001) node is interested in not only the car (1002) node and the wine (1005) node but also a particular scene (1030) node. In the car (1002) node, the user is particularly interested in, as specific objects, the following nodes: the vehicle type A (1003), the vehicle type B (1004), and the vehicle type X (1011). In the wine (1005) node, the user is particularly interested in the following five wine (1006, 1007, 1008, 1021, and 1022) nodes. The particular scene (1030) node is a scene represented by an image (1031) node, and it is taken at a particular location (1034) node at a particular time (1033) node, and only users listed in ACL (1032) node are allowed to reproduce it. The vehicle type X (1011) node is expressed as the image (1012) node, and the message or tweet (1013) node of various kinds of users is left, and only the user group listed in ACL (1035) node is allowed to reproduce it. The vehicle type A has the specification of the engine and the color described therein. Likewise, similar attributes are described with regard to five types of wine (1006, 1007, 1008, 1021, and 1022) nodes. It should be noted that some of these nodes may be directly connected from another user 2 (1036).

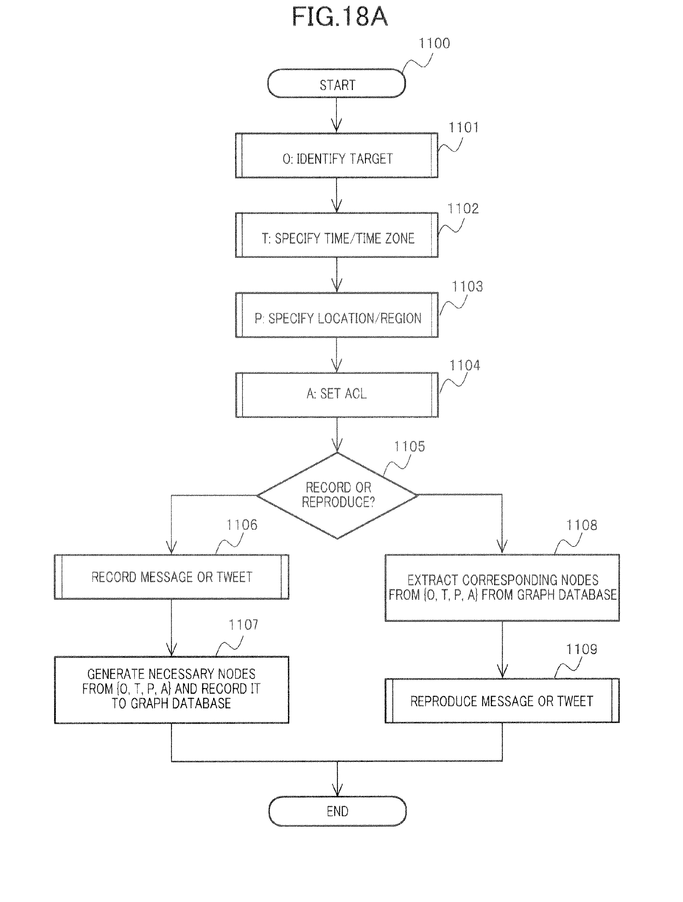

With reference to FIG. 18A, means of recording or means of reproducing user's message or tweet as voice according to an embodiment of the present invention will be explained. First, the user identifies a target according to a procedure described in FIG. 3A, and binds it to a variable O (1101). Subsequently, the time at which the message or tweet is recorded or a time/time zone at which it can be reproduced is specified and bound to a variable T (1102), and a location where the message or tweet is recorded or a location/region where it can be reproduced is specified and bound to a variable P (1103). Subsequently, a recipient who can receive the message or tweet is specified (ACL), and is bound to a variable A. Then, a selection is made as to whether to perform recording or reproduction (1105). In the recording processing, a recording procedure of the message or tweet is performed (1106). Thereafter, necessary nodes are generated from the four variables (O, T, P, A), and are recorded to the graph database 365 (1107). When the selection (1105) is reproduction processing, nodes corresponding to the four variables (O, T, P, A) is extracted from the graph database 365 (1108), and a procedure is performed to reproduce the message or tweet left in the node (1109), and then the series of processing is terminated.

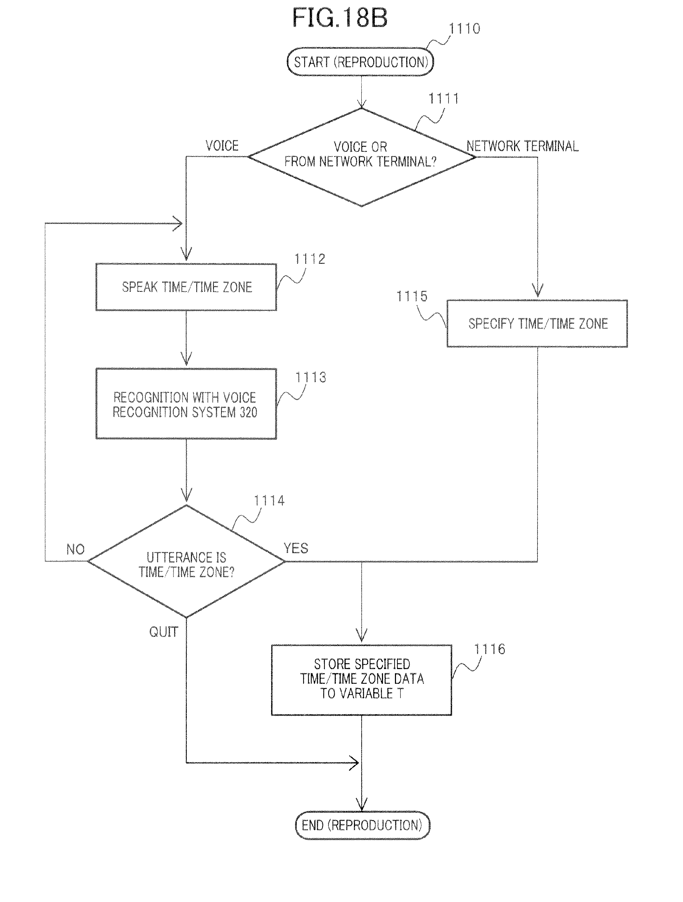

FIG. 18B explains step 1102 during reproduction in FIG. 18A in more details. The user selects whether to specify a time/time zone by voice or to directly specify a time/time zone using the GUI on the network terminal 220 (1111). When the user makes selection by utterance, the user speaks a time/time zone (1112), and it is subjected to recognition processing by voice recognition system 320 (1113). A confirmation is made as to whether the result is a time/time zone (1114), and when the result is correct, the specified time/time zone data are stored to the variable T (1116). When different, speaking of the time/time zone (1112) is performed again. When the processing is terminated (QUIT), it is terminated by utterance. On the other hand, when the time/time zone is specified using the GUI of the network terminal (1115), the entered time/time zone is directly stored to the variable T (1116), and the series of processing is terminated.

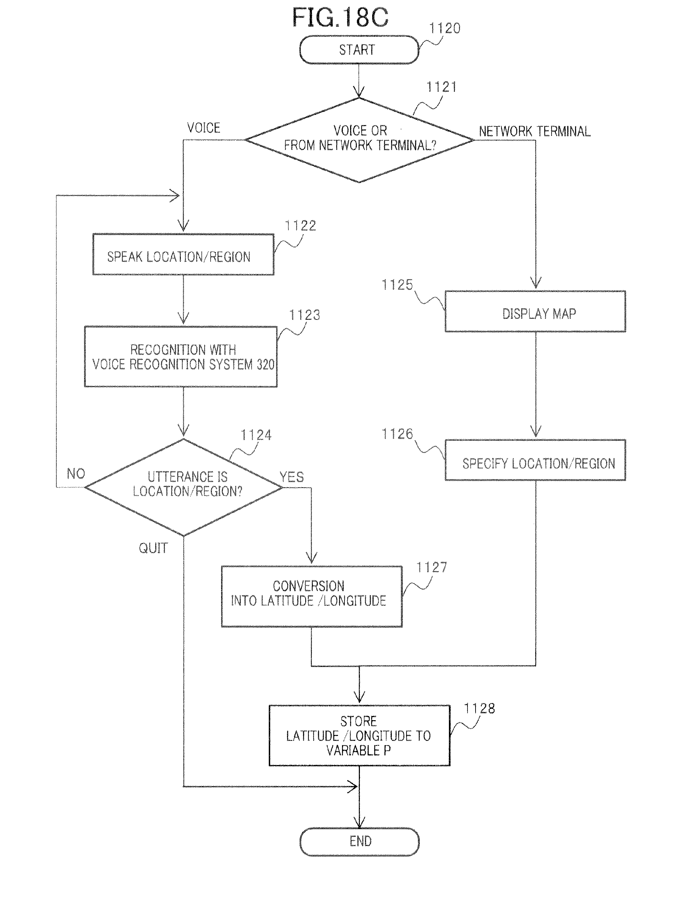

FIG. 18C explains step 1103 during reproduction in FIG. 18A in more detail. In step 1121, the user selects whether to specify a location/region by voice or to directly specify a location/region using the GUI on the network terminal 220. When the user makes selection by utterance, the user speaks a location/region (1122), and it is subjected to voice recognition processing by voice recognition system 320 (1123). Confirmation is made as to whether the result is the location/region spoken (1124), and when the result is correct, it is converted into latitude/longitude data (1127) and stored to the variable P (1128). When different, a location/region is spoken again (1122). When the processing is terminated (QUIT), it is terminated by utterance. On the other hand, when a map is displayed with the GUI of the network terminal (1125), and a location/region is directly specified on the screen of the network terminal (1126), the latitude/longitude data are stored to the variable P, and the series of processing is terminated (1128).

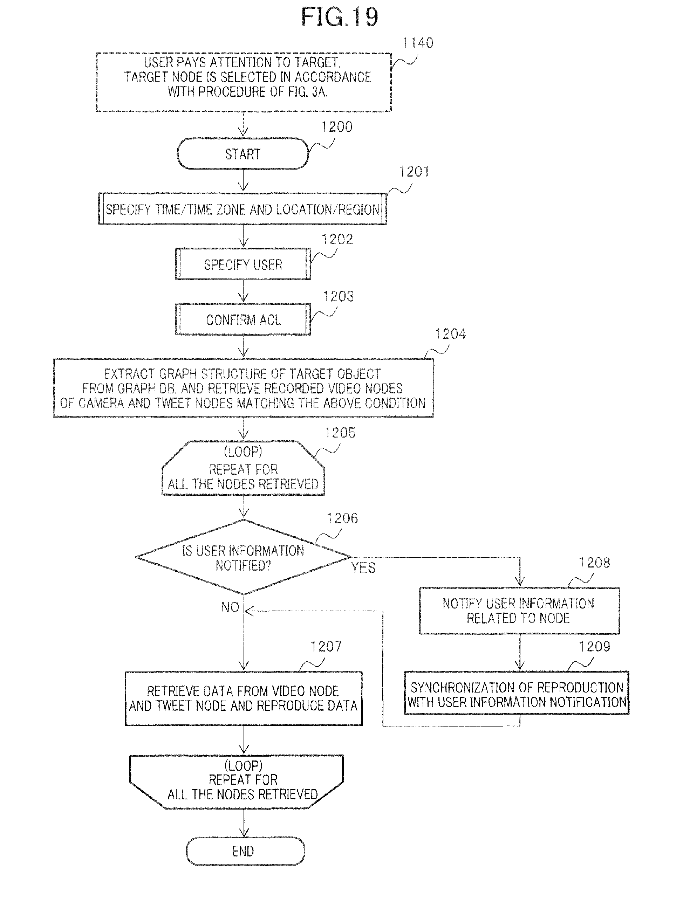

With reference to FIG. 19, a procedure for performing narrow-down and reproduction, by allowing a recipient target to specify, from among multiple messages or tweets left for a particular target, the time or time zone at which the message or tweet is left and/or the location or region where it is left and/or the name of the user who left it, will be explained according to an embodiment of the present invention. As a prior condition for the explanation, suppose that the user who is the recipient target gives attention to the target in accordance with the procedure described in FIG. 3A, and nodes serving as a corresponding target are selected in advance (1140).

First, the time/time zone and the location/region which are desired to be reproduced with regard to the target is specified in accordance with the procedure as described in FIG. 18B and FIG. 18C (1201). Subsequently, a message or tweet left by whom is reproduced is specified (1202). Subsequently, ACL is confirmed (1203), and data are retrieved from a node corresponding to the message or tweet matching the specified condition and/or a node corresponding to the video (1204). At this stage, multiple nodes may be retrieved, and therefore, in such case, the following processing is repeatedly applied to all such nodes (1205).

Subsequently, selection is made as to whether information about the user who left the message or tweet is to be notified to the user who is the recipient (1206). When it is to be notified, information of the user who left the message or tweet related to the node is obtained from the graph database 365. Using the reproduction processing unit 307 as described in FIG. 11, it is notified by voice and/or text to the headset system 200 worn by the recipient user or the network terminal 220 associated with the recipient user (1208). When the notification is voice, it is reproduced with the earphones incorporated into the headset system, and when it is text, a picture and/or a figure, such information other than voice is displayed on the network terminal in synchronization with the message or tweet (1209). When the user information is not to be notified, the message or tweet is retrieved from the voice node and/or corresponding image data are retrieved from the video node, and using the reproduction processing unit 307, it is transmitted as voice and/or image information, without the information of the user who left the message or tweet, to the network terminal 220 associated with the recipient user and/or the headset system 200 worn by the recipient user (1207). The series of processing is repeated on all the retrieved nodes, and then is terminated.

In the embodiment, all the nodes retrieved in the loop (1205) are repeatedly processed, but other means may also be used. For example, using the situation recognition unit 305, a message or tweet appropriate for the recipient user may be selected, and only the message or tweet and/or both of the message or tweet and the attached video information may be reproduced. In the above explanation about the specification of the time/time zone and the location/region (1201), the example of the particular time/time zone and the location/region is explained in order to receive a message or tweet recorded in the past and the image information on which the message or tweet is based by going back to the time-space in the past, but a future time/time zone and location/region may be specified. In such case, in the future time-space thus specified, the message or tweet and the video information on which the message or tweet is based on can be delivered while carried in a "time capsule".

In synchronization with reproduction of the message or tweet, detailed information about the attention-given target may be displayed on the network terminal. Further, to the target outside of the subjective visual field of the user, the knowledge-information-processing server system having the image recognition system may be configured to give, as voice information, the recipient user commands such as a command for moving the head to the target for which the message or tweet is left or a command for moving in the direction where the target exists, and when, as a result, the recipient user sees the target in the subjective visual field of the user, the knowledge-information-processing server system having the image recognition system may reproduce the message or tweet left for the target. Other means with which similar effects can be obtained may also be used.

As described above, when a message or tweet is reproduced, the history management unit 410 which is a constituent element of the situation recognition unit records the reproduction position at that occasion to the corresponding node, and therefore, when the recipient user gives attention to the same target again, it is possible to perform reception from a subsequent part or upon adding messages or tweets thereafter updated, without repeating the same message or tweet as before.

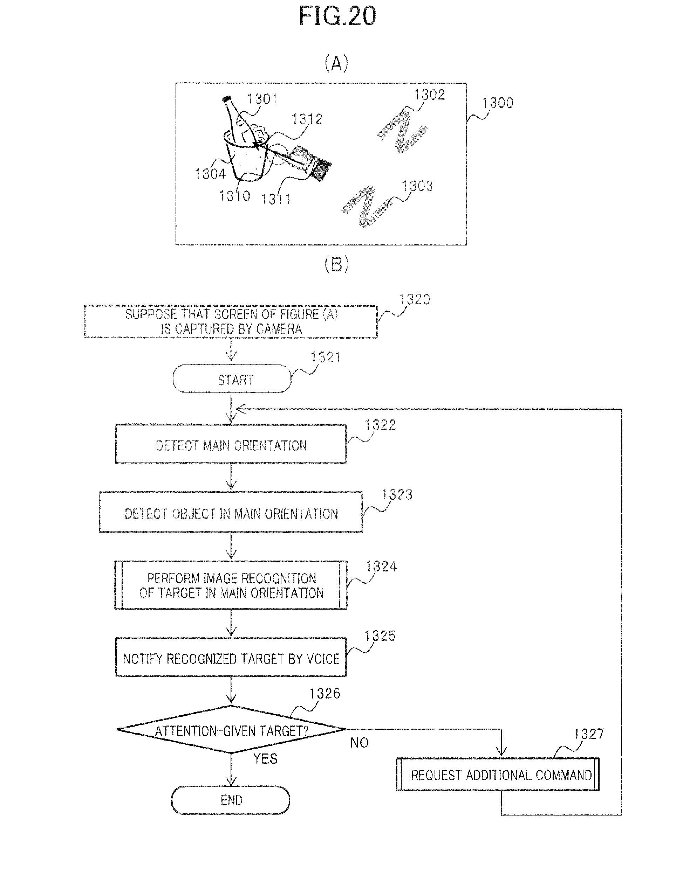

Subsequently, with reference to FIG. 20, an embodiment will be explained as a method for explicitly notifying the knowledge-information-processing server system that the user is giving attention to a certain target in front of him/her by making use of the image recognition system. In the embodiment, without relying on a voice command of the user, the user directly points to the attention-given target with a hand/finger or directly touches the target with a hand/finger, so that, on the basis of the image information obtained from the camera video incorporated into the headset system of the user, the image recognition system analyzes the image in real time, and identifies the attention-given target.

FIG. 20 (A) is an example of a subjective vision (1300) of a user. In this case, a bottle of wine (1301), an ice pale (1304), and two objects (1302, 1303) other than those are detected. It expresses a situation in which the user directly points to the wine with a finger of the hand (1310) in order to explicitly notify the server system that the user is giving attention to the wine (1301) on the left. The user can also directly touch the attention-given target, i.e., the wine (1301). Instead of pointing with a finger, it may be possible to use a stick-like tool which exists nearby to point to it, or directly emit the light ray of a laser pointer and the like toward the target.

FIG. 20 (B) explains a pointing procedure of a target with the finger of hand (1310). As prior condition, the screen of FIG. 20 (A) is considered to be a video given by a camera that reflects the subjective visual field of the user. First, from the screen, a user's hand (1311) including the finger of hand (1310) is detected. The above-mentioned camera video is subjected to image analysis by the image recognition system, and a main orientation (1312) is obtained from the shape features of the finger of hand (1310) and the hand (1311) detected therefrom, and the direction pointed with the finger of hand (1310) is extracted. The detection of the orientation (1312) may be performed locally by the image recognition engine 224 incorporated into the network terminal 220.

When the orientation is detected (1322), the target pointed by the user may exist on the vector line with a high degree of possibility. Subsequently, from the image of FIG. 20 (A), the object existing on the vector line is detected with collaborative operation with the image recognition system 301 (1323), and the image recognition processing of the target object is performed (1324). The above-mentioned image detection and recognition processing can be performed with the recognition engine 224 which is an element of the user's network terminal 220, and this can greatly reduce the load in the network. The user can perform high-speed tracking with less latency (time delay) even for quick pointing operations. The final image recognition result is determined by sending inquiry to the knowledge-information-processing server system having the image recognition system 300 via the network, and the user is notified of the name of the recognition target and the like (1325). When the image recognition result of the pointing target is what the user wants, the pointing processing is terminated (1325), and when the result is different from what the user wants, an additional command request is issued (1327), and step (1322) is performed again, so that the pointing operation is continued. Likewise, when the user does not explicitly confirm pointing of the attention-given target, it is possible to configure to set in advance whether to repeat the processing by considering that the detection result is what the user wants or to terminate the detection processing upon deeming it as silent consent, or it is possible to configure to adaptively change the determination by learning the behavior of each user or on the basis of the context. In such user's confirmation, commands of user's voice are used, but other means achieving the same effects may also be used instead of them.

In the process of the series of pointing operations of the user, interactive communication can be performed between the knowledge-information-processing server system having the image recognition system 300 and the user. For example, in the image of FIG. 20 (A), when the direction pointed by the orientation 1312 is on the 1302, the knowledge server system asks the user to confirm, "Is the target 1302?" The user may answer and ask again, "Yes, but what is this?"

Subsequently, in an embodiment of the present invention, a procedure for detecting that the user wearing the headset system may possibly start to give attention to a certain target by detecting, on every occasion, the movement state of the headset system using the position information sensor 208 provided in the headset system 200 will be explained.

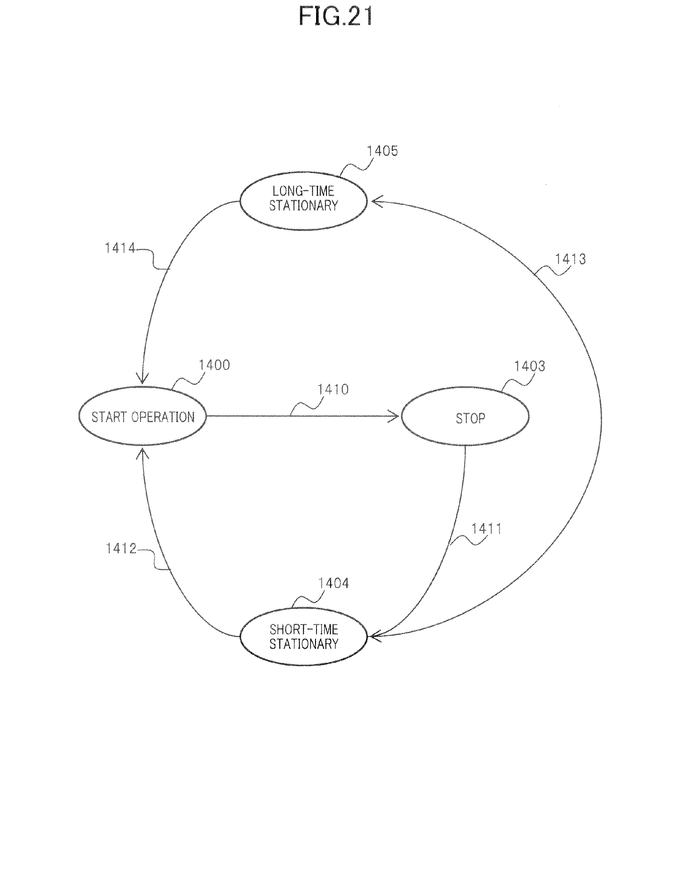

FIG. 21 illustrates state transition of operation of the headset system 200. Operation start (1400) state is a state in which the headset system starts to move from a constant stationary state. Movements of the headset system include parallel movement of the headset system itself (up, down, right, left, front, and back) but also movement for changing of direction by user's swinging operation (looking to the right, the left, the upper side, the lower side) while the position of the headset system is still. Stop (1403) is a state in which the headset system is stationary. Short-time stationary (1404) state is a state in which the headset system is temporarily stationary. Long-time stationary (1405) state is a state in which the headset system is stationary for a certain period of time. When the headset system changes to the stationary state from the certain operation state, the state is changed to the stop (1403) state (1410). When the stop (1403) state continues for a certain period of time or more, the state is changed to the short-time stationary (1404) state (1411). When the short-time stationary state (1404) thereafter continues for a certain period of time or more, and further it is stationary for a long period of time, then the state is changed to the long-time stationary state (1405) (1413). When the headset system starts to move again from the short-time stationary state (1404) or the long-time stationary state (1405), the state is changed to the operation start (1400) state again (1412 or 1414).

Accordingly, for example, when the headset is in the short-time stationary (1404) state, it is determined that the user may possibly begin to give attention to a target in front of him/her, and the knowledge-information-processing server system having the image recognition system 300 is notified in advance that the user is starting to give attention, and at the same time, the camera incorporated into the headset system is automatically caused to be in the shooting start state, which can be a trigger for preparation of series of subsequent processing. In addition, reaction other than words that are made by the user wearing the headset system, e.g., operations such as tilting the head (question), shaking the head from side to side (negative), and shaking the head up and down (positive), can be detected from data detectable from the position information sensor 208 provided in the headset system. These gestures of moving the head, which are often used by a user, may be different in accordance with the regional culture and the behavior (or habit) of each user. Therefore, the server system needs to learn and obtain gestures of each user and those peculiar to each region, and hold and reflect the attributes.

FIG. 22 illustrates an example of picture extraction according to an embodiment of the present invention. A picture image is considered to be a closed region enclosed by a rectangular region made by affine transformation in accordance with a view point position, and the closed region can be assumed to be a flat printed material or a picture with a high degree of possibility, when feature points concerning an object or a scene which is to be originally three-dimensional exist in the same flat surface, in a case where the size of the object detected from the region exists with a scale greatly different from the size of an object existing outside of the region, or in a case where feature points extracted from a generic object or a specific object which is to be originally three-dimensional included in a particular region move in parallel within the particular closed region without causing relative position change due to the movement of the view point of the user, or in a case where it is possible to obtain, e.g., distance information from a target that can be obtained from a camera capable of directly detecting depth information about the image or depth information of an object that can be obtained from both-eyes parallax with multiple camera images. As a similar situation, scenery seen through a window may satisfy the same conditions, but whether it is a window or a flat image can be assumed from the surrounding situation. When they are assumed to be pictures with a high degree of possibility, these pictures themselves may be deemed as one specific object, and an inquiry is sent to the knowledge-information-processing server system having the image recognition system 300, so that similar pictures can be searched. As a result, when the same or similar picture image is found, other users who are seeing, have seen, or may see the same or similar picture image in a different time-space thereafter can be connected.

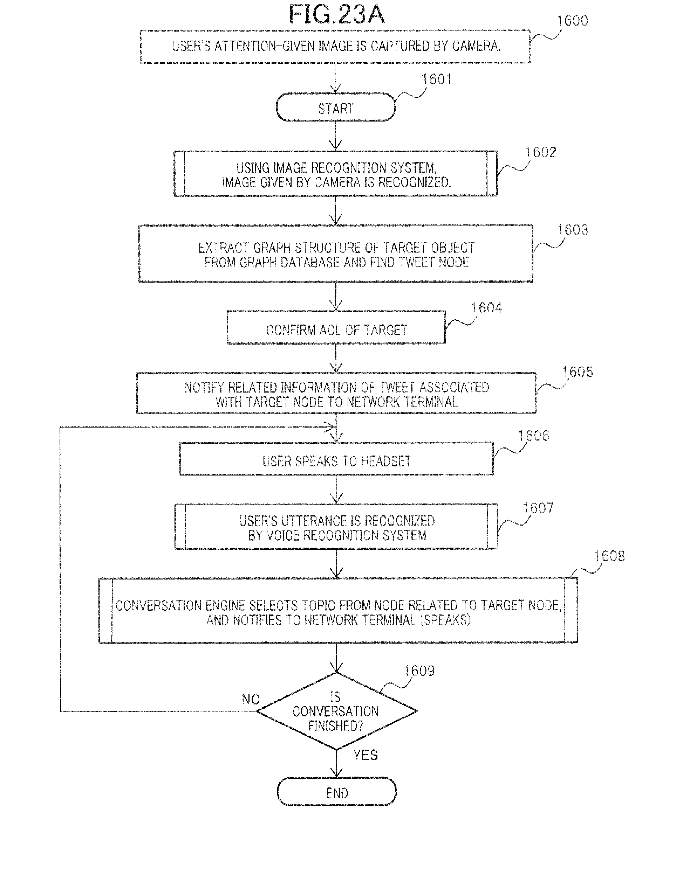

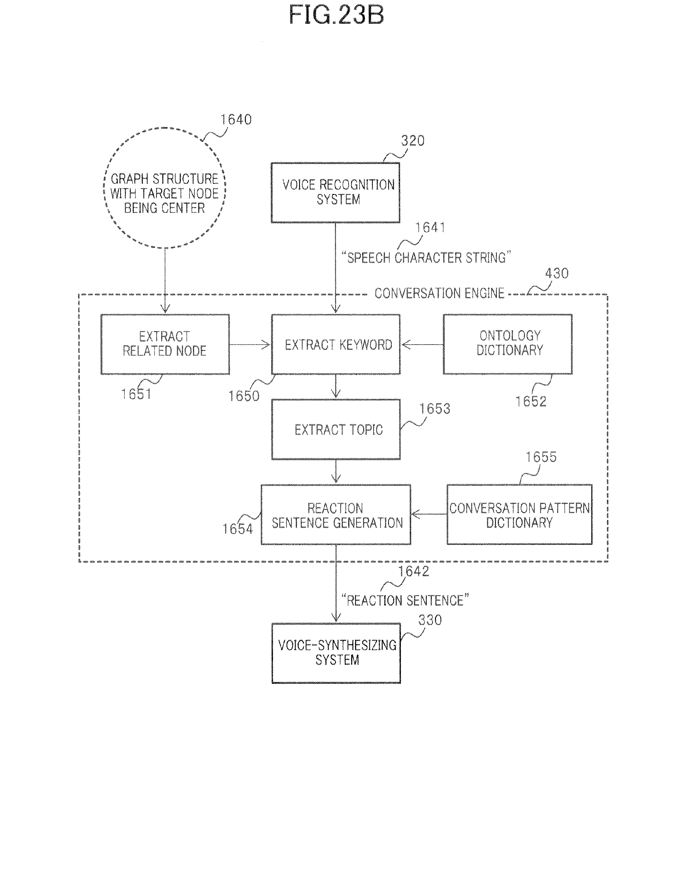

With reference to FIGS. 23A and 23B, conversation with an attention-given target according to an embodiment of the present invention will be explained. As prior condition, the camera captures an attention-given image of a user (1600). With collaborative operation with the image recognition system 301 on the network, the image of the target is recognized from the camera image reflecting the subjective visual field of the user by an extraction process of an attention-given target as described in FIG. 3A (1602). Subsequently, the graph structure of the attention-given target is extracted from the graph database 365, and nodes concerning the message or tweet left for the attention-given target are extracted (1603). Subsequently, an ACL specifying the recipient target of the message or tweet is confirmed (1604), and the message or tweet associated with the target nodes as a result can be notified to the network terminal 220 or the headset system 200 of the user as voice, image, figure, illustration, or character information (1605).

The present invention provides a mechanism for allowing the user to further speak to the attention-given target in a conversational manner using utterance (1606) with regard to the message or tweet. The content of the utterance is recognized with collaborative operation with the voice recognition system 320 (1607), and is converted into a speech character (or an utterance) string. The above-mentioned character string is sent to the conversation engine 430, and on the basis of the interest graph of the user, the conversation engine 430 of the knowledge-information-processing server system 300 selects a topic appropriate at that moment (1608), and it can be delivered as voice information to the headset system 201 of the user by way of the voice-synthesizing system 330. Accordingly, the user can continue continuous voice communication with the server system.

When the content of the conversation is a question or the like concerning the attention-given target by the user, the knowledge-information-processing server system 300 retrieves a response to the question from detailed information described in the MDB 111 or related nodes of the attention-given target, and the response is notified to the user as voice information.

On the contrary, the server system can extract continuous topics by traversing the related nodes concerning the topic at that moment on the basis of the user's interest graph, and can provide the topics to the user in a timely manner. In such case, in order to prevent the same topic from being provided repeatedly and unnecessarily, history information of the conversation is recorded for each of the nodes concerning the topic that was mentioned previously in the context of the conversation, so that such case can be prevented. It is important not to eliminate the curiosity of the user when focusing on an unnecessary topic that the user is not interested in. Therefore, an extracted topic can be selected on the basis of the interest graph of the user. As long as the user continuously speaks, step 1606 is performed again to repeat the continuous conversation. It is continued until there is no longer utterance of the user (1609), and thereafter, terminated.

Bidirectional conversation between the knowledge-information-processing server system 300 and the extensive user as described above plays an important role as a learning path of the interest graph unit 303 itself. In particular, when the user is prompted to frequently speak about a particular target or topic, the user is deemed to be extremely interested in the target or topic, and weighting can be applied to a direct or indirect link of the node of the user and the node concerning the interest thereof. On the contrary, when the user refuses to have continuous conversation about a particular target or topic, the user may have lost interest in the target or topic, and weighting can be reduced to a direct or indirect link of the node of the user and the node concerning the target and the topic thereof.

In the embodiment, the steps after the user finds the attention-given target in the visual field have been explained in order, but another embodiment may also be employed. For example, the present embodiment may be configured such that, in the procedure described in FIG. 3A, the bidirectional conversation between the user and the knowledge-information-processing server system 300 is started in the middle of the procedure.

FIG. 23B illustrates a configuration example of conversation engine 430 according to an embodiment of the present invention. The input to the conversation engine includes a graph structure 1640 around the target node and a speech character (or an utterance) string 1641 from the voice recognition system 320. With the former, information related to the target is extracted by the related node extraction 1651, and sent to the keyword extraction 1650. In this case, an ontology dictionary 1652 is referenced on the basis of the speech character (or utterance) string and the information, and multiple keywords are extracted. Subsequently, in the topic extraction 1653, one of the multiple keywords is selected. In this case, history management of topics is performed in order to prevent repetition of the same conversation. In the keyword extraction, it may be possible to extract, with higher priority, new keywords that another user looked up more frequently or new key words that the user is more interested in. After appropriate topic is extracted, a reaction sentence converted into a natural colloquial style is generated 1642 while a conversation pattern dictionary 1655 is referenced in the reaction sentence generation 1654, and it is given to the voice-synthesizing system 330 in the subsequent stage.

The conversation pattern dictionary 1655 according to the present embodiment describes rules of sentences derived from the keywords. For example, it describes typical conversation rules, such as replying, "I'm fine thank you. And you?" in response to user's utterance of "Hello!"; replying "you" in response to user's utterance of "I"; and replying, "Would you like to talk about it? " in response to user's utterance of "I like it.". Rules of responses may include variables. In this case, the variables are filled with user's utterance.

According to the configuration explained above, it is possible to configure conversation engine 430 such that the knowledge-information-processing server system 300 selects keywords according to the user's interest from the contents described in the interest graph unit 303 held in the server system and generates an appropriate reaction sentence based on the interest graph so that it gives the user strong incentive to continue conversation. At the same time, the user feels as if he/she is having a conversation with the target.

The graph database 365 records a particular user or a particular user group including the user himself/herself or nodes corresponding to the entire users, and nodes related to a specific object, a generic object, a person, a picture, or a scene and nodes recording messages or tweets left therefore are linked with each other, and thus the graph structure is constructed. The present embodiment may be configured so that the statistical information processing unit 363 extracts keywords related to the message or tweet, and the situation recognition unit 305 selectively notifies the user's network terminal 220 or the user's headset system 200 of related voice, image, figure, illustration, or character information.

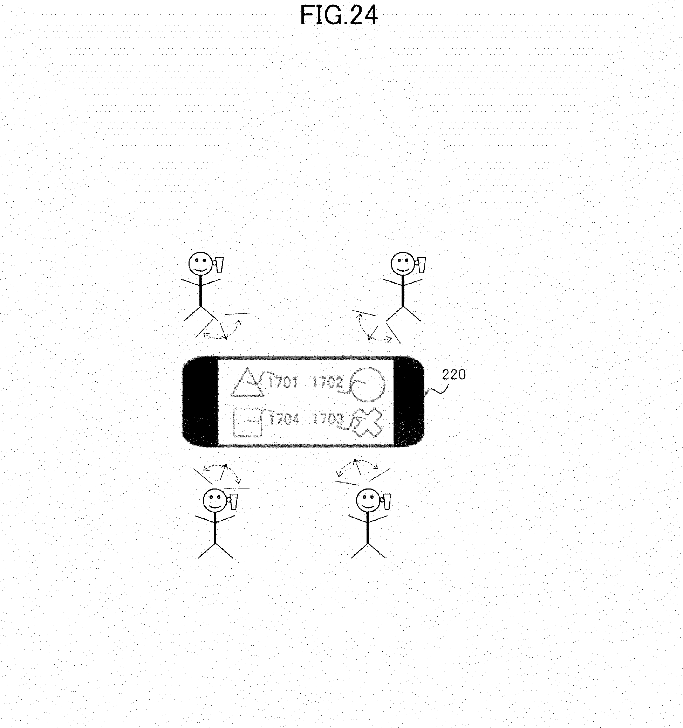

With reference to FIG. 24, collaborative operation between the headset systems when two or more headset systems 200 are connected to one network terminal 220 will be explained as an embodiment of the present invention. In FIG. 24, four users wear the headset systems 200, and the direction in which each user sees is indicated. At this occasion, a marker and the like for position calibration is displayed on the shared network terminal (1701 to 1704), and it is monitored with the camera incorporated into the headset system of each user at all times, so that it is possible to find the positional relationship between the users and the movement thereof. Alternatively, the image pattern that is modulated by time base modulation is displayed on the display device of the shared network terminal, and it is captured with the camera video provided in the headset system of each user. Thereafter, it is demodulated, whereby the positional relationship may be likewise obtained. Accordingly, the visual field of each camera and the gaze are calibrated, the headset system of each user and the shared network terminal are calibrated, and tracking processing is automatically performed so that the network terminal can obtain the position of each user at all times. Accordingly, with regard to the GUI operation on the shared network terminal, the network terminal can recognize which user performs input operation. Therefore, on the shared display device of the shared network terminal, sub-screens having alignment for each user can be displayed in view of the position of each user.

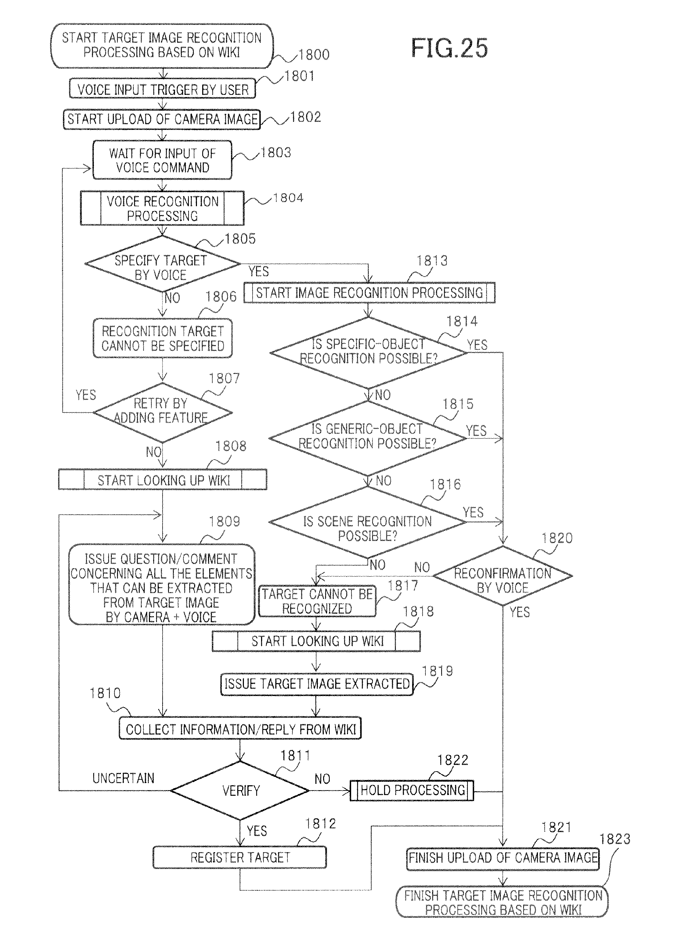

With reference to FIG. 25, a procedure will be explained as an embodiment of the present invention, in which the user is allowed to leave a question about the target on the network with regard to an unknown attention-given target which cannot be recognized by the knowledge-information-processing server system having the image recognition system 300, and another user provides new information and answers with regard to the unknown target via the network, so that with regard to the unknown attention-given target, the server system selects, extracts, and learns necessary information from such exchange information among users.

The procedure 1800 starts in response to a voice input trigger 1801 given by the user. The voice input trigger may be utterance of a particular word spoken by a user, rapid change of sound pressure level picked up by the microphone, or the GUI of the network terminal unit 220. However, the voice input trigger is not limited to such methods. With the voice input trigger, uploading of a camera image is started (1802), and the state is changed to voice command wait (1803). Subsequently, the user speaks commands for attention-given target extraction, and they are subjected to voice recognition processing (1804), and for example, using the means described in FIG. 3A, a determination is made as to whether a pointing processing of the attention-given target with voice is successfully completed or not (1805). When the pointing processing is difficult, and it is impossible to specify the recognition target (1806), a determination is made as to whether retry can be done by adding a new feature (1807). When retry is possible, voice command input wait (1803) state for waiting for voice command given by the user is performed again, and retry is performed. On the other hand, when it is difficult to add a feature, transmission of inquiry to Wiki on the network is started (1808).

In the inquiry processing, questions and comments by user's voice and camera images concerning the target being inquired are, as a set, issued to the network (1809). When Wiki provides information or a reply is received in response thereto, they are collected (1810), and the user or many users and/or the knowledge-information-processing server system 300 (1811) verify the contents. In the verification processing, authenticity of the collected responses is determined. When the verification is passed, the target is newly registered (1812). In the new registration, nodes corresponding to the questions, comments, information, and replies are generated, and are associated as the nodes concerning the target, and recorded to the graph database 365. When the verification is not passed, an abeyance processing 1822 is performed. In the abeyance processing, information about the incompletion of the inquiry processing to Wiki in step 1808 or step 1818 is recorded, and the processing to collect information/reply from Wiki in step 1810 is continued in the background until a reply that passes the verification is collected.

When the pointing processing of the target using voice is possible in step 1805 explained above, an image recognition process of the target is subsequently performed (1813). In the present embodiment, the figure shows that in the image recognition processing, the specific-object recognition system 110 performs the specific-object recognition. When the recognition fails, the generic-object recognition system 106 performs the generic-object recognition. When the recognition still fails, the scene recognition system 108 performs the scene recognition, but the image recognition processing may not be necessarily performed in series as shown in the example, and they may be individually performed in parallel, or the recognition units therein may be further parallelized and performed. Alternatively, each of the recognition processings may be optimized and combined.

When the image recognition processing is successfully completed, and the target can be recognized, voice reconfirmation message is issued to the user (1820), and when it is correctly confirmed by the user, uploading of a camera image is terminated (1821), and the series of target image recognition processing is terminated (1823). On the other hand, when the user cannot correctly confirm the target, the target is still unconfirmed (1817), and accordingly, inquiry to Wiki on the network is started (1818). In the inquiry to Wiki, it is necessary to issue the target image being inquired (1819) as well at the same time. In step 1810, with regard to new information and replies collected from Wiki, the contents and authenticity thereof are verified (1811). When the verification is passed, the target is registered (1812). In the registration, nodes corresponding to the questions, comments, information, and replies are generated, and are associated as the nodes concerning the target, and recorded to the graph database 365.

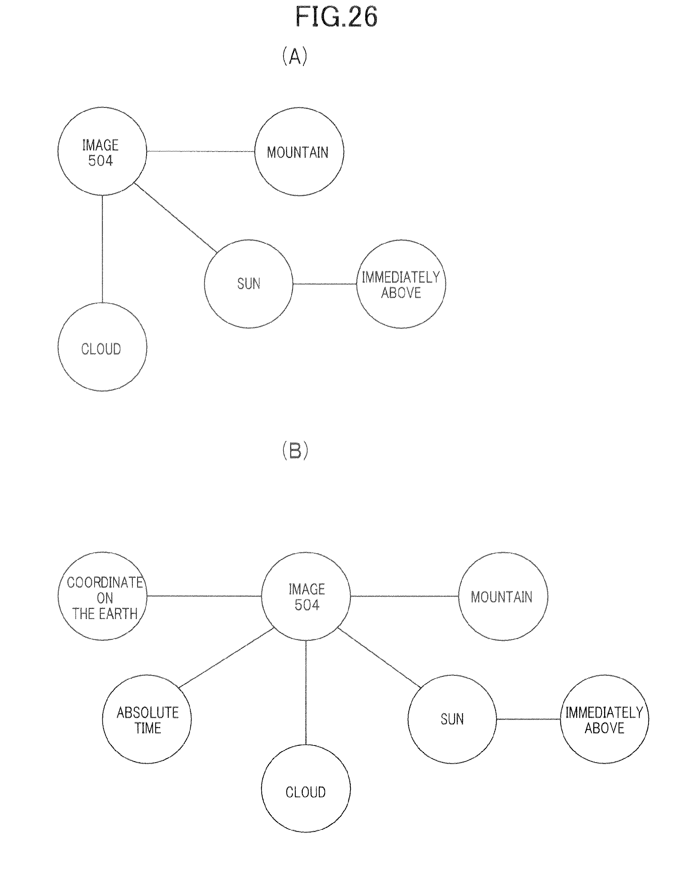

With reference to FIG. 26, an embodiment utilizing the position information sensor 208 provided in the headset system 200 will be explained. GPS (Global Positioning System) may be used as the position information sensor, but the embodiment is not limited thereto. The position information and the absolute time detected with the position information sensor is added to an image taken with the camera 203 provided in the headset system, and is uploaded to the knowledge-information-processing server system having the image recognition system 300, so that information recorded in the graph database 365 can be calibrated. FIG. 26(A) is an embodiment of graph structure related to an image 504 (FIG. 13A) of the graph database before the uploading. Since "sun" is located "directly above", the time slot is estimated to be around noon. FIG. 26 (B) is an example of graph structure after the image is uploaded. By adding "absolute time" node, the time corresponding to the image can be determined correctly. The error involved in the position information itself detected with the position information sensor 208 can be corrected with the result of recognition obtained by the server system using a captured image of the camera.

Further, when the image 504 does not exist within the graph database 365, the same procedure as the embodiment in FIG. 25 explained above is used to record information related to the image 504 to the graph database 365 as the graph structure. The server system may be configured such that, at this occasion, using the position information and the absolute time, a question about the image 504 is issued to other users nearby, so that this can promote new network communication between users, and useful information obtained therefrom is added to the graph structure concerning the image 504.

Further, when the knowledge-information-processing server system having the image recognition system 300 determines that an object in an uploaded image is a suspicious object, information that can be obtained by performing image analysis on the suspicious object can be recorded to the graph database 365 as information concerning the suspicious object. Existence or discovery of the suspicious object may be quickly and automatically notified to a particular user or organization that can be set in advance. In the determination as to whether it is a suspicious object, collation with objects in normal state or suspicious objects registered in advance can be performed by collaborative operation with the graph database 365. This system may also be configured such that, in other cases, e.g., when suspicious circumstances or suspicious scenes are detected, this system can detect such suspicious circumstances or scenes.

When the camera attached to the user's headset system 200 captures, by chance, a specific object, a generic object, a person, a picture, or a scene which are discovery targets that can be specified by the user in advance, the specific object, generic object, person, picture, or scene is initially extracted and temporarily recognized by a particular image detection filters that have been downloaded via the network from the knowledge-information-processing server system having the image recognition system 300 in advance and can be resident in the user's network terminal 220 that is connected to the headset system via a wire or wirelessly. As a result, when further detailed image recognition processing is required, inquiry for detailed information is transmitted to the server system via the network, so that by allowing the user to register a target that the user wants to discover, such as lost and forgotten objects, with the server system, the user can effectively find the target.

It should be noted that the GUI on the user's network terminal 220 may be used to specify the discovery target. Alternatively, the knowledge-information-processing server system having the image recognition system 300 may be configured such that necessary detection filters and data concerning a particular discovery target image are pushed to the user's network terminal, and the discovery target specified by the server system can be searched by extensive users in cooperation.

An example of embodiment for extracting the particular image detection filters from the knowledge-information-processing server system 300 having the image recognition system may be configured to retrieve nodes concerning the specified discovery target from the graph database 365 in the server system as a subgraph and extract the image features concerning the discovery target thus specified on the basis of the subgraph. Thus the embodiment is capable of obtaining the particular image detection filters optimized for detection of the target.

As an embodiment of the present invention, the headset system 200 worn by the user and the network terminal 220 may be made integrally. Alternatively, a wireless communication system that can directly connect to the network and a semitransparent display provided to cover a portion of the user's visual field may be incorporated into the headset system, and a portion of or the entire functionality of the network terminal may be incorporated into the headset system itself to make an integrated configuration. With such configuration, it is possible to directly communicate with the knowledge-information-processing server system having the image recognition system 300 without relying on the network terminal. At that occasion, several constituent elements incorporated into the network terminal need to be partially integrated or modified. For example, the power supply unit 227 can be integrated with the power supply unit 213 of the headset. The display unit 222 can be integrated with the image output apparatus 207. The wireless communication apparatus 211 in the headset system performs the communication between the network terminals, but they can also be integrated with the network communication unit 223. In addition, the image feature detection unit 224, the CPU 226, and the storage unit 227 can be integrated into the headset.

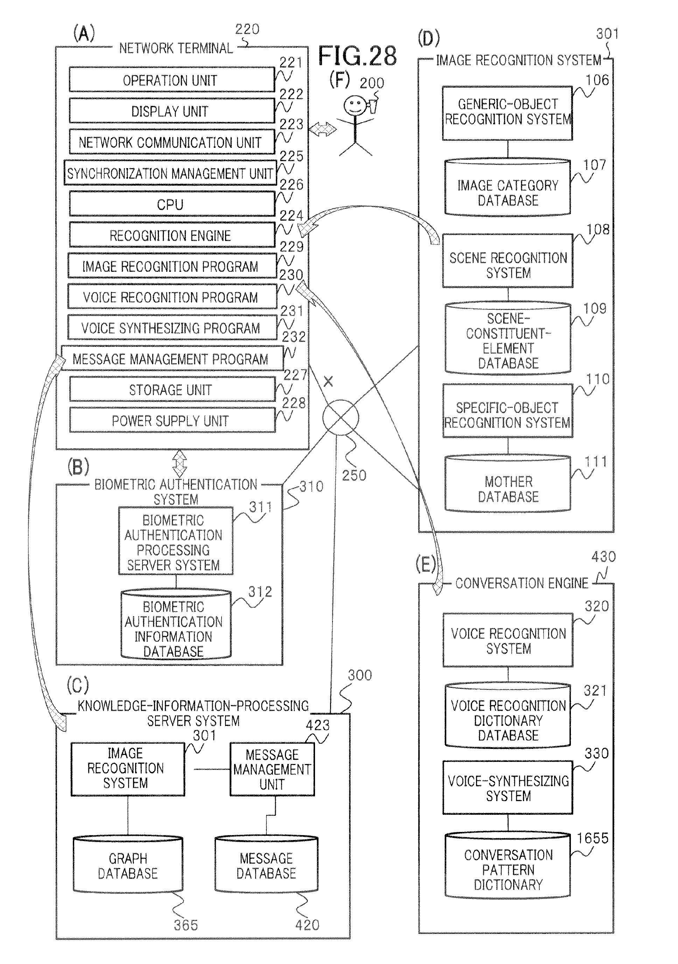

FIG. 28 illustrates an embodiment of processing of the network terminal 220 itself under the circumstances in which network connection with the server is temporarily disconnected. Temporary disconnection of the network connection may frequently occur due to, e.g., moving into a building covered with concrete or a tunnel or while moving by airplane. When, e.g., radio wave conditions deteriorate or the maximum number of cell connections set for each wireless base station is exceeded due to various reasons, the network communication speed tends to greatly decrease. It is possible to configure the network terminal 220 such that, even under such circumstances, the types and the number of targets subjected to the image recognition are narrowed down to the minimum required level and the voice communication function is limited to particular conversations, so that when a network connection is being established, subsets of image detection/recognition programs suitable for detection/recognition of feature data that have already been learned and the limited number of targets required for detection, determination, and recognition of user-specifiable limited number of specific objects, generic objects, persons, pictures, or scenes, together with each of the feature data are integrally downloaded to the network terminal from the server system to a primary storage memory or a secondary storage memory such as flash memory of the network terminal in advance, whereby even when the network connection is temporarily interrupted, certain basic operation can be performed.

An embodiment for achieving the above function will be shown below. FIG. 28 (A) and (F) illustrate main function block configuration of the network terminal 220 of the user and the headset system 200 worn by the user. In a typical network terminal, various applications can be resident in a form of software that can be network-downloaded with the CPU 226 incorporated therein. Although the scale of executable program thereof and the amount of information and the amount of data that can be looked up are greatly limited as compared with the configuration on the server, execution subsets of various kinds of programs and data structured in the knowledge-information-processing server system having the image recognition system 300 are temporarily resident on the user's network terminal, so that the minimum execution environment can be structured as described above.

FIG. 28 (D) illustrates a configuration of main function unit of the image recognition system 301 constructed in the server. Among them, the specific-object recognition system 110, the generic-object recognition system 106, and the scene recognition system 108 cover the entire objects, persons, pictures, or scenes that can be given all the proper nouns and general nouns that have existed in the past or those that have existed until the present as image recognition targets originally requested. It is necessary to essentially prepare for many types and targets that may also said to be enormous, and additional learning is necessary to increase items of recognition targets and discovery of phenomena and objects in the future. Accordingly, the entire execution environment itself is totally impossible for the network terminal, which has very limited information processing performance and memory capacity, to handle. Comprehensive functions thereof are placed on an extremely large database system and powerful computer resources at the server side via the network. Under such circumstances, with regard to necessary functions, a client device with less computing power selectively downloads, on every such occasion, subsets of executable image recognition functions and necessary portions such as knowledge data that have already been learned to the network terminal via the network so that it is possible to somewhat be prepared for interruption of the network connection. In addition to the purpose of being prepared for unpredicted network disconnection, it also has the practical effect of alleviating the server load due to access concentration to server resources and suppressing unnecessary traffic in the network.

In an embodiment for achieving them, necessary programs of image recognition programs selected from the specific-object recognition system 110, the generic-object recognition system 106, and the scene recognition system 108 as illustrated in FIG. 28 (D) are downloaded from the server to the recognition engine 224 to be resident on the recognition engine 224 as the executable image recognition program 229 on the network terminal 220 as illustrated in FIG. 28 (A) via the network. At the same time, feature data that has already been learned is extracted from the image category database 107, the scene-constituent-element database 109, and the MDB 111 in accordance with each recognition target. Likewise, it is selectively resident on the storage unit 227 of the network terminal 220 of the user. In order to associate candidates of the recognition target and a message or tweet made by another user with regard to the candidates of the target, the knowledge-information-processing server system having the image recognition system 300 at the server side extracts the necessary relationships with the target from the graph database 365, and extracts necessary candidates of conversation from the message database 420. The extracted data are downloaded to a message management program 232 on the user's network terminal 220 via the network in advance. In order to effectively make use of the limited capacity memory, the candidates of the message or tweet of the user can be compressed and stored in the storage unit 227 on the network terminal 220.

On the other hand, the function of bidirectional voice conversation with the knowledge-information-processing server system having the image recognition system 300 can be performed, under a certain limitation, by a voice recognition program 230 and a voice synthesizing program 231 on the network terminal 220. In order to achieve this, in the above-mentioned embodiment, execution programs with a minimum requirement and data set chosen from among the voice recognition system 320, the voice-synthesizing system 330, a voice recognition dictionary database 321 that is a knowledge database corresponding thereto, and a conversation pattern dictionary 1655 in the conversation engine 430 constituting the server system are required to be downloaded in advance to the storage unit 227 of the user's network terminal 220 at the time when network connection with the server system is established.

In the above description, when the processing performance of the user's network terminal 220 or the storage capacity of the storage unit 227 are insufficient, the candidates of the conversation may be made into voice by the voice-synthesizing system 330 on the network in advance, and thereafter it may be downloaded to the storage unit 227 on the user's network terminal 220 as compressed voice data. Accordingly, even if temporary failure occurs in the network connection, the main voice communication function can be maintained, although in a limited manner.

Subsequently, the process during reconnection to the network will be explained. Suppose that the storage unit 227 of the user's network terminal 220 temporarily holds camera images of various targets to which the user gives attention and messages or tweets left by the user with regard to the targets, together with various kinds of related information. Accordingly, when the network connection is recovered, biometric authentication data obtained from the user's network terminal 220 associated with the headset system 200 of the user are looked up in a biometric authentication information database 312, which holds detailed biometric authentication information of each user, and a biometric authentication processing server system 311 in a biometric authentication system 310 of the network. As a result, by performing synchronization of the information and data accumulated until then in the knowledge-information-processing server system having the image recognition system at the server side with the associated user's network terminal 220, the related databases are updated with the latest state, and in addition, a conversation pointer that was advanced while the network was offline is updated at the same time, so that transition from offline state to online state or transition from online state to offline state can be made seamlessly.

According to the present invention, various images (camera images, pictures, motion pictures, and the like) are uploaded to the knowledge-information-processing server system having the image recognition system 300 via the Internet from a network terminal such as a PC, a camera-attached smartphone or the headset system, so that the server system can extract, as nodes, the image or nodes corresponding to various image constituent elements that can be recognized from among a specific object, a generic object, a person, or a scene included in the image and/or meta-data attached to the image and/or user's messages or tweets with regard to the image and/or keywords that can be extracted from communication between users with regard to the image.

The related nodes described in the graph database 365 are looked up on the basis of the subgraph in which each node in these extracted nodes is center. This makes it possible to select/extract images concerning a particular target, a scene, or a particular location and region which can be specified by the user. On the basis of the images, an album can be generated by collecting the same or similar targets and scenes, or an extraction processing of images concerning a certain location or region can be performed. Then, on the basis of the image features or the meta-data concerning the images thus extracted, when the image features or meta-data are obtained by capturing an image of a specific object, the server system collects the images as video taken from multiple view point directions or video taken under different environments, or when the images concern a particular location or region, the server system connects them into a discrete and/or continuous panoramic image, thus allowing various movements of the view point.

With regard to a specific object in the image that can be recognized by the knowledge-information-processing server system having the image recognition system 300 or meta-data attached with each image uploaded via the Internet serving as constituent elements of the panoramic image allowing identification of the location or region, the point in time or period of time when the object existed is estimated or obtained by sending an inquiry thereabout to various kinds of knowledge databases on the Internet or extensive users via the Internet. On the basis of time-axis information, the images are classified in accordance with time-axis. On the basis of the images thus classified, a panoramic image at any given point in time or period of time specified by the user can be reconstructed. Accordingly, by specifying any "time-space", including any given location or region, the user can enjoy real-world video that existed in the "time-space" in a state where the view point can be moved as if viewing a panoramic image.

Further, on the basis of the images composed for each particular target or each particular location or region, users who are highly interested in the target or who are highly related to the particular location or region are extracted on the basis of the graph database 365, network communication composed for each of the targets or particular locations or regions by these many users is promoted, and the network communication system can be constructed to, e.g., share various comments, messages or tweets with regard to the particular target or the particular location or region on the basis of the network communication; allow participating users to provide new information; or enable search requests of particular unknown/insufficient/lost information.

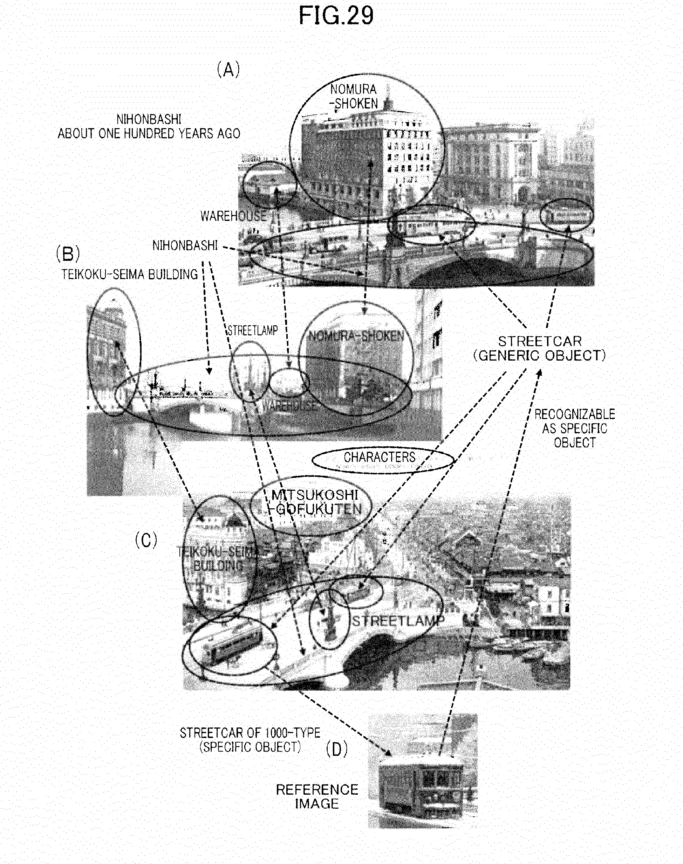

With reference to FIG. 29, an example of three pictures, i.e., picture (A), picture (B), picture (C), extracted by specifying a particular "time-space" from images uploaded to the server system according to an embodiment of the present invention will be shown. In this case, Nihonbashi and its neighborhood in the first half of the 1900's are shown.

The picture (A) indicates that not only "Nihonbashi" at the closer side, but also the headquarters of "Nomura-Shoken", known as a landmark building, in the center at the left side of the screen can be recognized as a specific object. In the background on the left side of the screen, a building that seems to be a "warehouse" and two "street cars" on the bridge can be recognized as generic objects.

The picture (B) shows "Nihonbashi" seen from a different direction. In picture (B), likewise, the headquarters of "Nomura-Shoken" at the left side of the screen, "Teikoku-Seima building" at the left hand side of the screen, and a decorative "street lamp" on the bridge of "Nihonbashi" can newly be recognized as specific objects.

The picture (C) shows that a building that appears to be the same "Teikoku-Seima building" exists at the left hand side of the screen, and therefore, it is understood that the picture (C) is a scene taken in the direction of "Nihonbashi" from a location that appears to be the roof of the headquarters of "Nomura-Shoken". Moreover, since the characters at the top of the screen can read "scenery seen in the direction of Mitsukoshi-Gofukuten and Kanda district from the Nihonbashi", it is possible to extract three keywords, i.e., "Nihonbashi", "Mitsukoshi-Gofukuten", and "Kanda", and a large white building in the background of the screen from there can be estimated to be "Mitsukoshi-Gofukuten" with a high degree of probability.

Since the shape of "street car" can be clearly seen on the bridge of "Nihonbashi", it is possible to perform detailed examination with the image recognition system. This indicates that this "street car" can be recognized as a specific object, a "1000-type" car, which is the same as that shown in the picture (D).

The series of image recognition processing is performed with collaborative operation with the specific-object recognition system 110, the generic-object recognition 106, and the scene recognition system 108 provided in the image recognition system 301.

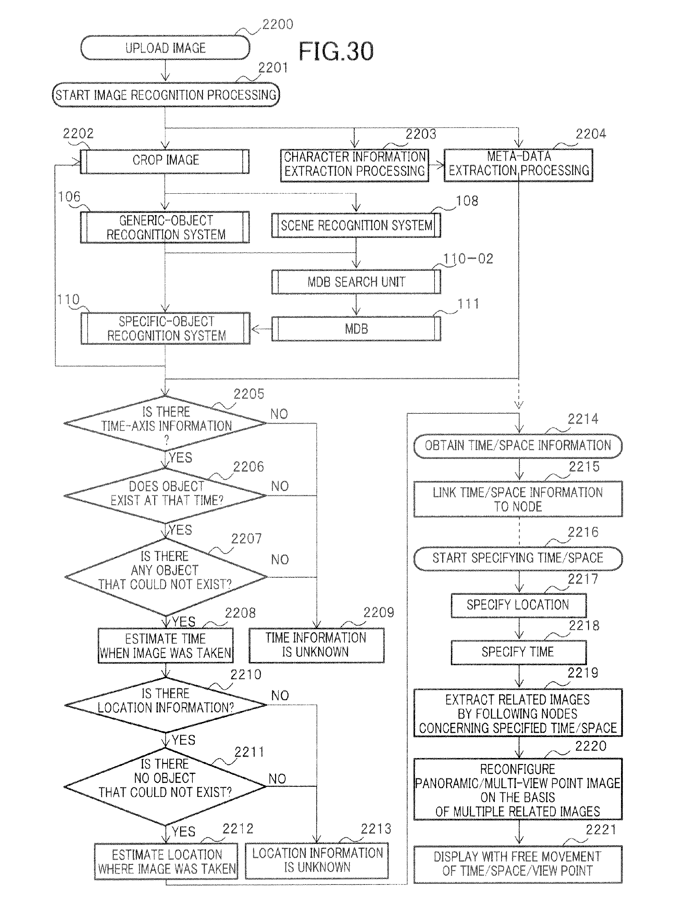

With reference to FIG. 30, a time-space movement display system will be explained using a schematic example of embodiment, in which the user specifies any time-space information from among uploaded images, and only images taken at the time-space are extracted, and on the basis of them, the time-space is restructured into a continuous or discrete panoramic image, and the user can freely move the view point in the space or can freely move the time within the space.

First, uploading of an image (2200) via the Internet to the knowledge-information-processing server system having the image recognition system 300 by way of the user's network terminal 220 is started. The image recognition system 301 starts the image recognition processing of the uploaded image (2201). When meta-data is given to the image file in advance, a meta-data extraction processing (2204) is performed. When character information is discovered in the image, a character information extraction processing (2203) is performed using OCR (Optical Character Recognition) and the like, useful meta-data is obtained from there by way of the meta-data extraction processing (2204).

On the other hand, with the GUI on the user's network terminal 220 or the pointing processing of the attention-given target by voice as described in FIG. 3A, from one image uploaded, the cropping processing (2202) of an image concerning each object in the image is performed. With regard to the target, the MDB search unit 110-02 performs an object narrow-down processing in accordance with class information obtained by image-recognition performed by the generic-object recognition system 106 and the scene recognition system 108, the MDB 111 describing detailed information about the image is referenced, a comparison/collation processing with the object is performed by the specific-object recognition system 110, and with regard to the specific object finally identified, a determination (2205) is made as to whether time-axis information exists in the image by referencing the meta-data.

When time-axis information is determined to exist in the image, time information at which the objects existed in the image is extracted from the descriptions of the MDB 111, and upon looking it up, a determination is made as to whether the object exists in the time (2206). When the existence is confirmed, a determination is made as follows. With regard to other objects that can be recognized in the image other than the object, likewise, a determination is made from the description in the MDB 111 as to whether there is any object that could not exist in the time in the same manner (2207). As soon as the consistency is confirmed, the estimation processing of image-capturing time (2208) of the image is performed. In other cases, the time information is unknown (2209), and accordingly, the node information is updated.

Subsequently, when information about the location of the image exists (2210), information about the location at which the objects existed in the image is extracted from the description in the MDB 111, and upon looking it up, a determination is made as to whether the object exists at the location (2210). When the existence is confirmed, a determination is made as follows. With regard to objects that can be recognized in the image other than the object, likewise, a determination is made from the description in the MDB 111 as to whether there is any object that could not exist at the location in the same manner (2211). As soon as the consistency is confirmed, the estimation processing of image-capturing location (2212) of the image is performed. In other cases, the location information is unknown (2213), and accordingly, the node information is updated.

In addition to the series of processing, the time-space information that can be estimated and the meta-data that can be extracted from the image itself being obtainable or attached to the image itself are collated again, and as soon as the consistency is confirmed, acquisition of the time-space information of all the image (2214) is completed, and the time-space information is linked to the node concerning the image (2215). When there is deficiency in the consistency, there is error in the meta-data, recognition error of the image recognition system, or deficiency/error in the description of the MDB 111, and accordingly, the system prepares for subsequent re-verification processing.

With regard to the images given with the time-space information, user specifies any time-space, and the images matching the condition can be extracted (2216). First, images captured at any given location (2217) at any given time (2218) are extracted from among many images by following the nodes concerning the time-space specified as described above (2219). On the basis of multiple images thus extracted, common particular feature points in the images are searched for, and a panoramic image can be reconstructed (2220) by continuously connecting the detected particular feature points with each other. In this case, when there is a missing or deficient image in the panoramic image, the extensive estimation processing is performed on the basis of available information such as maps, drawings, or design diagrams described in the MDB 111, so that it can be reconstructed as a discrete panoramic image.

The knowledge-information-processing server system having the image recognition system 300 continuously performs the learning process for obtaining the series of time-space information on many uploaded pictures (including motion pictures) and images. Accordingly a continuous panoramic image having the time-space information can be obtained. Therefore, the user specifies any time/space, and enjoys an image experience (2221) with regard to any given time in the same space or any view point movement.

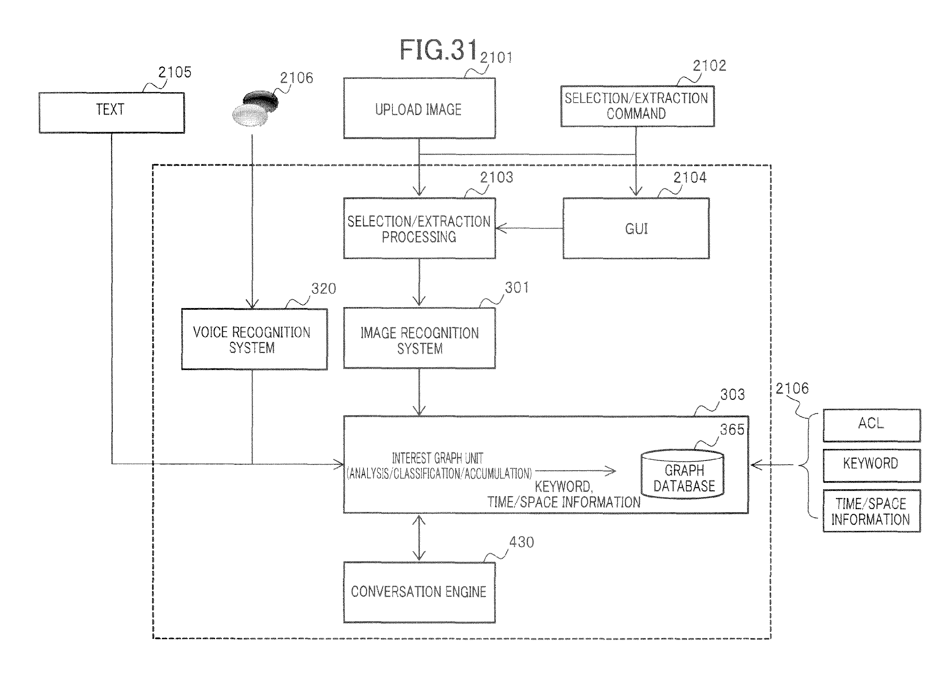

With reference to FIG. 31, a configuration of network communication system according to an embodiment of the present invention will be explained. In this configuration, with regard to the image uploaded by the user to the knowledge-information-processing server system having the image recognition system, the result recognized by the server system by the selection extraction processing concerning a specific object, a generic object, a person, or a scene to which the user gives attention, by GUI operation with the user's network terminal or pointing operation with voice processing, as well as the input image, can be shared by extensive users who can be specified in advance, including the user.

Recording and reproduction experience of the series of messages or tweets concerning the particular attention-given target explained above are enabled with regard to a specific object, a generic object, a person, or a scene that can be discovered with the movement of the view point of the user who specified the time-space.

The server system performs selection/extraction processing 2103 on the image 2101 uploaded by the user. At this occasion, the user may perform a selection/extraction processing in the procedure as described in FIG. 3A, and may operate the GUI 2104 for the selection/extraction command as illustrated in FIG. 30 to perform the selection/extraction processing. The image cropped by the selection/extraction processing is subjected to recognition by the image recognition system 301. The result is analyzed/classified/accumulated by the interest graph unit 303, and is recorded together with the keywords and the time-space information to the graph database 365. When the image is uploaded, the user may write a message or tweet 2106 or character information 2105. The message or tweet or character information generated by the user is also analyzed/classified/accumulated with the interest graph unit. The above-mentioned user or a user group including the user or the entire users can select a recorded image from the interest graph unit on the basis of the keywords and/or time-space information (2106) concerning the target, and extensive network communication concerning the image can be promoted. Further, communication between the extensive users is observed and accumulated by the server system, and is analyzed by the statistical information processing unit 363 which is a constituent element of the interest graph unit 303, whereby existence and transition of dynamic interest and curiosity unique to the user, unique to a particular group of users, or common to the entire users can be obtained as the dynamic interest graph connecting the nodes concerning the extensive users, extractable keywords, and various attention-given targets.

### [Peripheral technology]

A system according to the present invention can be configured as a more convenient system by combining with various existing technologies. Hereinafter, examples will be shown.

As an embodiment of the present invention, the microphone incorporated into the headset system 200 picks up a user's utterance, and the voice recognition system 320 extracts the string of words and sentence structure included in the utterance. Thereafter, by making use of a machine translation system on a network, it is translated into a different language, and the string of words thus translated into voice by the voice-synthesizing system 330. Then, the user's utterance can be conveyed to another user as a message or tweet of the user. Alternatively, it may be possible to configure the voice-synthesizing system 330 such that voice information given by the knowledge-information-processing server system having the image recognition system 300 can be received in a language specified by the user.

As an embodiment of the present invention, when a pre-defined recognition marker and a particular image modulation pattern are extracted from video captured by a camera within the visual field of the camera incorporated into a user's headset system, existence of the signal source is notified to the user. When the signal source is at the display device or in proximity thereof, the modulated pattern is demodulated with collaborative operation with the recognition engine 224, whereby address information, such as a URL obtained therefrom, is looked up via the Internet, and voice information about the image displayed on the display device can be sent by way of the headset system of the user. Accordingly, voice information about the display image can be effectively sent to the user from various display devices that the user sees by chance. Therefore, it is possible to further enhance the effectiveness of digital signage as an electronic advertising medium. On the other hand, when voice information is delivered at one time from all the digital signage that the user can see, the user may feel that the voice information is unnecessary noise in some cases. Therefore, it may be possible to configure this embodiment such that, on the basis of the interest graph of each user, an advertisement or the like reflecting preference which is different for each user is selected so that it can be delivered as voice information which is different for each user.

In an embodiment of the present invention, when multiple biosensors capable of sensing various kinds of biometric information (vital signs) are incorporated into the user's headset system, collation between the target to which the user gives attention and the biometric information is statistically processed by the knowledge-information-processing server system having the image recognition system 300, and then it is registered as a special interest graph of the user so that when the user encounters the particular target or phenomenon or the chance of the encounter increases, it is possible to configure the server system to be prepared for a situation of rapid change of a biometric information value of the user. Examples of obtainable biometric information include body temperature, heart rate, blood pressure, sweating, the state of the surface of the skin, myoelectric potential, brain wave, eye movement, vocalization, head movement, the movement of the body of the user, and the like.

As the learning path for the above embodiment, when a biometric information value that can be measured is changed by a certain level or more because of a particular specific object, a generic object, a person, a picture, or a scene appearing within the user's subjective vision taken by the camera, such situation is notified to the knowledge-information-processing server system having the image recognition system 300 as a special reaction of the user. This causes the server system to start accumulation and analysis of related biometric information, and at the same time, to start analysis of the camera video, making it possible to register the image constituent elements extractable therefrom to the graph database 365 and the user database 366 as causative factors that may be related to such situation.

Thereafter, by repeating the learning with various examples, analysis/estimation of the cause of the change of the various kinds of biometric information value can be derived from the statistical processing.

When it is possible to predict, from the series of learning processes, that the user will encounter again or may encounter with a high degree of probability a specific object, a generic object, a person, a picture, or a scene that can be predicted as being the cause of an abnormal change of the biometric information value which is different for each user, the server system can be configured so that such probability is quickly notified from the server system to the user via the network by voice, text, an image, vibration, and/or the like.

Further, the knowledge-information-processing server system having the image recognition system 300 may be configured such that when the biometric information value that can be observed rapidly changes, and it can be estimated that the health condition of the user may be worse than a certain level, the user is quickly asked to confirm his/her situation. When a certain reaction cannot be obtained from the user, it is determined, with a high degree of probability, that an emergency situation of a certain degree of seriousness or higher has occurred with the user, and a notification can be sent to an emergency communication network set in advance, a particular organization, or the like.

In the biometric authentication system according to the present invention, this system may be configured such that a voiceprint, vein patterns, retina pattern, or the like which is unique to the user is obtained from the headset system that can be worn by the user on his/her head, and when biometric authentication is possible, the user and the knowledge-information-processing server system having the image recognition system 300 are uniquely bound. The above-mentioned biometric authentication device can be incorporated into the user's headset system, and therefore, it may be possible to configure the biometric authentication device to automatically log in and log out as the user puts on or removes the headset system. By monitoring the association based on the biometric information at all times with the server system, illegal log-in and illegal use by unauthorized users can be prevented. When the user authentication has been successfully completed, the following information is bound to the user.
(1) User profile that can be set by the user
(2) User's voice
(3) Camera image
(4) Time-space information
(5) Biometric information
(6) Other sensor information

An embodiment of the present invention can be configured such that, with regard to images shared by multiple users, the facial portion of each user and/or a particular portion of the image with which the user can be identified is extracted and detected by the image recognition system 301 incorporated into the knowledge-information-processing server system having the image recognition system 300 in accordance with a rule that can be specified by the user in advance from the perspective of protection of privacy. Filter processing is automatically applied to the particular image region to such a level at which it cannot be identified. Accordingly, certain viewing limitation including protection of privacy can be provided.

In an embodiment of the present invention, the headset system that can be worn by the user on the head may have been provided with multiple cameras. In this case, image-capturing parallax can be provided for multiple cameras as one embodiment. Alternatively, it may be possible to configure to incorporate a three-dimensional camera capable of directly measuring the depth (distance) to a target object using multiple image-capturing devices of different properties.

In this configuration, the server system can be configured such that, upon a voice command given by the knowledge-information-processing server system having the image recognition system 300, the server system asks a particular user specified by the server system to capture, from various view points, images of, e.g., a particular target or ambient situation specified by the server system, whereby the server system easily understand the target in a three-dimension or ambient circumstances and the like in a three-dimensional manner. In addition, with the image recognition result, the related databases including the MDB 111 in the server system can be updated.

In an embodiment of the present invention, the headset system that can be worn by the user on the head may have been provided with a depth sensor having directivity. Accordingly, movement of an object and a living body, including a person, approaching the user wearing the headset system is detected, and the user can be notified of such situation by voice. At the same time, the system may be configured such that the camera and the image recognition engine incorporated into the headset system of the user are automatically activated, and processing is performed in a distributed manner such that the user's network terminal performs a portion of processing required to be performed in real-time so as to immediately cope with unpredicted rapid approach of an object. The knowledge-information-processing server system having the image recognition system 300 performs a portion of processing requiring high-level information processing, whereby a specific object, a particular person, a particular animal, or the like which approaches the user is identified and analyzed at a high speed. The result is quickly notified to the user by voice information, vibration, or the like.

In an embodiment of the present invention, an image-capturing system capable of capturing an image in all directions, including the surroundings of the user, the upper and lower side thereof can be incorporated into the headset system that can be worn by the user on his/her head. Alternatively, multiple cameras capable of capturing an image in the visual field from behind or to the sides of the user, which is out of the subjective visual field of the user, can be added to the headset system of the user. With such configuration, the knowledge-information-processing server system 300 having the image recognition system can be configured such that, when there is a target in proximity which is located outside of the subjective visual field of the user but which the user has to be interested in or pay attention to, such circumstances are quickly notified to the user using voice or means instead of the voice.

In an embodiment of the present invention, environment sensors capable of measuring the following environment values can be incorporated into the headset system that can be worn by the user on the head.
(1) Ambient brightness (luminosity)
(2) Color temperature of lighting and external light
(3) Ambient environmental noise
(4) Ambient sound pressure level
This makes it possible to reduce ambient environment noise and cope with appropriate camera exposure. It is also possible to improve the recognition accuracy of the image recognition system and the recognition accuracy of the voice recognition system.

In an embodiment of the present invention, a semitransparent display device provided to cover a portion of the visual field of the user can be incorporated into the headset system that can be worn by the user on his/her head. Alternatively, the headset system may be integrally made with the display as a head-mount display (HMD) or a scouter. Examples of known devices that realize such display system include an image projection system called "retinal sensing" for scanning and projecting image information directly onto the user's retina or a device for projecting an image onto a semitransparent reflection plate provided in front of the eyes. By employing such display system, a portion of or all of the image displayed on the display screen of the user's network terminal can be shown on the display device. Without bringing the network terminal into front of the eyes of the user, direct communication with the knowledge-information-processing server system having the image recognition system 300 is enabled via the Internet.

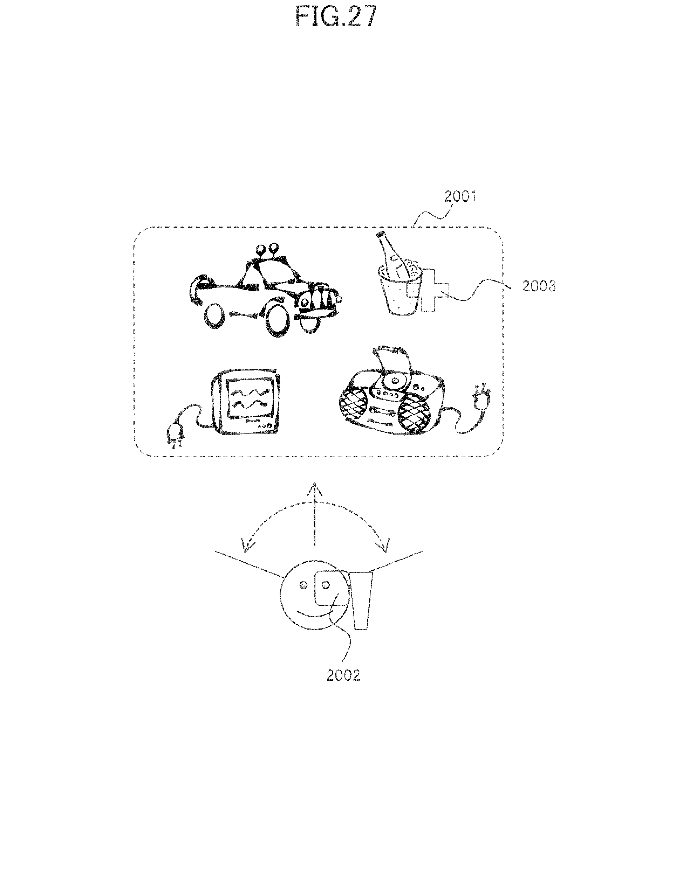

In an embodiment of the present invention, a gaze detection sensor may be provided on the HMD and the scouter that can be worn by the user on the head, or it can be provided together with them. The above-mentioned gaze detection sensor may use an optical sensor array. By measuring reflection light of the optical ray emitted from the optical sensor array, the position of the pupil of the user is detected, and the gaze position of the user can be extracted at a high speed. For example, in FIG. 27, suppose that a dotted line frame 2001 is a visual field image of the scouter 2002 worn by the user. At this occasion, the view point marker 2003 may be displayed in an overlapping manner onto the target in the gaze direction of the user. In such case, calibration can be performed by user's voice command so that the position of the view point marker is displayed at the same position as the target.

### Reference Signs List

- 100: network communication system
- 106: generic-object recognition system
- 107: image category database
- 108: scene recognition system
- 109: scene-constituent-element database
- 110: specific-object recognition system
- 111: mother database
- 200: headset system
- 220: network terminal
- 300: knowledge-information-processing server system
- 301: image recognition system
- 303: interest graph unit
- 304: situation recognition unit
- 307: reproduction processing unit
- 310: biometric authentication system
- 320: voice recognition system
- 330: voice-synthesizing system
- 365: graph database
- 430: conversation engine

## Claims

1. A network communication system with a knowledge-information-processing server system having an image recognition system, which can upload an image and voice signal reflecting a subjective visual field and view point of a user that can be obtained from a headset system wearable at a head portion of the user having at least one or more microphones, one or more earphones, one or more image capturing devices (cameras) in an integrated manner which is a multi-function input/output device that can connect via a wire or wirelessly to a network terminal that can connect to the Internet, to the knowledge-information-processing server system having the image recognition system on the Internet via the network terminal, and with a collaborative operation with a voice recognition system with regard to a specific object, a generic object, a person, a picture, or a scene which is included in the image and which the user gives attention to, specifying, selecting, and extraction operation of the attention-given target with voice spoken by the user himself/herself is enabled with collaborative operation with the image recognition system via the Internet, and with collaborative operation with the voice-synthesizing system, the series of image recognition processes and image recognition result made by the user can be notified by the knowledge-information-processing server system having the image recognition system via the Internet by way of the network terminal of the user, as voice information to the earphone incorporated into the headset system of the user and/or as voice and image information to the network terminal of the user, and with regard to the target of which image recognition is enabled, a content of a message or a tweet spoken with voice of the user himself/herself is analyzed, classified, and accumulated by the knowledge-information-processing server system with collaborative operation with the voice recognition system, and the message or the tweet is enabled to be shared via the Internet by extensive users including the user who see a same target, thus promoting extensive network communication induced by visual curiosity of many users, and the knowledge-information-processing server system observes, accumulates, analyzes extensive inter-user communication in a statistical manner, whereby existence and transition of dynamic interest and curiosity unique to the user, unique to a particular user group, or common to the entire users can be obtained as a dynamic interest graph connecting nodes concerning the extensive "users," extractable "keywords," and various attention-given "targets."

2. A network communication system with a knowledge-information-processing server system having an image recognition system, wherein with regard to a picture or a motion picture uploaded to the knowledge-information-processing server system having the image recognition system by a user via a network terminal that can be connected to the Internet, selection extraction processing of a specific object, a generic object, a person, or a scene to which the user gives attention and which is included in the image or the entire image is enabled with GUI operation with the network terminal and/or the voice input operation according to claim 1, and with regard to the target thus extracted or the entire image, a result obtained by causing the knowledge-information-processing server system having the image recognition system to perform image recognition as well as the input image are allowed to be shared by extensive users who can be specified in advance including the user, so that with regard to the target of which image recognition is made possible, a content of a posting made of character information of the user and/or a message or tweet spoken with voice of the user himself/herself is analyzed, classified, and accumulated by the knowledge-information-processing server system having the image recognition system with collaborative operation with the voice recognition system, and on the basis of keywords and/or time-space information about the target that can be extracted therefrom, the user is allowed to select a particular target that can be specified, select any time-space that can be specified, or a combination thereof, whereby this promotes extensive network communication concerning the input images in a particular time-space or a target thus extracted, and by causing the knowledge-information-processing server system having the image recognition system to statistically observe, accumulate, and analyze the communication between extensive users, existence and transition of dynamic interest and curiosity unique to the user, unique to a particular user group, or common to the entire users can be obtained as a dynamic interest graph connecting nodes concerning the extensive "users," extractable "keywords," and various attention-given "targets."

3. The network communication system with the knowledge-information-processing server system having the image recognition system according to claim 2, wherein on the basis of the keywords and/or the time-space information about the image that can be extracted by the knowledge-information-processing server system having the image recognition system from the picture or the motion picture uploaded in claim 2, the knowledge-information-processing server system having the image recognition system selects and extracts images that can be estimated as being captured in the same time-space, and extracts characteristic image constituent elements from image constituent elements that can be detected and included in the multiple images, and on the basis of them, stitching of the multiple images as constituent elements to make a wide visual field image or generation of an album in the time-space by collecting the multiple similar images is made possible, so that writing made of characters by the user and a message or tweet by voice with regard to various targets in the time-space induced by visual experience in any given time-space which can be set by the user are allowed to be shared by multiple users who selected the same time-space, whereby extensive network communication of many users can be promoted.

4. The network communication system with the knowledge-information-processing server system having the image recognition system according to claims 1 and 2, wherein the network communication system is configured such that the message or tweet left by the user with regard to a specific object, a generic object, a person, a picture, or a scene to which the user is giving attention or gave attention can be left in a particular time or time zone specified by the user and/or in a particular location and region specified by the user, as voice information targeted for a particular user, a particular user group, or the entire users including the user himself/herself specified by the user or a particular user, or a particular user group, or the entire users extracted by the knowledge-information-processing server system.

5. The network communication system with the knowledge-information-processing server system having the image recognition system according to claim 4, wherein the network communication system is configured such that with regard to a particular user, a particular user group, or the entire users including the user himself/herself, the user himself/herself who left the message or tweet can specify users as recipient of the messages or tweets left with regard to the specific object, the generic object, the person, the picture, or the scene which are the attention-given targets, so that for the particular user, the user group, or the entire users who are the recipients of the message or tweet who encounters the target by chance, with limitation to a time-space that can be specified by the user himself/herself who left the a message or tweet is imposed, and via the Internet, the a message or tweet can be received as voice information with the headset system worn by the user as recipient and/or as voice information and image information with the user's network terminal connected to the headset system via a wire or wirelessly.

6. The network communication system with the knowledge-information-processing server system having the image recognition system according to claim 4, wherein the network communication system is configured such that with regard to the message or tweet left for a specific object, a generic object, a person, a picture, or a scene which is the attention-given target by the particular user, the user group, or the entire users including the user himself/herself, not only the time-space specified by the user who left the message or tweet but also any given time-space by the user who is the recipient of the message or tweet can be selected and specified, and via the Internet, the a message or tweet can be received as voice information with the headset system worn by the user as recipient and/or as voice information and image information with the user's network terminal connected to the headset system via a wire or wirelessly.

7. The network communication system with the knowledge-information-processing server system having the image recognition system according to claim 4, wherein the network communication system is configured such that when a user who is a recipient of the message or tweet encounters the same target again in a different time-space, the same message or tweet is not repeated again, and the user can receive a message or tweet subsequent to the message or tweet that the user received in the past, or can additionally receive a new message or tweet that is added thereafter.

8. The network communication system with the knowledge-information-processing server system having the image recognition system according to claims 1 and 2, wherein the network communication system is configured such that by speaking with voice to a specific object, a generic object, a person, a picture, or a scene to which the user gives attention with regard to the message or tweet sent to a user's network terminal connected via a wire or wirelessly to the headset system and/or the headset system worn by the user, the knowledge-information-processing server system having the image recognition system recognizes the voice content with collaborative operation with the voice recognition system, and selection and extraction of various topics is performed on the basis of the interest graph of the user such as a series of a message or tweet, a particular topics, an advertisement/notification related to the target spoken in a language that can be specified by a particular user or a user group or further detailed information about the target as a response candidate therefor, and interactive response can be made in the language specified by the user to the headset system worn by the user as recipient and/or the user's network terminal connected to the headset system via a wire or wirelessly, with collaborative operation with a machine translation system and voice-synthesizing system on a network.

9. The network communication system with the knowledge-information-processing server system having the image recognition system according to claims 1 and 2, wherein the network communication system is configured such that a particular subject and topic is extracted from the message or tweet left by a particular user, a particular user group, or the entire users including the user himself/herself for a specific object, a generic object, a person, picture, or a scene which is an attention-given target, with collaborative operation with the knowledge-information-processing server system having the image recognition system and the voice recognition system, and a result thereof is generated and accumulated, upon learning, as an interest graph in which each of the related constituent elements is a node, and a particular, a peculiar, or a common comment included in a message or tweet of various users with regard to a target which the user is visually interested in is extracted as nodes, and on the basis of the interest graph, a subgraph is generated such that each node thus extracted is at a center, and from a subgraph thereof, a topic selected and extracted on the basis of the interest graph unique to the user can be sent as voice and/or an image, a figure, an illustration, or character information to the headset system worn by the user as recipient and/or the user's network terminal connected to the headset system via a wire or wirelessly, with collaborative operation with a voice-synthesizing system.

10. The network communication system with the knowledge-information-processing server system having the image recognition system according to claims 1 and 2, wherein the network communication system is configured such that when a specific object, a generic object, a person, a picture, or a scene who the user gives attention to is "unknown" as a result of inquiry sent to the knowledge-information-processing server system having the image recognition system via a network, another user is allowed to notify and share estimation or detailed explanation of the target by voice or character information to the user or other users with interests via a network, in response to a message or tweet, a question, or the like which the user left with regard to the target by voice, so that this induces communication between extensive users originating from visual curiosity of the user, and the knowledge-information-processing server system extracts new information about the target from the communication between extensive users as a link between a node and other related nodes, and when the information is correct, new registration, addition, or update processing can be performed on the interest graph which is a constituent element in the knowledge information database.

11. The network communication system with the knowledge-information-processing server system having the image recognition system according to claims 1 and 2, wherein the network communication system is configured such that when the camera attached to the headset system of the user captures, by chance, a specific object, a generic object, a person, a picture, or a scene which is a discovery target specified by the user in advance, a particular image detection filter that can be downloaded from the knowledge-information-processing server system having the image recognition system to the user's network terminal connected via a wire or wirelessly to the headset system performs initial image feature extraction/image estimation processing of the target, and when further detailed image recognition processing is required as a result, an image feature extraction/image estimation processing is sent to the knowledge-information-processing server system having the image recognition system via the network, whereby the target is finally recognized and confirmed, and the result is notified via the network as voice information to earphones of the user wearing the headset system and/or as detailed information including an image/character to user's network terminal.

12. The network communication system with the knowledge-information-processing server system having the image recognition system according to claims 1 and 2, wherein the network communication system is configured such that a time-space history of encountering the target or seeing the target by chance in the past with regard to a search target such as a specific object, a generic object, a person, a picture, or a scene which the user can specify is looked up with the knowledge-information-processing server system having the image recognition system via the network, so that detailed information including the time-space information when the target is seen in the last is notified from the knowledge-information-processing server system having the image recognition system via the network as voice, character, picture, or figure information to the headset system of the user and/or the user's network terminal, whereby this enables the knowledge-information-processing server system having the image recognition system to perform search based on visual memory with regard to the target.

13. The network communication system with the knowledge-information-processing server system having the image recognition system according to claims 1 and 2, wherein the network communication system is configured such that, as means for explicitly notifying the knowledge-information-processing server system having the image recognition system as to what kind of feature the attention-given target in which the user is interested has and/or what kind of position relationship it is in and/or what kind of motion state it is in, specifying (pointing) operation of a target by voice of the user is enabled, and with interactive communication by voice with the user, the knowledge-information-processing server system having the image recognition system extracts/recognizes the attention-given target with collaborative operation with the image recognition system, on the basis of the features representing the target indicated by the user by voice, and for reconfirmation of the recognition result, the knowledge-information-processing server system having the image recognition system extracts a new object and phenomenon co-occurring with the target on the basis of not only the feature notified by the user to the knowledge-information-processing server system having the image recognition system by voice but also the camera video reflecting the subjective visual field of the user which is captured by the headset system of the user, and a series of description additionally including the features indicated by the user by voice as a co-occurring phenomenon that can more correctly express the target is generated, and the description thereof is restructured as a series of sentences, and thereafter, with collaborative operation with the voice-synthesizing system, the user can be asked to do "reconfirmation" by voice.

14. The network communication system with the knowledge-information-processing server system having the image recognition system according to claims 1 and 2, wherein the network communication system is configured such that, as means for selecting and specifying an attention-given target in which the user is interested in and notifying it via the Internet to the knowledge-information-processing server system having the image recognition system, the user points a direction in which a specific object, a generic object, a person, a picture, or a scene which is the target exists or directly touches the target with a fingertip by operation with the fingertip of the user himself/herself, whereby the camera incorporated into the headset system of the user successively observes the selection operation performed by the user, and the video of the selection operation is successively input via the Internet into the image recognition system incorporated into the knowledge-information-processing server system or the image recognition engine incorporated into the user's network terminal, so that the target pointed by the user is estimated, and a result thereof can be finally determined as the target by causing the knowledge-information-processing server system having the image recognition system to request the user to reconfirm by voice as a result of interactive communication with the user by voice.

15. The network communication system with the knowledge-information-processing server system having the image recognition system according to claims 1 and 2, wherein the network communication system is configured such that light radiated from a transmitter unit provided in front of eyes of the user integrally incorporated into the headset system that can be worn by the user on the head is emitted onto user's pupil and/or retina, and reflection light thereof is measured by a receiver unit integrally formed with the transmitter unit, whereby movement of an eyeball of the user is directly detected, and at the same time, when the user looks at an attention-given target located in front of the gaze of the user, the knowledge-information-processing server system having the image recognition system calibrates the view point position as a result of interactive voice communication with the user with collaborative operation with the voice recognition system so that the detected view point position overlaps the attention-given target position which the user is aware of, whereby a pointing command to the attention-given target of the user can be given accurately.

16. The network communication system with the knowledge-information-processing server system having the image recognition system according to claims 1 and 2 comprising the image recognition system according to any one of claims 13 to 15 with which the server is capable of accumulating/analyzing/looking up a specific object which is a target, a generic object which is a target, a person which is a target, a picture which is a target, or the name of the scene, encountered time-space information, user information, and target image information, as attached information about the attention-given target of the user and the attention-given target, with collaborative operation with the knowledge-information-processing server system having the image recognition system structured on the network, with regard to the target that can be selected by a command by user's voice, a command given with a finger, and a command based on a gaze direction in the pointing operation.

17. The network communication system with the knowledge-information-processing server system having the image recognition system according to claims 1 and 2, wherein the network communication system is configured such that, as means for notifying the knowledge-information-processing server system via the Internet of that the user may be interested in a target in front of the user, the network terminal successively observes a value given by the camera incorporated into the headset system worn by the user, an acceleration sensor, and/or, direction sensor, and when it is determined that a state changes from a state in which the head of the user wearing the headset system is moving to a stationary state defined in advance, it is determined that the user may look at a particular target, and accordingly, connection to the image recognition system and the voice recognition system can be automatically prepared.

18. The network communication system with the knowledge-information-processing server system having the image recognition system according to claims 1 and 2, wherein the network communication system is configured such that sensors for detecting position information on the earth and the direction information about the direction which the head of the user faces are incorporated into the headset system that can be worn by the user on the head, and the position information and the direction information thus detected as well as the absolute time is notified to the knowledge-information-processing server system having the image recognition system, so that on the basis of consistency of a video given by the camera incorporated into the headset system, the actual position information on the earth, and the time-axis information, appropriateness of existence of the target is verified, and the accuracy of the position and the direction where they exist can be calibrated, and when a building, a signboard, a suspicious object, and the like which does not exist in the knowledge-information-processing server system having the image recognition system are discovered, related information is quickly collected via the Internet, and as a result, when it is determined that update of description to the database is adequate, the update process is performed quickly, and when it is still unknown, other users in proximity to the location where the detection is made are prompted to transmit new images concerning the target for verification, whereby additional information is collected, and further network communication can be promoted between extensive users.

19. The network communication system with the knowledge-information-processing server system having the image recognition system according to claims 1 and 2, wherein the network communication system is configured such that a biometric authentication (biometrics) sensor for user authentication is integrally incorporated into the headset system that can be worn by the user on the head, biometric identification information unique to the user wearing the headset system is looked up with a biometric authentication system on the Internet via the network terminal, so that this makes it possible to associate the user and the headset system, and the headset system and the server constantly monitor whether the headset system is put on or removed, so that failure of putting on the headset system or the headset system illegally put on by another user and further illegal use can be prevented.

20. The network communication system with the knowledge-information-processing server system having the image recognition system according to claims 1 and 2, wherein the network communication system is configured such that biometric information (vital sign) such as body temperature, heart rate, blood pressure, brain waves, breathing, eye movement, vocalization, body movement of the user are successively measured, collected, and analyzed with the sensors incorporated into the headset system, and when a value of the observable vital sign rapidly changes at a point in time when a specific object, a particular a generic object, a particular person, a particular picture, or a particular scene is captured in the camera video reflecting a subjective visual field of the user wearing the headset system, the knowledge-information-processing server system having the image recognition system at the server side can perform, by way of the network, detailed collection/accumulation/analysis of data and initial cause estimation at the point in time as peculiar reaction of the user, and when the user may thereafter encounter similar circumstance with a high degree of possibility or the user actually encounters the target, the knowledge-information-processing server system having the image recognition system can quickly notify the user of information based on voice and/or character, vibration, or the like via the network, and when the observable vital sign value changes rapidly by a predetermined level or more, and health condition of the user may be worse than a certain level, notification to confirm emergency state is issued to the user, and at the same time, when certain reaction cannot be obtained from the user as a result, the circumstance can be automatically notified to a predetermined destination.

21. The network communication system with the knowledge-information-processing server system having the image recognition system according to claims 1 and 2, wherein the network communication system is configured such that, from the perspective of protection of privacy, with regard to image information that can be shared by multiple users, the knowledge-information-processing system having the image recognition system structured at the server side can perform, automatically and quickly, a filter processing on the target to such a level that it cannot be identified automatically or impose limitation of viewing the entire image with regard to a specific object, a generic object, a picture, or a scene that is determined to be a characteristic portion of a body including a face with which a person can be identified and/or has anti-social, anti-humanitarian, anti-human nature.

22. The network communication system with the knowledge-information-processing server system having the image recognition system according to claims 1 and 2, wherein the network communication system is configured such that with regard to a message or tweet left for the specific object, the generic object, the person, the picture, or the scene, a particular user, a particular user group, or any user including the user himself/herself, information for identifying the user who left the message or tweet is notified, by operation with the user's network terminal or operation based on voice of the user by way of a microphone incorporated into the headset system, from the knowledge-information-processing server system having the image recognition system via the Internet to the headset system of the target user and/or the target user's network terminal, using voice, a character, a picture, or a figure, within a target range that can be set by the user who left the message or tweet.

23. The network communication system with the knowledge-information-processing server system having the image recognition system according to claims 1 and 2, wherein the network communication system is configured such that, as a result of biometric authentication of the user, among multiple users each wearing a headset system unique to the user associated with the knowledge-information-processing server system, with regard to collaborative operation enabling sharing of a single or multiple network terminals, local association between each user and the shared network terminal is made possible, by causing the camera incorporated into the headset system of each user to successively read shape and position information on the basis of a recognition marker displayed on the shared network terminal and/or particular image information placed in proximity thereto, mutual association of the shared network terminal and calibration of an image-capturing visual field of the headset system of each user are enabled by each network terminal, and the network terminal can detect position relationship of each user, and can recognize input operation with the shared network terminal by multiple users as input operation unique to each user, and on a display device incorporated into the shared network terminal, displaying individual information in accordance with the position relationship of each user is enabled.

24. The network communication system with the knowledge-information-processing server system having the image recognition system according to claims 1 and 2, wherein the network communication system is configured such that, on the basis of a video being captured with the camera incorporated into the headset system of the user, a particular image pattern detection filter incorporated in a configurable state from the server to the user's network terminal detects display transmitting an image pattern which is modulated with a particular time or a particular image pattern in the subjective visual field of the user, and a location and a direction thereof is notified as voice information to an earphone incorporated into the headset system of the user by way of the headset system of the user, and likewise, voice information related to the image information displayed on the display which comes into the visual field of the user can also be automatically sent via the Internet.

25. The network communication system with the knowledge-information-processing server system having the image recognition system according to claims 1 and 2, wherein the network communication system is configured such that a three-dimensional camera capable of measuring a depth (distance) to a target object and/or two or more cameras having image-capturing parallax are incorporated into the headset system that can be worn by the user on the head to make it easy to find a space and a three-dimensional shape of the object, and a command for causing the user to capture an image of the target and ambient circumstances from various angles is sent from the knowledge-information-processing server system having the image recognition system to an earphone incorporated into the headset system of the user in an interactive manner based on voice information, so that the target can be effectively recognized in a three-dimensional manner, and at the same time, collation with the databases in the knowledge-information-processing server system having the image recognition system can be performed more accurately.

26. The network communication system with the knowledge-information-processing server system having the image recognition system according to claims 1 and 2, wherein the network communication system is configured such that, on the basis of a video given by the camera incorporated into the headset system of the user reflecting the subjective visual field of the user, the image recognition system constructed in the knowledge-information-processing server system detects and evaluates, for each frame, corresponding relationship of mutual image frames for each image feature point included in a same object included in multiple image frames captured from different view point positions, and mutual position relationship of the image feature points thus detected, which is due to difference of the view point, is associated from perspective transformation with respect to the image-capturing surface of the camera, and when an object which is originally three-dimensional included in a particular region is such that each feature point moves in parallel within the closed region without causing view point movement/change which is to be made together with the perspective transformation, then the target existing in the closed region is deemed to be accommodated within a flat plane, and when the region is considered to be a flat printed material or picture with a high degree of possibility or it is an image given by the image-capturing system capable of directly detecting depth information of the image, and when a feature point of an object or a scene which is to be originally three-dimensional exists in a same plane, image recognition can be performed such that when, likewise, the closed region is considered to be a flat printed material or picture with a high degree of possibility or a scale of an object existing in a particular region is greatly different from an object in proximity thereto, and the particular region can be clearly determined not to be a window of a building, they can be recognized as a flat picture in a wide sense.

27. The network communication system with the knowledge-information-processing server system having the image recognition system according to claims 1 and 2, wherein the network communication system is configured such that, the camera system capable of capturing an image all around the user or behind the user is incorporated into the headset system that can be worn by the user on the head, so that the captured image outside of the visual field of the user is uploaded to the knowledge-information-processing server system having the image recognition system via the user's network terminal connected with the headset system and the Internet, whereby when an object, a person, or a scene which the user has to particularly be interested in or be careful about and which can be registered in advance is discovered from among various target images that can be recognized, such situation is quickly notified to the user by voice or/and vibration function or means in place of such function.

28. The network communication system with the knowledge-information-processing server system having the image recognition system according to claims 1 and 2, wherein the network communication system is configured such that a depth sensor for directly measuring a relative distance from an object is incorporated into the headset system that can be worn by the user on the head, so that movement of an object or a living body including a person approaching to the user at a predetermined distance and/or speed is detected, and such circumstances are quickly notified to the user by voice, and the camera incorporated into the headset system is automatically activated, and an inquiry can be sent to the knowledge-information-processing server system having the image recognition system via the Internet, so that the server analyzes a target approaching the user, and a result thereof can be quickly notified to the user by voice or/and vibration function or means in place of such function.

29. The network communication system with the knowledge-information-processing server system having the image recognition system according to claims 1 and 2, wherein the network communication system is configured such that an environment sensor such as a sensor for detecting ambient brightness, color temperature of lighting and external light, environment noise, and ambient sound pressure level is incorporated into the headset system that can be worn by the user on the head, so that video given by the camera incorporated into the headset system of the user and a voice input signal given by a microphone are automatically adjusted, and appropriate image/voice quality can be ensured under the environment, whereby recognition accuracy of the image recognition system incorporated into the knowledge-information-processing server system can be further improved.

30. The network communication system with the knowledge-information-processing server system having the image recognition system according to claims 1 and 2, wherein the network communication system is configured such that a wireless communication system capable of directly connecting to the Internet and a semitransparent display device in such a manner as to cover a portion of the visual field of the user are incorporated into the headset system that can be worn by the user on the head, so that a main function possessed by the user's network terminal itself is integrally incorporated together with the headset system, and this allows direct connection with the knowledge-information-processing server system having the image recognition system without relying on the network terminal.

31. A network communication system with a knowledge-information-processing server system having an image recognition system and a network terminal having an image recognition system, wherein the network communication system is configured such that when a failure of a certain level occurs in a network or there is limitation of a certain level in a network connection, an optimized execution program of necessary image recognition program for detection/recognition of the limited target and a reference database that already learned which correspond to image recognition processing of the limited target allowing, without relying on a server, detection/recognition, by itself on the network, of a number of and/or types of specific objects, generic objects, persons, pictures, or scenes which can be selected by a user and which can be limited can be selectively downloaded from the server to the network terminal under circumstances where network connection is established with the server and network terminal in advance, in order to cope with situation where an image recognition system, a voice recognition system, a voice-synthesizing system, a biometric authentication system, or a knowledge-information-processing server system constructed at the network side are unavailable although they are unavailable only temporarily or for the purpose of reducing the load of the network and the server side and/or for the purpose of enhancing the responsiveness of a series of image/voice recognition processes, so that the network communication system includes one or more functions of the image recognition process according to claim 1, the writing of the message or tweet by the user with regard to the target to which the user gives attention according to claim 4, reception of the message or tweet of another user according to claim 5 left for the target before the network connection is disconnected, likewise reception of the message or tweet that can specify any given time-space according to claim 6 left for the target within a range of storage capacity that can be held in the network terminal before the network connection is disconnected, discovery of the particular target which can be specified by the user in advance according to claim 11, the pointing operation of the target to which the user gives attention according to claims 13 to 15, the pointing history of the target to which the user gives attention according to claim 16, the detection of the head stationary state according to claim 17, the current position detection according to claim 18, local association and authentication of the user wearing the headset and an authentication key sent from the server to the network terminal in advance in the biometric authentication according to claim 19, the cooperation function with various kinds of biometric information which can be obtained from the user wearing the headset according to claim 20, the notification of the user information originated from the message or tweet held in the network terminal according to claim 22, the sharing function of the network terminal according to claim 23, the reception of the voice information from the particular display within the range held in the network terminal according to claim 24, the detection of the limited number of pictures registered in the network terminal in advance according to claim 26, the notification of existence of the phenomenon and the target already registered in advance outside of the subjective visual field of the user according to claim 27 and claim 28, and the support of the input with various kinds of environment sensors according to claim 29, and an execution subset of the voice recognition system and the voice-synthesizing system enabling minimum required voice communication with the user on the network terminal is downloaded from the server to the network terminal under circumstances where network connection with the server and network terminal is established, and although there is a certain level of limitation as compared with a time when network is established with the server, the image recognition function and the simple voice communication function within the range set by the user is ensured even when the connection between the server and the network terminal is offline, and as soon as subsequent network connection is ready to be resumed, reconfirmation of the user authentication with the biometric authentication system on the network is received, and synchronization between the knowledge-information-processing server system having the image recognition system and the network terminal is established.
